(19) 

Europäisches
Patentamt
European
Patent Office
Office européen
des brevets

(11) **EP 4 277 225 A1**

(12) **EUROPEAN PATENT APPLICATION**
published in accordance with Art. 153(4) EPC

(43) Date of publication:
**15.11.2023 Bulletin 2023/46**

(21) Application number: **22752170.5**

(22) Date of filing: **28.01.2022**

(51) International Patent Classification (IPC):
***H04L 45/00*** (2022.01)     ***H04W 40/02*** (2009.01)

(86) International application number:
**PCT/CN2022/074686**

(87) International publication number:
**WO 2022/171009 (18.08.2022 Gazette 2022/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.02.2021   CN 202110185620
10.02.2021   CN 202110185618
25.04.2021   CN 202110448981**

(71) Applicant: **Huawei Technologies Co., Ltd.
Shenzhen, Guangdong 518129 (CN)**

(72) Inventors:
• **LEI, Zhangyuan
Shenzhen, Guangdong 518129 (CN)**
• **HE, Gangjie
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND ELECTRONIC DEVICE**

(57)    A communication method and an electronic device are provided, and relate to the field of communication technologies, to improve efficiency of communication between terminals in a communication scenario such as a video call or a voice call. The method is applied to a first terminal, and the method includes: sending a path query request to a server; receiving a path query response from the server, where the path query request is used to request at least one first forwarding path, each of the at least one first forwarding path is used to carry a packet between the first terminal and a second terminal, the path query response indicates the at least one first forwarding path, and each of the at least one first forwarding path includes a plurality of established point-to-point P2P links in multi-party communication; and sending the packet through a target forwarding path in the at least one first forwarding path.

FIG. 13

EP 4 277 225 A1

**Description**

This application claims priority to Chinese Patent Application No. 202110185620.7, filed with the China National Intellectual Property Administration on February 10, 2021 and entitled "MULTI-PARTY COMMUNICATION METHOD AND ELECTRONIC DEVICE", claims priority to Chinese Patent Application No. 202110185618.X, filed with the China National Intellectual Property Administration on February 10, 2021 and entitled "COMMUNICATION METHOD AND ELECTRONIC DEVICE", and claims priority to Chinese Patent Application No. 202110448981.6, filed with the China National Intellectual Property Administration on April 25, 2021 and entitled "COMMUNICATION METHOD AND ELECTRONIC DEVICE", which are incorporated herein by reference in their entireties.

**TECHNICAL FIELD**

This application relates to the field of communication technologies, and in particular, to a communication method and an electronic device.

**BACKGROUND**

At present, a user may conveniently make a video call, a voice call, or the like with another user by using a terminal such as a mobile phone. In a scenario such as the voice call or the video call, as service types of the terminal become increasingly diversified, a network topology and a network environment become increasingly complex. Consequently, efficiency of communication between terminals is not high currently.

**SUMMARY**

At present, a user may conveniently communicate with another user, for example, make a video call, by using a terminal such as a mobile phone.
In some solutions, scenarios such as a video call may include a multi-party communication scenario. The multi-party communication scenario is a communication scenario between a plurality of terminals, for example, a multi-party video call or a multi-party voice call. The multi-party video call is used as an example. In a multi-party video call scenario, a communication connection needs to be established between every two terminals, to transmit data between the two terminals. In some solutions, a peer-to-peer (peer-to-peer, P2P) channel may be established between two terminals, and data such as a video or audio between the two terminals is transmitted through the P2P channel. It may be understood that, when a quantity of terminals involved in the multi-party video call is larger, it is likely that the P2P channel cannot be established between some terminals. In this case, a relay server needs to be deployed, so that corresponding data between terminals that cannot directly communicate with each other is forwarded through the relay server. However, deployment of a large quantity of relay servers increases networking complexity and networking costs. In addition, for the deployed relay server, a load of the relay server is usually high, affecting performance of the relay server. Further, a plurality of terminals contend for communication resource such as a bandwidth of the relay server. Consequently, it is likely to cause reduction of communication efficiency due to a case in which some terminals cannot obtain sufficient communication resources.
In some solutions, in scenarios such as a video call, a telecom operator launches services such as a color ring back tone service and a customized ringing signal tone service, to provide a personalized function for the user. The color ring back tone service is a service in which after a user selects and sets a multimedia file such as color ring back tone music or a video, when the other user calls the user, the other user, namely, a calling user, may hear the music preset by the called user or see the preset video. The customized ringing signal tone is a service in which a calling user subscribes to a multimedia resource (for example, a video or music), and when the calling user initiates a call to a called user, a terminal of a called user plays the multimedia resource to which the calling user subscribes.
It can be learned that, in the current color ring back tone and customized ringing signal tone services, only the calling user or the called user can pre-purchase a multimedia resource to be presented, and the multimedia resource that can be presented is fixed. Consequently, the user cannot obtain information about a communication peer end from the presented multimedia resource, resulting in low communication efficiency. In addition, multimedia resources currently provided are simple, and cannot meet various audio-visual requirements of the user.
It can be learned that, in the current scenario such as the video call, high communication efficiency cannot be provided for the terminal.
To resolve a current problem of low efficiency of communication between terminals, this application provides a communication method and an electronic device, to improve efficiency of communication between terminals in a communication scenario such as a video call or a voice call.
According to a first aspect, a communication method is provided. The method is applied to a first terminal or a component (for example, a chip of a first terminal) that can be used together with the first terminal to implement a function of the first terminal. For example, the method is applied to the first terminal. The method includes:

sending a path query request to a server, and receiving a path query response from the server, where the path query request is used to request at least one first forwarding path, each of the at least one first forwarding path is used to carry a packet between the first terminal and a second terminal, the path query response indicates the at least one first forwarding path, and each of the at least one first forwarding path includes a plurality of established point-to-point P2P links in multi-party communication; and sending the packet through a target forwarding path in the at least one first forwarding path.

It can be learned from the foregoing that, in a multi-party communication scenario, when no direct P2P link can be established between the first terminal and the second terminal, data between the first terminal and the second terminal may be forwarded through the established P2P links in the multi-party communication. In this way, a relay server is not required to forward the data between the terminals. Alternatively, a quantity of deployed relay servers can be reduced, so that networking complexity and networking costs can be reduced. In addition, for a terminal, because the terminal does not need to contend with another terminal for communication resources such as a bandwidth of the relay server, the communication resources of the terminal is ensured as much as possible, to further improve efficiency of communication between the terminals.

In a possible design, there is one first forwarding path.

In a possible design, there are a plurality of first forwarding paths. The method further includes:
selecting the target forwarding path from the plurality of first forwarding paths based on a preset parameter.

The preset parameter includes a link level parameter and/or a path level parameter, and for each first forwarding path, the link level parameter includes one or any combination of the following parameters: a delay of the P2P link included in the first forwarding path, quality of service QoS of the P2P link included in the first forwarding path, or a network type of the P2P link included in the first forwarding path; the network type includes a wireless high-fidelity Wi-Fi network or a cellular network; and the path level parameter includes a quantity of transit devices on the first forwarding path.

In a possible design, the selecting the target forwarding path from the plurality of first forwarding paths based on a preset parameter includes:
selecting the target forwarding path from the plurality of first forwarding paths based on the preset parameter and a preset strategy.

The preset strategy includes one or any combination of the following strategies: a delay of the target forwarding path is the lowest, a delay of the target forwarding path is less than or equal to an upper delay threshold, QoS of the target forwarding path is optimal, a QoS value of the target forwarding path falls within a preset QoS value range, a quantity of transit devices on the target forwarding path is the smallest, a quantity of transit devices on the target forwarding path falls within a preset quantity range, or a network type of a first P2P link in the target forwarding path is a preset network type; the preset network type includes a Wi-Fi network; and the first P2P link is a P2P link connected to the first terminal or a P2P link connected to the second terminal.

In a possible design, the target forwarding path is a first forwarding path with a lowest delay in the first forwarding paths when a network type of a first P2P link is a preset network type, and the first P2P link is a P2P link connected to the first terminal or a P2P link connected to the second terminal; or

the target forwarding path is a first forwarding path with optimal QoS in the first forwarding paths when a network type of a first P2P link is a preset network type; or
the target forwarding path is a first forwarding path with a smallest quantity of transit devices in the first forwarding paths when a network type of a first P2P link is a preset network type; or
the target forwarding path is a first forwarding path with a lowest delay in first forwarding paths whose QoS values fall within a preset QoS value range; or
the target forwarding path is a first forwarding path with a smallest quantity of transit devices in first forwarding paths whose QoS values fall within a preset QoS value range; or
the target forwarding path is a first forwarding path in first forwarding paths whose QoS values fall within a preset QoS value range when a network type of a first P2P link is a preset network type; or
the target forwarding path is a first forwarding path in first forwarding paths whose delays are less than or equal to a delay threshold when a network type of a first P2P link is a preset network type; or
the target forwarding path is a first forwarding path with optimal QoS in first forwarding paths whose delays are less than or equal to a delay threshold; or
the target forwarding path is a first forwarding path with a smallest quantity of transit devices in first forwarding paths whose delays are less than or equal to a delay threshold; or
the target forwarding path is a first forwarding path with a lowest delay in first forwarding paths whose quantities of transit devices fall within a preset quantity range; or

the target forwarding path is a first forwarding path with optimal QoS in first forwarding paths whose quantities of transit devices fall within a preset quantity range; or

the target forwarding path is a first forwarding path in first forwarding paths whose quantities of transit devices fall within a preset quantity range when a network type of a first P2P link is a preset network type.

In a possible design, each of the plurality of first forwarding paths has a corresponding weight value, the weight value of the first forwarding path indicates quality of the first forwarding path, and the weight value $W$ of the first forwarding path meets the following relationship: $W = \sum_{j=1}^{M} \sum_{i=1}^{N} p_i * w_i$ , where

$p_i$ is a quantized value of an $i^{th}$ link level parameter, $w_i$ is a weight corresponding to $p_i$, N is a quantity of link level parameters, $\sum_{i=1}^{N} p_i * w_i$ is a weight of a $j^{th}$ P2P link in the first forwarding path, and M is a quantity of P2P links included in the first forwarding path; and

the target forwarding path is a first forwarding path whose path quality indicated by a weight value is greater than a threshold in the plurality of first forwarding paths.

In a possible design, each first forwarding path has a corresponding weight value, the weight value of the first forwarding path indicates quality of the first forwarding path, and the weight value $W$ of the first forwarding path meets the following relationship: $W = \sum_{j=1}^{M} \sum_{i=1}^{N} p_i * w_i + w_{relay} * n_{relay}$ , where

$p_i$ is a quantized value of an $i^{th}$ link level parameter, $w_i$ is a weight corresponding to $p_i$, N is a quantity of link level parameters, $\sum_{i=1}^{N} p_i * w_i$ is a weight of a $j^{th}$ P2P link in the first forwarding path, and M is a quantity of P2P links included in the first forwarding path; and

$n_{relay}$ is a quantized value of the path level parameter of the first forwarding path, and $w_{relay}$ is a weight corresponding to $n_{relay}$; and

the target forwarding path is a first forwarding path whose path quality indicated by a weight value is greater than a threshold in the plurality of first forwarding paths.

In a possible design, the packet carries the target forwarding path or a target subpath.

The target forwarding path includes M P2P links, a source node of the target forwarding path is the first terminal, a destination node of the target forwarding path is the second terminal, the target subpath includes (M-1) neighboring P2P links in the M P2P links, a source node of the target subpath is a next-hop terminal of the first terminal, a destination node of the target subpath is the second terminal, and M is an integer greater than or equal to 2.

In a possible design, the sending a path query request to a server includes:

when no P2P link between the first terminal and the second terminal is successfully established, sending the path query request to the server.

According to a second aspect, this application provides a communication method. The method is applied to a third terminal or a component (for example, a chip of a third terminal) that can be used together with the third terminal to implement a function of the third terminal. For example, the method is applied to the third terminal. The third terminal is located on a target forwarding path, and the method includes:

receiving a packet sent by a first terminal to a second terminal through the target forwarding path, where the packet carries a second forwarding path; the second forwarding path is the target forwarding path or a target subpath; the target forwarding path is used to carry the packet between the first terminal and the second terminal, and the target forwarding path includes M P2P links; a source node of the target forwarding path is the first terminal, and a destination node of the target forwarding path is the second terminal; the target subpath includes N neighboring P2P links in the M P2P links, a source node of the target subpath is the third terminal, and a destination node of the target subpath is the second terminal; and M is an integer greater than or equal to 2, N is a positive integer, and N is less than M; and

sending the packet based on the second forwarding path.

According to a third aspect, a communication method is provided. The method is applied to a server or a component (for example, a chip of a server) that can be used together with the server to implement a function of the server. The method includes:

receiving a path query request from a first terminal, where the path query request is used to request at least one first forwarding path, and each of the at least one first forwarding path is used to carry a packet between the first terminal and a second terminal; and

sending a path query response to the first terminal in response to the path query request, where the path query response indicates the at least one first forwarding path, and each first forwarding path includes a plurality of established P2P links in multi-party communication.

In a possible design, there are a plurality of first forwarding paths.

In a possible design, there is one first forwarding.

The method further includes: selecting the first forwarding path from a plurality of available forwarding paths based on a preset parameter, where the available forwarding path is a forwarding path that is used to carry the packet between the first terminal and the second terminal.

The preset parameter includes a link level parameter and/or a path level parameter, and for each available forwarding path, the link level parameter includes one or any combination of the following parameters: a delay of a P2P link included in the available forwarding path, quality of service QoS of the P2P link included in the available forwarding path, or a network type of the P2P link included in the available forwarding path; the network type includes a wireless high-fidelity Wi-Fi network or a cellular network; and the path level parameter includes a quantity of transit devices on the available forwarding path.

In a possible design, the selecting the first forwarding path from a plurality of available forwarding paths based on a preset parameter includes:

selecting the first forwarding path from the plurality of available forwarding paths based on the preset parameter and a preset strategy.

The preset strategy includes one or any combination of the following strategies: a delay of the first forwarding path is the lowest, a delay of the first forwarding path is less than or equal to an upper delay threshold, QoS of the first forwarding path is optimal, a QoS value of the first forwarding path falls within a preset range, a quantity of transit devices on the first forwarding path is the smallest, a quantity of transit devices on the first forwarding path falls within a preset quantity range, or a network type of a first P2P link in the first forwarding path is a preset network type; the preset network type includes a Wi-Fi network; and the first P2P link is a P2P link connected to the first terminal or a P2P link connected to the second terminal.

In a possible design, each available forwarding path has a corresponding weight value, the weight value indicates quality of the available forwarding path, and the weight value $W$ of the available forwarding path meets the following relationship: $W = \sum_{j=1}^{M} \sum_{i=1}^{N} p_i * w_i$, where

$p_i$ is a quantized value of an $i^{th}$ link level parameter, $w_i$ is a weight corresponding to $p_i$, N is a quantity of link level parameters, $\sum_{i=1}^{N} p_i * w_i$ is a weight of a $j^{th}$ P2P link in the available forwarding path, and M is a quantity of P2P links included in the available forwarding path; and

the first forwarding path is an available forwarding path whose path quality indicated by a weight value is greater than a threshold in the plurality of available forwarding paths.

In a possible design, each available forwarding path has a corresponding weight value, the weight value indicates quality of the available forwarding path, and the weight value $W$ of the available forwarding path meets the following relationship: $W = \sum_{j=1}^{M} \sum_{i=1}^{N} p_i * w_i + w_{relay} * n_{relay}$, where

$p_i$ is a quantized value of an $i^{th}$ link level parameter, $w_i$ is a weight corresponding to $p_i$, N is a quantity of link level parameters, $\sum_{i=1}^{N} p_i * w_i$ is a weight of a $j^{th}$ P2P link in the available forwarding path, M is a quantity of P2P links included in the available forwarding path, $n_{relay}$ is a quantized value of the path level parameter of the available forwarding path, and $w_{relay}$ is a weight corresponding to $n_{relay}$; and

the first forwarding path is an available forwarding path whose path quality indicated by a weight value is greater than a threshold in the plurality of available forwarding paths.

In a possible design, the method further includes:

receiving the link level parameter corresponding to the connected P2P link from each terminal that establishes the P2P link in the multi-party communication.

In a possible design, the method further includes:
receiving the preset strategy from the first terminal.

According to a fourth aspect, a communication apparatus is provided. The communication terminal may be a first terminal or a component (for example, a chip of a first terminal) that can be used together with the first terminal to implement a function of the first terminal. For example, the communication apparatus is the first terminal. The first terminal includes:

a sending unit, configured to send a path query request to a server, where the path query request is used to request at least one first forwarding path, and each of the at least one first forwarding path is used to carry a packet between the first terminal and a second terminal; and

a receiving unit, configured to receive a path query response from the server, where the path query response indicates the at least one first forwarding path, and each of the at least one first forwarding path includes a plurality of established point-to-point P2P links in multi-party communication, where

the sending unit is further configured to send the packet through a target forwarding path in the at least one first forwarding path.

According to a fifth aspect, a communication apparatus is provided. The communication terminal may be a third terminal or a component (for example, a chip of a third terminal) that can be used together with the third terminal to implement a function of the third terminal. For example, the communication apparatus is the third terminal. The third terminal is located on a target forwarding path, and the third terminal includes:

a receiving unit, configured to receive a packet sent by a first terminal to a second terminal through the target forwarding path, where the packet carries a second forwarding path; the second forwarding path is the target forwarding path or a target subpath; the target forwarding path is used to carry the packet between the first terminal and the second terminal, and the target forwarding path includes M P2P links; a source node of the target forwarding path is the first terminal, and a destination node of the target forwarding path is the second terminal; the target subpath includes N neighboring P2P links in the M P2P links, a source node of the target subpath is the third terminal, and a destination node of the target subpath is the second terminal; and M is an integer greater than or equal to 2, N is a positive integer, and N is less than M; and

a sending unit, configured to send the packet based on the second forwarding path.

According to a sixth aspect, a communication apparatus is provided. The communication terminal may be a server or a component (for example, a chip of a server) that can be used together with the server to implement a function of the server. For example, the communication apparatus is the server. The server includes:

a receiving unit, configured to receive a path query request from a first terminal, where the path query request is used to request at least one first forwarding path, and each of the at least one first forwarding path is used to carry a packet between the first terminal and a second terminal; and

a sending unit, configured to send a path query response to the first terminal in response to the path query request, where the path query response indicates the at least one first forwarding path, and each first forwarding path includes a plurality of established P2P links in multi-party communication.

According to a seventh aspect, a communication apparatus is provided. The communication apparatus includes a module configured to implement the method in any possible design in the first aspect, or the communication apparatus includes a module configured to implement the method in any possible design in the second aspect, or the communication apparatus includes a module configured to implement the method in any possible design in the third aspect.

According to an eighth aspect, a communication method is provided. The method is applied to a first terminal or an apparatus (for example, a chip of a first terminal) that can be used together with the first terminal to implement a function of the first terminal. The method includes: when a call occurs between the first terminal and a second terminal, presenting prompt information on a calling interface of the call, where the prompt information is used to prompt that status information corresponding to the second terminal can be obtained; when a user operation indication indicating to obtain the status information corresponding to the second terminal is detected by using the calling interface, obtaining the status information corresponding to the second terminal; and presenting the status information corresponding to the second terminal.

According to the method, status information corresponding to a communication peer end can be obtained and presented in a call scenario. To be specific, a calling terminal and a called terminal can share statuses of each other instead of sharing color ring back tone/customized ringing signal tone information. This helps improve communication efficiency. For example, the calling terminal learns, by obtaining and presenting status information of the called terminal, that the called terminal is in a conference state. In this case, a calling user does not need to continue waiting for a called user to answer a call, but may hang up the call and call the called user later. In this way, a waste of waiting time is avoided, time of the user is saved, and communication efficiency is improved. For another example, the called terminal learns, by obtaining and presenting status information of the calling terminal, that a calling user that initiates a call is in a good mood at this moment. In this case, the called terminal may choose to immediately answer the call and communicate with the calling user, so that communication efficiency is improved.

In addition, the status information of the communication peer end is presented, so that audio-visual requirements of the user can be met, and audio-visual experience of the user can be improved.

In a possible design, that a call occurs between the first terminal and a second terminal includes: initiating, by the first terminal, the call to the second terminal; or receiving, by the first terminal, the call initiated by the second terminal.

In a possible design, the obtaining the status information corresponding to the second terminal includes: sending an obtaining request to a status server, where the obtaining request is used to request to obtain the status information corresponding to the second terminal, and receiving the status information corresponding to the second terminal from the status server. When the status information corresponding to the second terminal needs to be obtained, the first terminal may actively initiate the obtaining request to the status server. In this way, the first terminal may obtain latest status information corresponding to the second terminal, and therefore accuracy is higher.

Alternatively, the obtaining the status information corresponding to the second terminal includes: obtaining the status information that corresponds to the second terminal and that is obtained from the status server in advance and stored in the first terminal.

In a possible design, the presenting the status information corresponding to the second terminal includes: presenting the status information corresponding to the second terminal on a display interface of the first terminal; and/or playing a voice used to prompt the status information corresponding to the second terminal. The first terminal may present the status information corresponding to the second terminal in a plurality of manners, so that audio-visual experience of the user can be improved.

In a possible design, the status information corresponding to the second terminal includes status information of the second terminal and/or status information of a user of the second terminal.

In a possible design, the status information of the second terminal includes at least one piece of the following information: a location, environment information, a battery level, or signal quality; and/or the status information of the user of the second terminal includes at least one piece of the following information: an activity performed by the user, a health status, or a mood.

In a possible design, the status information corresponding to the second terminal includes at least one piece of the following information: a text, a picture, audio, a video, a link, or an applet.

It can be learned that multimedia content presented by the terminal to the user is not limited to a specific type. For example, more colorful content forms such as a text, a photo, a user-defined audio, and a user-defined video may be presented, and a presentation manner is more flexible.

In a possible design, the presenting prompt information on a calling interface of the call includes: presenting the prompt information on the calling interface by using a text; or presenting the prompt information on the calling interface by using a preset icon effect.

In a possible design, after the presenting the status information corresponding to the second terminal, the method further includes:

obtaining first comment information input by the first terminal for first status information in the status information corresponding to the second terminal; and

sending a first comment message to a message server, where the first comment message includes the first comment information, and the first comment message further includes the first status information or an identifier of the first status information.

In a possible design, the method further includes:

obtaining status information corresponding to the first terminal; and

sending the status information corresponding to the first terminal to the status server, where the status information corresponding to the first terminal is provided for a communication peer end of the first terminal, and the communication peer end of the first terminal includes the second terminal.

In a possible design, the obtaining status information corresponding to the first terminal includes: obtaining, by using an internal component of the first terminal or an external device connected to the first terminal, the status information corresponding to the first terminal; and/or receiving a status input instruction input by the user, where the status input instruction is used to input the status information corresponding to the first terminal, and obtaining, based on the status input instruction, the status information corresponding to the first terminal.

In a possible design, the internal component includes at least one of the following components: a sensor, a camera, or a location positioning component.

In a possible design, the method further includes:

receiving a second comment message sent by the message server, where the second comment message includes second comment information and second status information in the status information corresponding to the first terminal, and the second comment information is comment information input by the second terminal for the second status information; and

presenting content of the second comment message.

In a possible design, the status server and the message server are a same server.

According to a ninth aspect, a communication method is provided. The method is applied to a first terminal or an apparatus (for example, a chip of a first terminal) that can be used together with the first terminal to implement a function of the first terminal. The method includes:

when a call occurs between the first terminal and a second terminal, obtaining status information corresponding to the second terminal; and

presenting the status information corresponding to the second terminal.

In a possible design, that a call occurs between the first terminal and a second terminal includes:
initiating, by the first terminal, the call to the second terminal; or receiving, by the first terminal, the calling initiated by the second terminal.

In a possible design, the obtaining status information corresponding to the second terminal includes:
sending an obtaining request to a status server, where the obtaining request is used to request to obtain the status information corresponding to the second terminal, and receiving the status information corresponding to the second terminal from the status server; or obtaining the status information that corresponds to the second terminal and that is obtained from the status server in advance and stored in the first terminal.

According to a tenth aspect, this application provides a communication system. The communication system includes a status server and a plurality of communication terminals, and the plurality of communication terminals include a first terminal and a second terminal.

The second terminal is configured to send status information corresponding to the second terminal to the status server.

The status server is configured to receive the status information corresponding to the second terminal, and is further configured to send the status information corresponding to the second terminal to the first terminal.

The first terminal is configured to: when a call occurs between the first terminal and the second terminal, present prompt information on a calling interface of the call, where the prompt information is used to prompt that the status information corresponding to the second terminal can be obtained; and is further configured to: when a user operation indication indicating to obtain the status information corresponding to the second terminal is detected by using the calling interface, obtain the status information corresponding to the second terminal, and present the status information corresponding to the second terminal, where the status information corresponding to the second terminal comes from the status server.

According to an eleventh aspect, this application provides a communication apparatus. The apparatus may be a first terminal or a component (for example, a chip of a first terminal) that can be used together with the first terminal to implement a function of the first terminal. For example, the apparatus is the first terminal. The first terminal includes:

a presentation unit, configured to: when a call occurs between the first terminal and a second terminal, present prompt information on a calling interface of the call, where the prompt information is used to prompt that status information corresponding to the second terminal can be obtained; and

an obtaining unit, configured to: when a user operation indication indicating to obtain the status information corresponding to the second terminal is detected by using the calling interface, obtain the status information corresponding to the second terminal.

The presentation unit is further configured to present the status information corresponding to the second terminal.

According to a twelfth aspect, this application provides a communication apparatus. The apparatus may be a first terminal or a component (for example, a chip of a first terminal) that can be used together with the first terminal to implement a function of the first terminal. For example, the apparatus is the first terminal. The first terminal includes:

an obtaining unit, configured to: when a call occurs between the first terminal and a second terminal, obtain status information corresponding to the second terminal; and

a presentation unit, configured to present the status information corresponding to the second terminal.

According to a thirteenth aspect, this application provides an electronic device. The electronic device includes a processor and a memory, the memory is coupled to the processor, the memory is configured to store computer program code, and the computer program code includes computer instructions. When the processor reads the computer instructions from the memory, the electronic device is enabled to perform the communication method in any possible design in the eighth aspect, or perform the communication method in any possible design in the ninth aspect.

According to a fourteenth aspect, this application provides a computer storage medium, including computer instructions. When the computer instructions are run on a terminal, the terminal is enabled to perform the communication method in any possible design in the eighth aspect, or perform the communication method in any possible design in the ninth aspect.

According to a fifteenth aspect, this application provides a computer program product. When the computer program product runs on a computer, the computer is enabled to perform the communication method in any possible design in the eighth aspect, or perform the communication method in any possible design in the ninth aspect.

According to a sixteenth aspect, a communication apparatus is provided. The apparatus includes a module configured to implement any possible design in the eighth aspect.

According to a seventeenth aspect, a communication apparatus is provided. The apparatus includes a module configured to implement any possible design in the ninth aspect.

According to an eighteenth aspect, an electronic device is provided, and includes a processor and a memory. The memory is coupled to the processor, the memory is configured to store computer program code, and the computer program code includes computer instructions. When the processor reads the computer instructions from the memory, the electronic device is enabled to perform the method according to any one of the foregoing aspects and the possible implementations in the foregoing aspects.

According to a nineteenth aspect, an apparatus is provided. The apparatus is included in an electronic device, and the apparatus has a function of implementing the method according to any one of the foregoing aspects and the possible implementations in the foregoing aspects. The function may be implemented by using hardware, or may be implemented by executing corresponding software by hardware. The hardware or the software includes at least one module or unit corresponding to the foregoing function, for example, a receiving module or unit, a display module or unit, a collection module or unit, and a sending module or unit.

According to a twentieth aspect, a computer-readable storage medium is provided, and includes computer instructions. When the computer instructions are run on a computer, the computer is enabled to perform the method according to any one of the foregoing aspects and the possible implementations in the foregoing aspects.

According to a twenty-first aspect, a computer program product is provided. When the computer program product runs on a computer, the computer is enabled to perform the method according to any one of the foregoing aspects and the possible implementations in the foregoing aspects.

According to a twenty-second aspect, a chip system is provided, and includes a processor. When the processor executes instructions, the processor performs the method according to any one of the foregoing aspects and the possible implementations in the foregoing aspects.

**BRIEF DESCRIPTION OF DRAWINGS**

FIG. 1 is a schematic diagram of a connection manner between terminals according to an embodiment of this application;

FIG. 2 and FIG. 3 each are a schematic diagram 1 of an architecture of a communication system according to an embodiment of this application;

FIG. 4 is a schematic diagram of a structure of a terminal according to an embodiment of this application;

FIG. 5 is a schematic diagram 1 of a software structure of a terminal according to an embodiment of this application;

FIG.6-1 and FIG. 6-2 each are a schematic diagram 1 of a structure of a server according to an embodiment of this application;

FIG. 7(1) to FIG. 7(5) and FIG. 8A to FIG. 8F each are a schematic flowchart of initiating multi-party communication according to an embodiment of this application;

FIG. 9A and FIG. 9B are a schematic diagram of communication between terminals after a multi-party call is connected and before a P2P connection is established according to an embodiment of this application;

FIG. 10 is a schematic flowchart of establishing a P2P connection according to an embodiment of this application;

FIG. 11A and FIG. 11B are a schematic diagram of establishment of a P2P connection between terminals according to an embodiment of this application;

FIG. 12-1A and FIG. 12-1B and FIG. 12-2A and FIG. 12-2B each are a schematic diagram of a scenario of a communication method according to an embodiment of this application;

FIG. 12-3 is a schematic diagram of a weighted undirected graph according to an embodiment of this application;

FIG. 13 is a schematic flowchart 1 of a communication method according to an embodiment of this application;

FIG. 14A and FIG. 14B are a schematic diagram of a conventional method for performing multi-party communication in a relay manner;

FIG. 15 to FIG. 17 each are a schematic diagram 1 of a structure of a communication apparatus according to an embodiment of this application;

FIG. 18 is a schematic diagram of a chip system according to an embodiment of this application;

FIG. 19 is a schematic diagram 2 of a system architecture according to an embodiment of this application;

FIG. 20 is a schematic diagram 2 of a software architecture of a terminal according to an embodiment of this application;

FIG. 21 is a schematic diagram 2 of a structure of a server according to an embodiment of this application;

FIG. 22 is a schematic diagram of status information according to an embodiment of this application;

FIG. 23-1(1) to FIG. 23-1(5), FIG. 23-2, and FIG. 24 each are a schematic diagram of a scenario of inputting status information by a user according to an embodiment of this application;

FIG. 25 is a schematic diagram of obtaining status information by using an instruction input by a user according to an embodiment of this application;

FIG. 26 is a schematic diagram of obtaining status information by using hardware according to an embodiment of this application;

FIG. 27 is a schematic diagram of interaction between a terminal and a server according to an embodiment of this application;

FIG. 28-1A and FIG. 28-1B to FIG. 28-6A to FIG. 28-6C each are a schematic diagram of a scenario of obtaining and presenting status information according to an embodiment of this application;

FIG. 29(1) to FIG. 29(3) and FIG. 30(1) and FIG. 30(2) each are a schematic diagram of using a permission for status information according to an embodiment of this application;

FIG. 31A and FIG. 31B are a schematic diagram of a call connection scenario according to an embodiment of this application;

FIG. 32A and FIG. 32B are a schematic diagram of obtaining status information by using an external device according to an embodiment of this application;

FIG. 33 is a schematic flowchart 2 of a communication method according to an embodiment of this application; and

FIG. 34 is a schematic diagram 2 of a structure of a communication apparatus according to an embodiment of this application.

## DESCRIPTION OF EMBODIMENTS

In descriptions in embodiments of this application, unless otherwise specified, "/" means "or". For example, A/B may represent A or B. In this specification, "and/or" describes only an association relationship between associated objects and represents that three relationships may exist. For example, A and/or B may represent the following three cases: Only A exists, both A and B exist, and only B exists.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the description of embodiments of this application, unless otherwise specified, "a plurality of" means two or more than two.

In embodiments of this application, the word "example" or "for example" is used to represent giving an example, an illustration, or a description. Any embodiment or design scheme described as "example" or "for example" in embodiments of this application should not be explained as being more preferred or having more advantages than another embodiment or design scheme. Exactly, use of the word "example", "for example", or the like is intended to present a related concept in a specific manner.

In embodiments of this application, different information may be carried by using a same message, or may be separately carried by using different messages. A specific manner of carrying information is not limited in embodiments of this application.

A P2P communication mode is a common communication mode in the computer network field, where devices may directly communicate with each other through a P2P channel (or referred to as a P2P connection) between the devices, to implement resource sharing and information exchange.

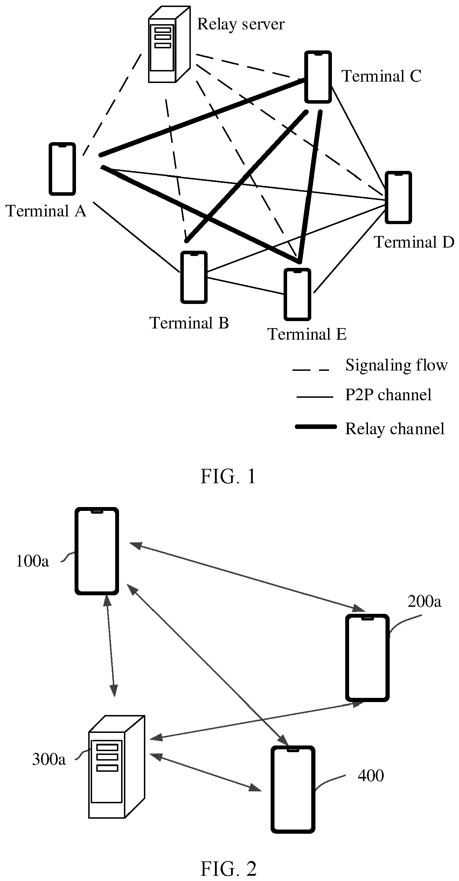

In a multi-party communication scenario such as a multi-party call or a video conference, it is difficult to ensure that a P2P channel is successfully established between every two devices. When a P2P direct channel cannot be successfully established between some devices, a relay server needs to be deployed. Therefore, the devices that cannot be directly connected through the P2P channel perform relay communication through the relay server. For example, FIG. 1 shows a connection relationship between a plurality of terminals in a multi-party video call scenario. P2P channels are successfully established between a terminal A and a terminal B, between the terminal B and a terminal E, between a terminal D and a terminal C, between the terminal D and the terminal A, between the terminal D and the terminal B, and between the terminal D and the terminal E respectively. Relay channels are established between the terminal A and the terminal C, between the terminal A and the terminal E, between the terminal C and the terminal B, and between the terminal C and the terminal E through the relay server respectively. A signaling flow shown in FIG. 1 is used to establish a relay channel between the relay server and a corresponding terminal.

Currently, as a quantity of terminals increases, in a multi-party communication scenario such as a multi-party video call, there may be more terminals that fail to successfully establish a P2P direct channel. In this case, the relay server needs to provide resources such as a bandwidth for a corresponding terminal, to establish a relay channel between the terminal and the relay server. Therefore, the terminal may communicate with another terminal through the relay channel and the relay server. It can be learned that, because the relay channel needs to be established, resource consumption of a single relay server is usually large. In addition, with a surge of multi-party communication services such as a multi-party video call, a quantity of relay servers that need to be deployed increases. This increases networking complexity and networking costs, and is unfavorable to subsequent network maintenance.

In view of this, embodiment of this application provide a communication method, so that a relay function of the relay server can be handed over to one or more terminals that have established a P2P link. In other words, data between terminals is forwarded through a forwarding path including one or more P2P links, and the relay server is not required for forwarding the data between the terminals. Therefore, a quantity of deployed servers can be reduced, and networking complexity and costs can be further reduced.

FIG. 2 is a schematic diagram of a structure of a communication system according to an embodiment of this application. A connection establishment method provided in embodiments of this application may be applied to the communication system. Specifically, the communication system includes terminals (for example, a terminal 100a, a terminal 200a, and a terminal 400 shown in FIG. 1) and a server 300a.

A P2P direct connection may be established between the terminals, and the terminals communicate with each other through the P2P connection. For example, in FIG. 1, a P2P direct connection is established between the terminal 100a and the terminal 200a. Therefore, a service packet between the terminal 100a and the terminal 200a may be transmitted through the P2P connection.

Alternatively, a terminal that establishes the P2P connection may serve as a relay for communication between other terminals. For example, the terminal 100a may serve as a relay for communication between the terminal 200a and the terminal 400. For example, the terminal 200a sends a service packet to the terminal 400. To be specific, the terminal 200a first sends the service packet to the terminal 100a through the P2P direct connection between the terminal 200a and the terminal 100a, and then the terminal 100a forwards the service packet to the terminal 400 through a P2P direct connection between the terminal 100a and the terminal 400.

Alternatively, the terminals may communicate with each other through the server 300a, in other words, the server 300a serves as a relay for communication between the terminals. When the terminal 400 sends the service packet to the terminal 200a, the terminal 400 first sends the service packet to the server 300a, and then the server 300a forwards the service packet to the terminal 200a.

Specifically, the terminal 100a may establish a connection to the server 300a by using one or more networks. The network may be a local area network (local area network, LAN), or may be a wide area network (wide area network, WAN), for example, the Internet. The network may be implemented by using any known network communication protocol. The network communication protocol may be various wired or wireless communication protocols, for example, the Ethernet, a universal serial bus (universal serial bus, USB), FireWire (FireWire), any cellular network communication protocol (for example, 3G/4G/5G/future communication technologies), Bluetooth, wireless fidelity (wireless fidelity, Wi-Fi), NFC, or any other appropriate communication protocol.

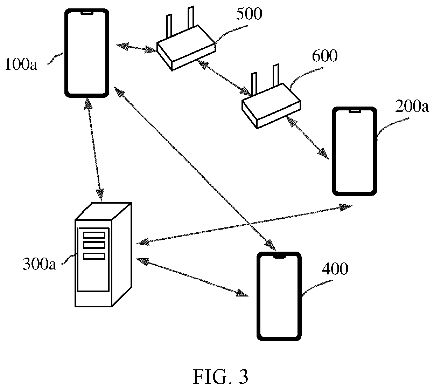

In some other scenarios, a plurality of terminals that establish a P2P connection may be on different intranets. For example, FIG. 3 is a schematic diagram of an architecture of another communication system according to an embodiment of this application. The system includes terminals (for example, a terminal 100a, a terminal 200a, and a terminal 400), a server 300a, and network address translation (network address translation, NAT) devices (for example, a NAT device 500 and a NAT device 600).

It can be learned from FIG. 3 that the terminal 100a and the terminal 200a are connected to different NAT devices, and it may be considered that the terminal 100a and the terminal 200a are on different intranets. Because different intranets may have different private internet protocol (internet protocol, IP) addresses, a NAT technology needs to be further introduced to implement communication between the terminal 100a and the terminal 200a. To be specific, private IP addresses of intranets on which the terminal 100a and the terminal 200a are located are translated into public IP addresses of extranets on which the terminal 100a and the terminal 200a are located.

Then, the P2P connection between the terminal 100a and the terminal 200a may be established based on the NAT technology.

In a possible implementation, a NAT traversal technology is introduced, and the server serves as a mediation device, to establish the P2P connection between terminals on different intranets. A specific implementation of establishing the P2P connection between the terminals by using the NAT traversal technology is described in detail below.

For example, the terminal may be a mobile phone, a tablet computer, a personal computer (personal computer, PC), a personal digital assistant (personal digital assistant, PDA), a smart watch, a netbook, a wearable electronic device, an augmented reality (augmented reality, AR) device, a virtual reality (virtual reality, VR) device, a vehicle-mounted device, an intelligent vehicle, a smart speaker, or a robot. A specific form of the terminal is not specially limited in this application.

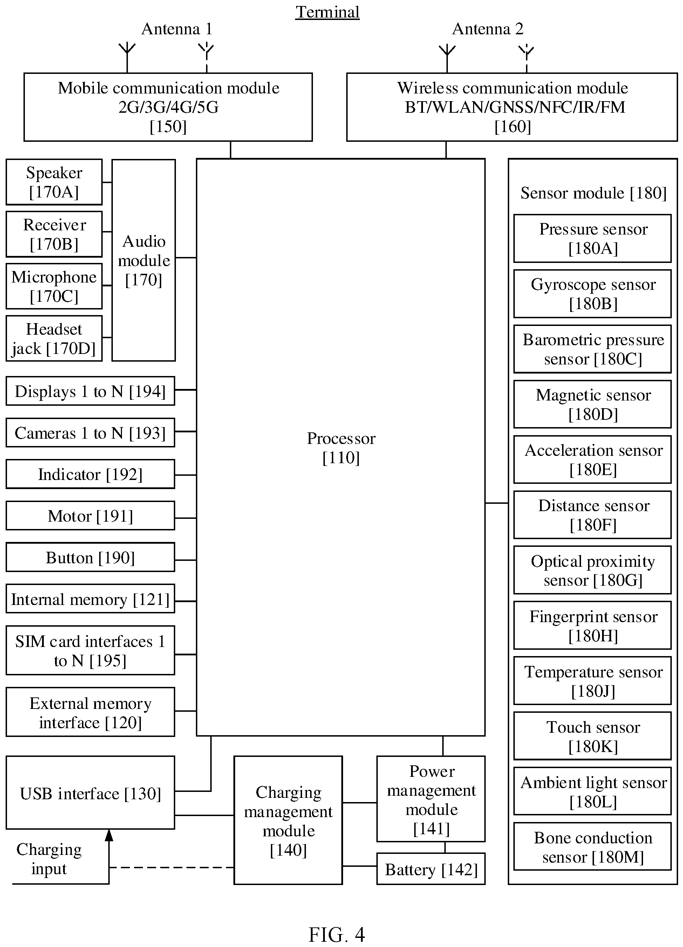

FIG. 4 is a schematic diagram of a hardware structure of the terminal 100a. For structures of other terminals, refer to the structure of the terminal 100a.

The terminal 100a may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the terminal 100a. In some other embodiments of this application, the terminal 100a may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access and reduces waiting time of the processor 110, to improve system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to USB standard specifications, and may specifically be a mini USB interface, a micro USB interface, a USB Type-C interface, or the like. The USB interface 130 may be configured to connect to a charger to charge the terminal 100a, or may be configured to perform data transmission between the terminal 100a and a peripheral device, or may be configured to connect to a headset for playing audio through the headset. The interface may be further configured to connect to other electronic devices such as an AR device.

It may be understood that an interface connection relationship between the modules shown in this embodiment of the present invention is merely used as an example for description, and does not constitute a limitation on the structure of the terminal 100a. In some other embodiments of this application, the terminal 100a may alternatively use an interface connection manner different from that in the foregoing embodiment, or a combination of a plurality of interface connection manners.

The charging management module 140 is configured to receive a charging input from a charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the terminal 100a. When charging the battery 142, the charging management module 140 may further supply power to the terminal through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the terminal 100a may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal 100a may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution, applied to the terminal 100a, to wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution, applied to the terminal 100a, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert an amplified signal into an electromagnetic wave for radiation through the antenna 2.

In some embodiments of this application, the terminal 100a may establish a wireless connection to another terminal or a server through the wireless communication module 160 (for example, a WLAN module) and the antenna 2, to implement communication between the terminal 100a and the another terminal or the server.

In some embodiments, in the terminal 100a, the antenna 1 is coupled to the mobile communication module 150, and the antenna 2 is coupled to the wireless communication module 160, so that the terminal 100a can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal 100a may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the terminal 100a may include one or N displays 194, where N is a positive integer greater than 1.

The terminal 100a may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the terminal 100a may include one or N cameras 193, where N is a positive integer greater than 1.

The digital signal processor is configured to process a digital signal, and may process another digital signal in addition to the digital image signal. For example, when the terminal 100a selects a frequency, the digital signal processor is configured to perform Fourier transformation on frequency energy.

The video codec is configured to compress or decompress a digital video. The terminal 100a may support one or more video codecs. In this way, the terminal 100a may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, by referring to a mode of transmission between human brain neurons, and may further continuously perform self-learning. Applications such as intelligent cognition of the terminal 100a, for example, image recognition, facial recognition, speech recognition, and text understanding, may be implemented by using the NPU.

The external memory interface 120 may be configured to connect to an external storage card, for example, a micro SD card, to extend a storage capability of the terminal 100a. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (for example, audio data and a phone book) and the like that are created during use of the terminal 100a. In addition, the internal memory 121 may include a high-speed random access memory, and may further include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications of the terminal 100a and data processing.

The terminal 100a may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for an output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The terminal 100a is used to listen to music or answer a call in a hands-free mode over the speaker 170A.

The receiver 170B, also referred to as an "earpiece", is configured to convert an audio electrical signal into a sound signal. When a call is answered or voice information is received by using the terminal 100a, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through a mouth of the user, to input a sound signal to the microphone 170C. At least one microphone 170C may be disposed in the terminal 100a. In some other embodiments, two microphones 170C may be disposed in the terminal 100a, to collect a sound signal and implement a noise reduction function. In some other embodiments, three, four, or more microphones 170C may alternatively be disposed in the terminal 100a, to collect a sound signal, implement noise reduction, identify a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The button 190 includes a power button, a volume button, and the like. The button 190 may be a mechanical button, or may be a touch button. The terminal 100a may receive a button input, and generate a button signal input related to a user setting and function control of the terminal 100a.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the terminal 100a. The terminal 100a may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 is also compatible with different types of SIM cards. The SIM card interface 195 is also compatible with an external storage card. The terminal 100a interacts with a network by using the SIM card, to implement functions such as call and data communication. In some embodiments, the terminal 100a uses an eSIM, namely, an embedded SIM card. The eSIM card may be embedded in the terminal 100a, and cannot be separated from the terminal 100a.

A software system of the terminal 100a may use a layered architecture, an event-driven architecture, a microkernel architecture, a microservice architecture, or a cloud architecture. In this embodiment of the present invention, the Android system with the layered architecture is used as an example to describe a software structure of the terminal 100a.

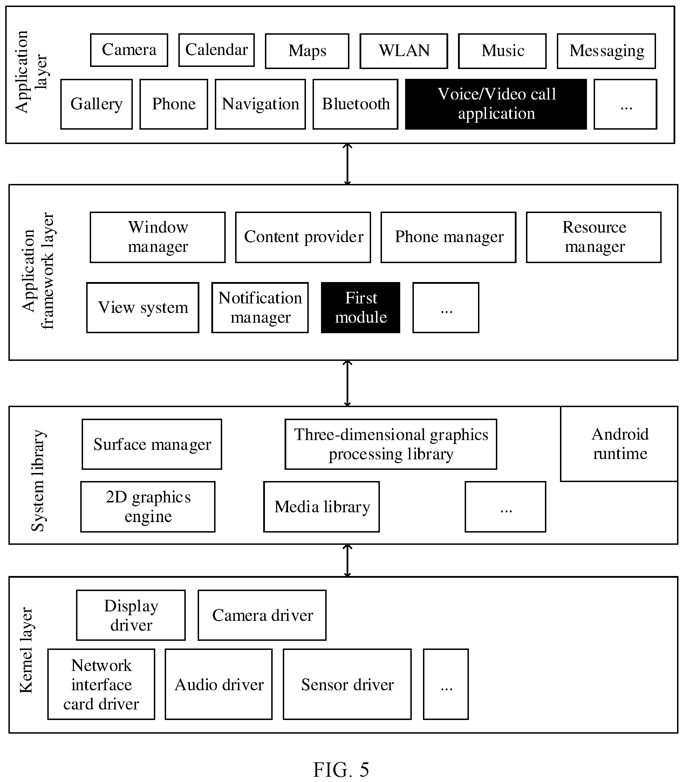

FIG. 5 is a block diagram of the software structure of the terminal 100a according to this embodiment of the present invention.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 3, the application packages may include applications such as Camera, Gallery, Calendar, Phone, Maps, Navigation, WLAN, Bluetooth, Music, Videos, and Messaging.

In some embodiments of this application, the application package further includes a voice/video call application having a voice/video call function, for example, a WeChat application, a QQ application, facetime, and MeeTime. The voice/video call application may be an application preset in the terminal 100a, or may be an application downloaded by a user from an application market or in another manner. The voice/video call application is not limited in this embodiment of this application. A voice/video call may be a video call or a voice call.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like. The content provider is configured to store and obtain data, and enable the data to be accessed by an application. The data may include a video, an image, audio, calls that are made and answered, a browsing history and bookmarks, an address book, and the like. The view system includes visual controls such as a control for displaying a text and a control for displaying a picture. The view system may be configured to construct an application. A display interface may include one or more views. For example, a display interface including an SMS message notification icon may include a view for displaying a text and a view for displaying a picture. The phone manager is configured to provide a communication function of the terminal 100a, for example, management of a call status (including answering, hanging up, or the like). The resource manager provides various resources such as a localized character string, an icon, a picture, a layout file, and a video file for an application. The notification manager enables an application to display notification information in a status bar, and may be configured to convey a notification message that may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application running on a background, or may be a notification that appears on the screen in a form of a dialog window. For example, text information is prompted in the status bar, an announcement is given, the terminal vibrates, and an indicator light blinks.

In some embodiments of this application, the application framework layer may further include:

The Android runtime includes a kernel library and a virtual machine. The Android runtime is responsible for scheduling and management of the Android system. The kernel library includes two parts: a function that needs to be invoked in Java language and a kernel library of Android. The application layer and the application framework layer run on the virtual machine. The virtual machine executes java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL). The surface manager is configured to manage a display subsystem and provide fusion of 2D and 3D layers for a plurality of applications. The media library supports playback and recording in a plurality of commonly used audio and video formats, static image files, and the like. The media library may support a plurality of audio/video coding formats, for example, MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

The kernel layer is a layer between hardware and software. The kernel layer includes at least a display driver, a camera driver, an audio driver, and a sensor driver.

It should be noted that, for a structure of the server 300a, refer to the structure of the terminal in FIG. 4. The server 300a may have more or fewer components than the structure shown in FIG. 4, or some components may be combined, or some components may be split, or different component arrangements may be used. The components shown in the figure may be implemented by hardware, software, or a combination of software and hardware.

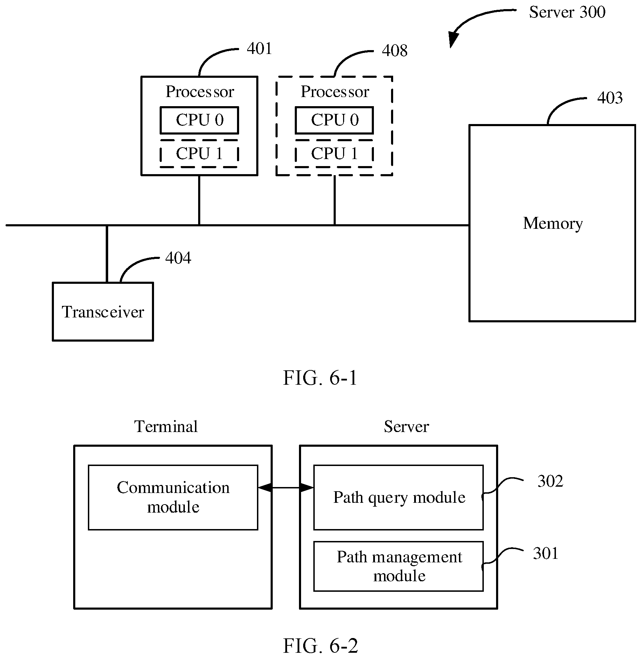

For example, as shown in FIG. 6-1, the server 300a may include a processor 401 (optionally, include a processor 408), a memory 403, a transceiver 404, and the like.

A path may be included between the components, and is used for transmitting information between the components.

The transceiver 404 is configured to communicate with another device or a communication network by using a protocol such as the Ethernet or a WLAN.

For detailed content of the processor and the memory, refer to the descriptions of related structures in the terminal in FIG. 4. Details are not described herein again.

The following describes in detail the technical solutions provided in embodiments of this application by using an example in which both the terminal 100a and the terminal 200a are mobile phones. Unified descriptions are provided herein.

FIG. 6-2 is a schematic diagram of another structure of the server 300a. The server 300a includes a path management module 301 and a path query module 302.

The path management module 301 of the server is configured to manage an available path between terminals. An available path between a terminal 1 and a terminal 4 is used as an example. Data between the terminal 1 and a terminal 2 may be transmitted through an available path, namely, from a terminal 3 to the terminal 4. To be specific, the terminal 1 sends the data to the terminal 3, the terminal 3 sends the data to the terminal 4, and the terminal 4 sends the data to a destination (namely, the terminal 2). For another example, data between the terminal 2 and the terminal 4 may be transmitted through an available path, namely, the terminal 3.

The path query module 302 is configured to access the path management module 301, to obtain an available path between a source terminal and a destination terminal from the path management module 301. The path query module 302 is further configured to exchange path-related information with a communication module of the terminal. For example, the source terminal sends a query request to the path query module 302 of the server 300a by using the communication module, to find an available forwarding path to the destination terminal. For another example, the server 300a sends a query response to the terminal by using the path query module 302, to feed back, to the source terminal, an available path found by the source terminal.

The path query module 302 and the path management module 301 may be implemented by the processor 401 and/or the processor 408 shown in FIG. 6-1.

The following describes in detail the technical solutions provided in embodiments of this application by using an example in which the terminal is a mobile phone and a user initiates a multi-party video call by using a video call application of the mobile phone.

A video call procedure usually includes three phases: call initiation, call connection, and hang-up.

The call initiation phase in the video call procedure is first described.

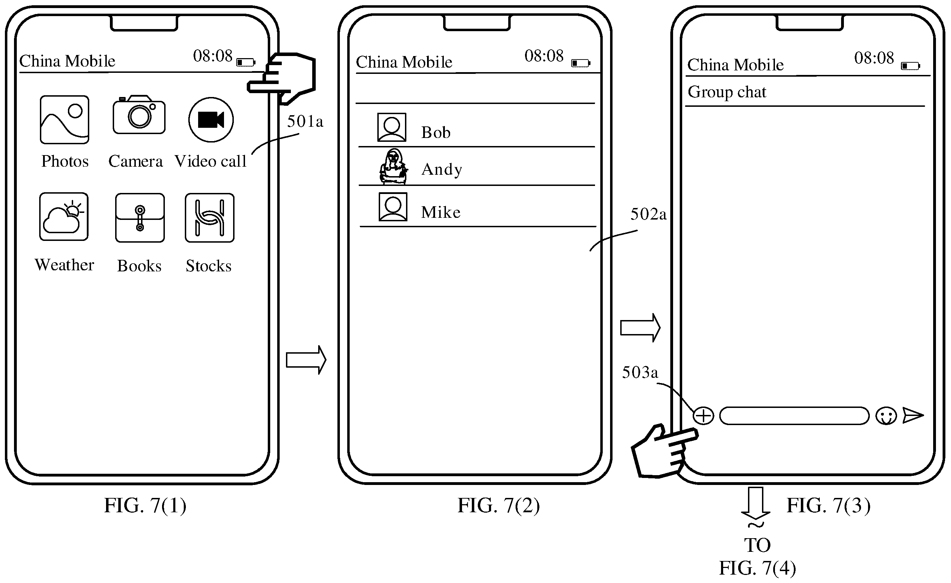

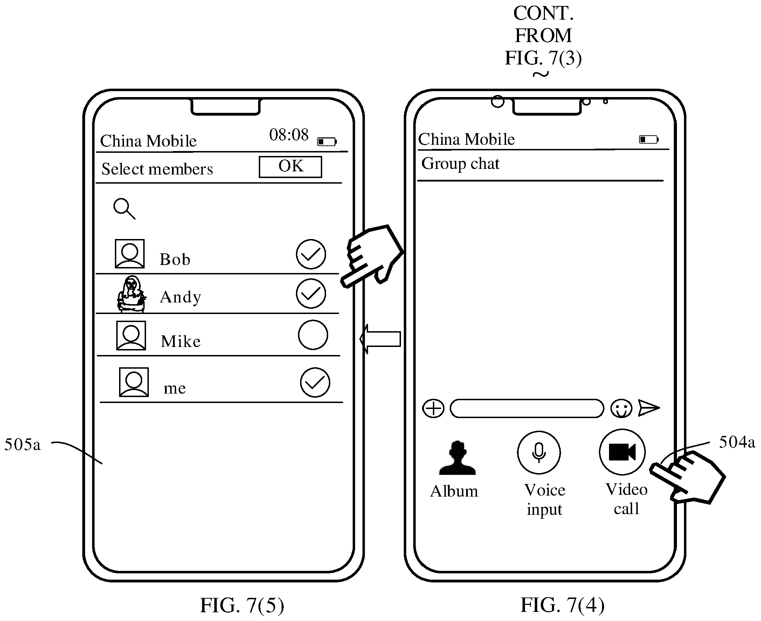

The user may initiate the multi-party video call by using the video call application. As shown in FIG. 7(1), an interface 501a of a mobile phone A includes a video call application icon, and a user A may perform an operation on the video call application icon. In response to the operation input by the user A on the interface 501a, for example, an operation of tapping the video call application, the mobile phone A displays an interface 502a shown in FIG. 7(2). The interface 502a includes a plurality of contacts. In some scenarios, the user A may move the plurality of contacts into a group chat. FIG. 7(3) is an example of a group chat interface. The group chat interface includes a control 503a. The user A may perform an operation on the control 503a. In response to the operation such as a tapping operation performed by the user A on the control 503a, the mobile phone A displays an interface shown in FIG. 7(4), where the interface includes a control 504a. In response to an operation such as a tapping operation performed by the user A on the control 504a, the mobile phone A displays an interface 505a shown in FIG. 7(5). The user A may select, on the interface 505a, members to join the multi-party video call and tap an "OK" button, to trigger the mobile phone A to send a call request to a server. The call request is used to request to make a video call with Bob's mobile phone B and Andy's mobile phone C.

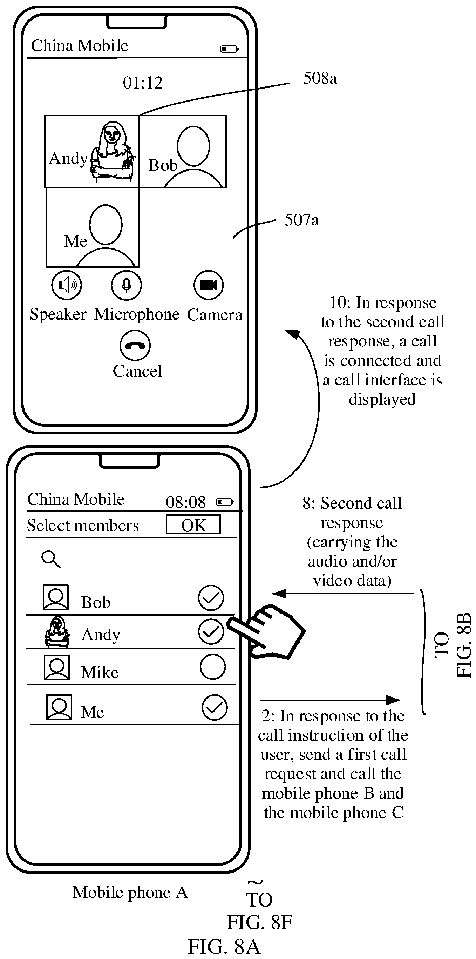

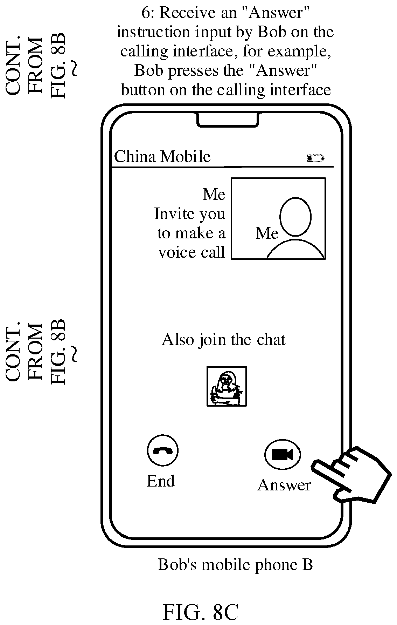

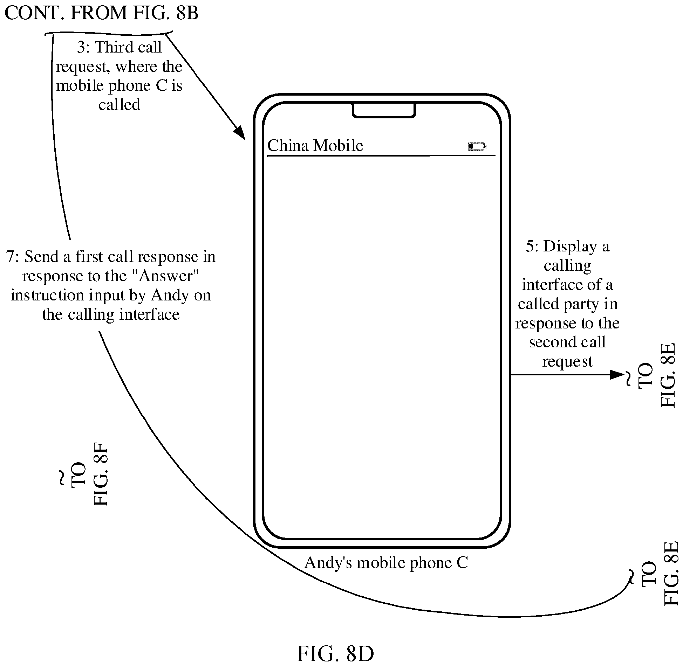

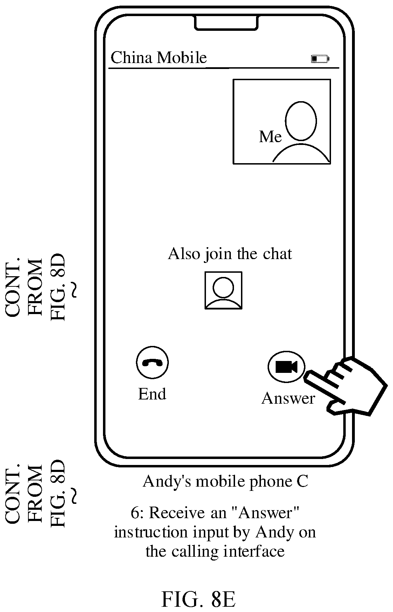

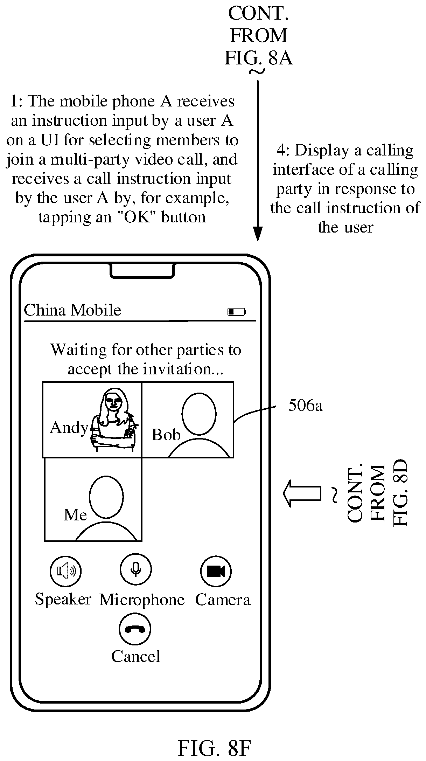

The following describes an interaction procedure between the mobile phone A, the server, the mobile phone B, and the mobile phone C with reference to FIG. 8A to FIG. 8F. As shown in FIG. 8F, specifically, in step 1, the user selects, on a user interface (user interface, UI) of the mobile phone A, members such as Bob and Andy that join the multi-party video call, and inputs a call instruction by performing an operation such as tapping an "OK" button. Step 2: The mobile phone A sends a first call request to the server in response to the call instruction input by the user on the user interface. The first call request carries information about called devices (namely, Bob's mobile phone and Andy's mobile phone). For example, the information about the called devices includes, but is not limited to, device IDs and device types of the called devices. Alternatively, in another possible implementation, as shown in Table 1, the first call request carries a source device identifier and a call identifier.

**Table 1**

| Key field | Field meaning |
|---|---|
| srcDeviceId | Source device identifier |
| Roomid | Call identifier |

The call identifier is used to identify different calls. The different calls are associated with different terminals. For example, a terminal 1 initiates a video call 1 to a terminal 2 and a terminal 3, and a terminal 4 initiates a video call 2 to a terminal 5 and a terminal 6.

Step 3: The server initiates a second call request to each of the called devices (namely, the mobile phone B

and the mobile phone C) based on the information about the called devices (namely, information about the mobile phone B and the mobile phone C).

It should be noted that the second call request sent by the server to the mobile phone B and the second call request sent by the server to the mobile phone C may include same information, or may include different information. For example, the second call request sent by the server to the mobile phone B includes a NAT IP address of a network on which the mobile phone B is located and a device identifier of the mobile phone B. The second call request sent by the server to the mobile phone C includes a NAT IP address of a network on which the mobile phone C is located and a device identifier of the mobile phone C.

In addition, time at which the server sends the second call request to the mobile phone B and time at which the server sends the second call request to the mobile phone C are not limited in sequence. In other words, the server may first send the second call request to the mobile phone B, or may first send the second call request to the mobile phone C, or may simultaneously send the second call request to the mobile phone B and the mobile phone C.

Step 4: The mobile phone A displays a calling interface of a calling party in response to the call instruction input by the user A on the user interface of the mobile phone A. In addition, the mobile phone A may always display the calling interface from time at which the server sends the second call request to Bob's mobile phone and Andy's mobile phone to time at which Bob and Andy agree to answer the call. Optionally, the calling interface includes profile pictures 506a of Bob, Andy, and the user A.

Step 5: The mobile phone B displays a calling interface of a called party in response to the second call request from the server, to prompt the user Bob that there is a video call to be answered. Certainly, the mobile phone B may alternatively prompt the user Bob in another manner, for example, by using a voice prompt. A manner in which the mobile phone prompts the user is not limited in this embodiment of this application.

Similarly, the mobile phone C displays a calling interface of a called party in response to the second call request from the server, to prompt the user Andy that there is a video call to be answered.

Step 6: The mobile phone B receives an "Answer" instruction input by Bob on the calling interface, for example, tapping an "Answer" button, indicating "Answer" by a voice, or indicating "Answer" in another manner.

The mobile phone C receives an "Answer" instruction input by Andy on the calling interface.

It may be understood that when the called party answers the call, it indicates that the call is connected.

Step 7: Bob's mobile phone feeds back a first call response (indicating that Bob answers the call) to the server in response to the "Answer" instruction input by Bob on the calling interface. Similarly, Andy's mobile phone also feeds back a call response to the server.

Optionally, the call response carries a source device identifier and a call identifier. The call identifier is used to identify a call. Different calls are associated with different terminals. For example, a terminal 1 initiates a video call 1 to a terminal 2 and a terminal 3, and a terminal 4 initiates a video call 2 to a terminal 5 and a terminal 6.

Step 8: The server sends a second call response to the mobile phone A.

Step 9: When the server receives the first call response from Bob's and Andy's mobile phones and learns that Bob and Andy answer the call, the server triggers a P2P connection establishment procedure. The procedure is used to attempt to establish a P2P connection between every two mobile phones.

Step 10: The mobile phone A displays a call interface 507a in response to the second call response from the server.

When the mobile phone A receives the second call response from the server, it indicates that the called mobile phones agree to join the current call. In this case, the mobile phone A displays the call interface 507a, and the call interface 507a is an interface displayed when the call is connected. As shown in FIG. 8A, the call interface 507a includes an image window 508a. The image window 508a is used to display image data corresponding to the mobile phone B and the mobile phone C, for example, display image data collected by cameras of the mobile phone B and the mobile phone C.

In addition, the mobile phone A can play audio data carried in the second call response, namely, audio data collected by the mobile phone C and the mobile phone B.

It may be understood that the mobile phone may also send the collected audio data and/or video data to the mobile phone B and the mobile phone C through the server. In this way, the user Bob of the mobile phone B and the user Andy of the mobile phone C each can see, on a display during the video call, an image collected by the mobile phone A, and hear a voice collected by the mobile phone A.

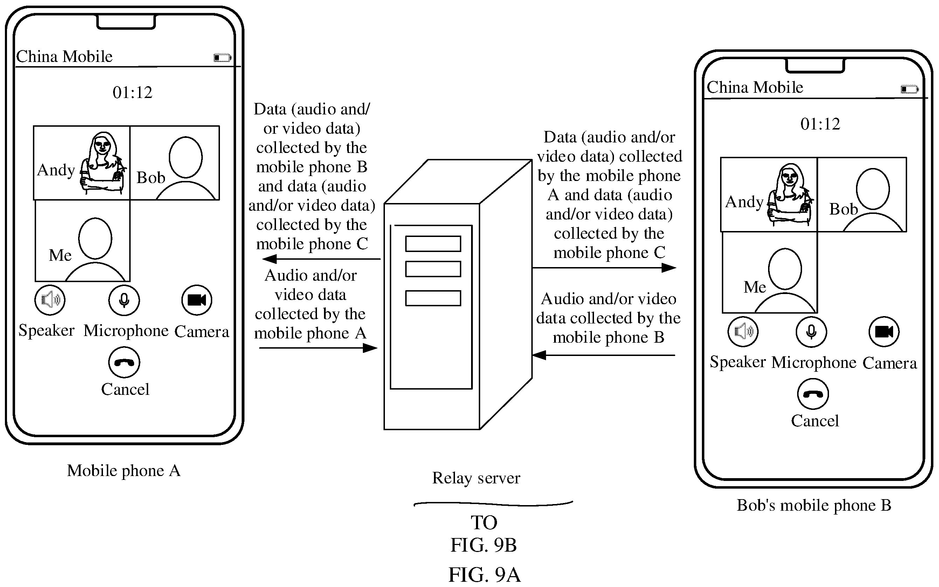

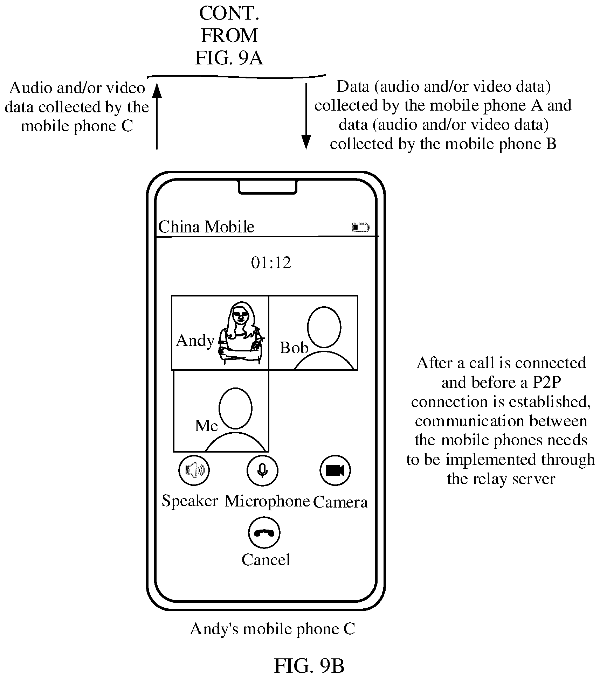

It can be learned that, after Bob and Andy answer the call, in other words, after the user A, Bob, and Andy all successfully join the multi-party video call, and before the P2P connection is successfully established, a relay server is required to implement communication between every two mobile phones. To be specific, a mobile phone of a sender first sends a packet to the relay server, and the relay server forwards the packet to a mobile phone of a receiver. Specifically, before the P2P connection is successfully established, as shown in FIG. 9A and FIG. 9B, the mobile phone A forwards the collected audio and/or video data to the mobile phone B and the mobile phone C through the server. The mobile phone B forwards the collected audio and/or video data to the mobile phone A and the mobile phone C through the server, and the mobile phone C forwards the collected audio and/or video data to the mobile phone A and the mobile phone B through the server.

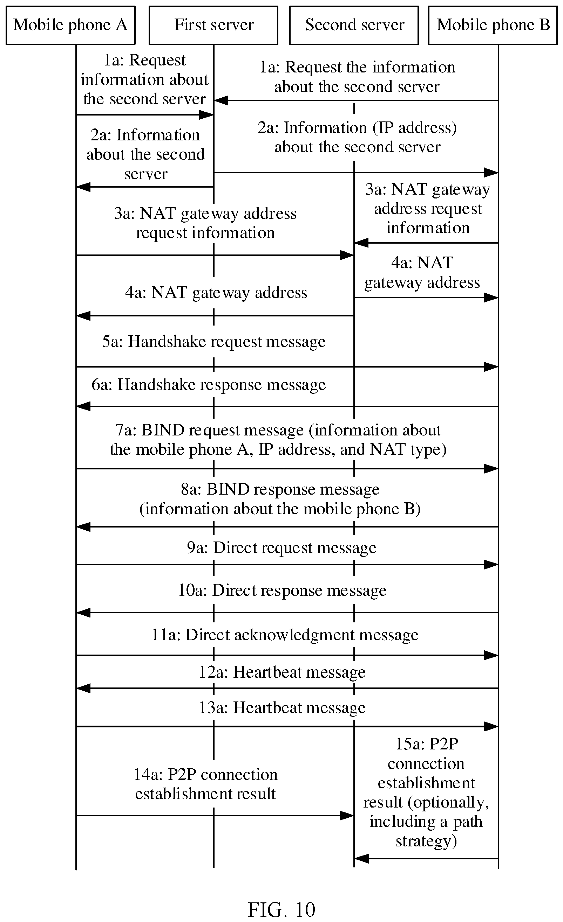

For example, a P2P connection is established between the mobile phone A and the mobile phone B. FIG. 10 shows a P2P connection establishment procedure. The procedure includes the following steps.

1a: The mobile phone A sends, to a first server, a request message used to request information about a second server.

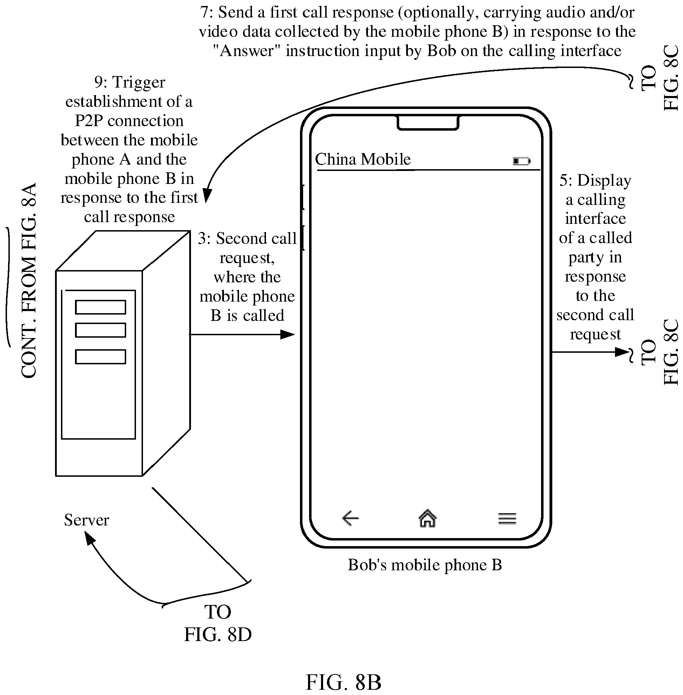

The first server is a server configured to trigger the P2P connection establishment procedure. For example, the first server may be a server that receives the call response from the mobile phone shown in FIG. 8B.

The second server is a server configured to establish the P2P connection (for example, implement NAT traversal). The second server may process hole punching control signaling.

In some embodiments, the first server and the second server may be a same server. In some other embodiments, the first server and the second server may be different servers.

For example, the information about the second server may include, but is not limited to, an IP address of the second server.

FIG. 8A to FIG. 8F are used as an example. When sending the first call request to the first server, the mobile phone A sends, to the first server, the request message used to request the information about the second server. Alternatively, after sending the first call request to the first server, the mobile phone A sends, to the first server, the request message used to request the information about the second server. Alternatively, the mobile phone A sends, on another occasion, the request message used to request the information about the second server. For example, when determining that establishment of the P2P connection between the mobile phone A and the mobile phone B needs to be triggered, the first server may send a trigger message to the mobile phone A. In response to the trigger message, the mobile phone A sends, to the first server, the request message used to request the second server.

1a: The mobile phone B sends, to the first server, the request message used to request the information about the second server.

FIG. 8A to FIG. 8F are still used as an example. In response to the second call request, the mobile phone B may send, to the first server, the request message used to request the information about the second server. Alternatively, the mobile phone B may send, to the first server on another occasion, the request message used to request the information about the second server. For example, when determining that establishment of the P2P connection between the mobile phone A and the mobile phone B needs to be triggered, the first server may send a trigger message to the mobile phone B. In response to the trigger message, the mobile phone B sends, to the first server, the request message used to request the second server. An occasion for sending the request message is not limited in this embodiment of this application.

It should be noted that, in this embodiment of this application, the first server (or the second server) and the relay server have different functions. Specifically, the first server and the second server are configured to control establishment of a P2P path, and may be understood as control-plane servers. The relay server is configured to relay data between terminals, and may be understood as a user-plane (or data-plane) server.

2a: The first server sends the information about the second server to the mobile phone B, and sends the information about the second server to the mobile phone A.

3a: The mobile phone A sends NAT gateway address request information to the second server.

It may be understood that the mobile phone A sends the NAT gateway address request information to the second server after obtaining information such as an address of the second server. The NAT gateway address request information is used to request the second server for a peer end of the P2P connection, for example, a NAT gateway address of the mobile phone B.

3a: The mobile phone B sends NAT gateway address request information to the second server.

The NAT gateway address request information is used to request the second server for a peer end of the P2P connection, for example, a NAT gateway address of the mobile phone A.

4a: The server sends the NAT gateway address of the mobile phone B to the mobile phone A, and sends the NAT gateway address of the mobile phone A to the mobile phone B.

5a: The mobile phone A sends a handshake (handshake) request message to the mobile phone B through a NAT gateway of the mobile phone B.

6a: The mobile phone B sends a handshake response message to the mobile phone A through a NAT gateway of the mobile phone A.

The handshake response message indicates that a handshake is successful.

It should be noted that the handshake herein is a handshake in a P2P hole punching procedure, and is used for time alignment.

Certainly, the mobile phone B may alternatively send a handshake request message to the mobile phone A, and then the mobile phone A sends a handshake response message to the mobile phone B. In a possible implementation, a terminal that first completes step 4a sends the handshake request message. In other words, in FIG. 10, the mobile phone A completes step 4a before the mobile phone B.

7a: The mobile phone A sends a BIND request message to the mobile phone B.

When the mobile phone A receives the handshake response message from the mobile phone B, the mobile phone A sends the BIND request message to the mobile phone B. The BIND request message includes information about the mobile phone A, and includes, but is not limited to, an IP address and a NAT type of the mobile phone A.

8a: The mobile phone B sends a BIND response message to the mobile phone A.

The BIND response message carries the information about the mobile phone B, and includes, but is not limited to, an IP address and a NAT type of the mobile phone B.

9a: The mobile phone A sends a Direct request message to the mobile phone B.

The Direct request message may be, but is not limited to, a user datagram protocol (user datagram protocol, UDP) message. After the mobile phone A sends the Direct request message to the mobile phone B, if a network signal is poor, and no Direct response message from the mobile phone B is received in a first time period, the mobile phone A may attempt to resend the Direct request message.

10a: The mobile phone B sends a Direct response message to the mobile phone A.

Optionally, after receiving the Direct request message from the mobile phone A, the mobile phone B sends the Direct response message to the mobile phone A, to indicate that the mobile phone B has received the Direct request message from the mobile phone A.

In a possible implementation, after the mobile phone B sends the Direct response message to the mobile phone A, if no Direct Ack message from the mobile phone A is received in a second time period, the mobile phone B may attempt to resend the Direct response message.

11a: The mobile phone A sends a Direct acknowledgment (Direct Ack) message to the mobile phone B.

If the mobile phone A receives the Direct response message from the mobile phone B, it indicates that the mobile phone B can receive the Direct request message from the mobile phone A. In other words, the P2P connection between the mobile phone A and the mobile phone B is available in a direction from the mobile phone A to the mobile phone B (that is, the mobile phone A can send a message, and the mobile phone B can receive the message). To enable the P2P connection to be available in both directions, that is, the mobile phone A can send a message, and the mobile phone B can receive the message, or the mobile phone B can send a message, and the mobile phone A can receive the message, whether the P2P connection is available in a direction from the mobile phone B to the mobile phone A (that is, the mobile phone B can send the message, and the mobile phone A can receive the message) further needs to be verified.

In a possible implementation, the mobile phone A sends the Direct acknowledgment message to the mobile phone B. If the mobile phone B receives the Direct acknowledgment message, the mobile phone B may acknowledge that the mobile phone A can receive the Direct response message from the mobile phone B. In other words, the P2P connection between the mobile phone A and the mobile phone B is available in the direction from the mobile phone B to the mobile phone A.

When the P2P connection between the mobile phone A and the mobile phone B is available in both directions, NAT traversal succeeds.

12a: The mobile phone B sends a heartbeat message to the mobile phone A.

After receiving the Direct acknowledgment message from the mobile phone A, the mobile phone B learns that the NAT traversal succeeds, and then sends the heartbeat message to the mobile phone A.

13a: The mobile phone A sends a heartbeat message to the mobile phone B.

Similar to the case in which the mobile phone B sends the heartbeat message to the mobile phone A, the mobile phone A may also send the heartbeat message to the mobile phone B after the NAT traversal succeeds.

14a: The mobile phone A reports a P2P connection establishment result to the second server.

In a possible implementation, as shown in Table 2, the P2P connection establishment result of the mobile phone A includes a local device identifier (namely, a device identifier of the mobile phone A) of the P2P connection, a peer device identifier (the device identifier of the mobile phone B), and information indicating that whether the P2P connection is successfully established. It may be understood that each terminal that establishes a P2P link in the multi-party communication reports a local device identifier of the connected P2P link and a peer device identifier of the connected P2P link to the server. In this way, the server may learn network topology information based on the identifiers, to determine information such as a quantity of transit devices on a forwarding path.

**Table 2**

| Field | Field meaning |
|---|---|
| srcDeviceId | Local device identifier |
| destDeviceId | Peer device identifier |

(continued)

| Field | Field meaning |
|---|---|
| p2pResult | Whether the P2P connection is successfully established |
| Strategy | Preset strategy |
| delay | Delay |
| Qos | Channel quality |
| Networktype | Network type (Wi-Fi, a cellular network, or the like) |

Optionally, the P2P connection establishment result may further include a link level parameter of the P2P connection, for example, include one or any combination of the following parameters: a delay corresponding to the P2P connection, a QoS value corresponding to the P2P connection, or a network type corresponding to the P2P connection. The information may be used by the server side to calculate a target forwarding path for receiving and sending data by the user. In some other embodiments, information such as the delay corresponding to the P2P connection may alternatively be carried in another message. It may be understood that each terminal that establishes the P2P link in the multi-party communication reports, to the server, a link level parameter of the P2P link connected to each terminal, so that the server performs, based on the parameter, a subsequent operation such as selecting the target forwarding path.

It should be noted that, in this embodiment of this application, path-related parameters are classified into a link level parameter and a path level parameter. For each forwarding path, the link level parameter includes one or any combination of the following parameters: a delay of each P2P link included in the forwarding path, QoS of each P2P link included in the forwarding path, or a network type of the P2P link included in the forwarding path; the network type includes a wireless high-fidelity Wi-Fi network or a cellular network; and/or the path level parameter includes a quantity of transit devices on the forwarding path.

Optionally, the terminal reports the P2P connection establishment result and a preset strategy to the server in a same message. The preset strategy includes one or any combination of the following strategies: a delay of the target forwarding path is the lowest, a delay of the target forwarding path is less than or equal to an upper delay threshold, QoS of the target forwarding path is optimal, a QoS value of the target forwarding path falls within a preset QoS value range, a quantity of transit devices on the target forwarding path is the smallest, a quantity of transit devices on the target forwarding path falls within a preset quantity range, or a network type of a first P2P link in the target forwarding path is a preset network type. The preset network type includes a Wi-Fi network, and the first P2P link is a P2P link connected to a first terminal or a P2P link connected to a second terminal. For example, the device identifier may be, but is not limited to, a unique identifier generated after a hash (hash) operation is performed on a user account and a device ID.

Alternatively, the terminal may encapsulate, in different messages, the P2P connection establishment result and a preset strategy. For example, the preset strategy may alternatively be encapsulated in a path query request.

15a: The mobile phone B reports a P2P connection establishment result to the second server.

The P2P connection establishment result of the mobile phone B includes the device identifier of the mobile phone B (the local device identifier), the device identifier of the mobile phone A (the peer device identifier), and the information indicating that whether the P2P connection is successfully established.

It may be understood that the second server may respectively update, based on P2P connection establishment results from a plurality of terminals, available forwarding paths corresponding to the plurality of terminals.

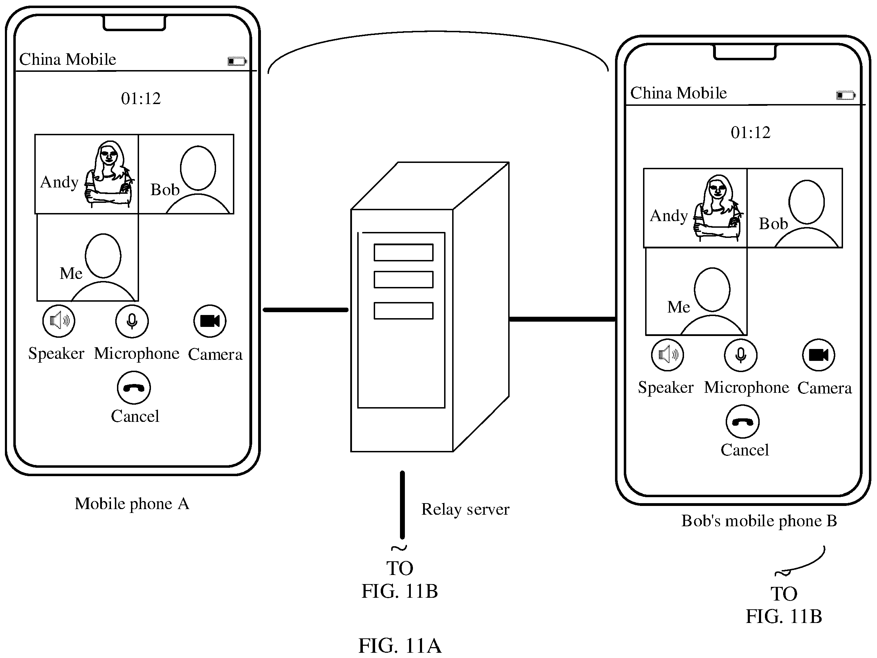

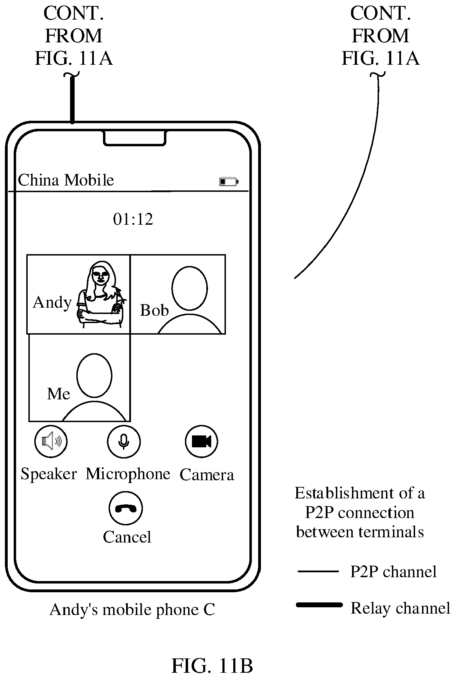

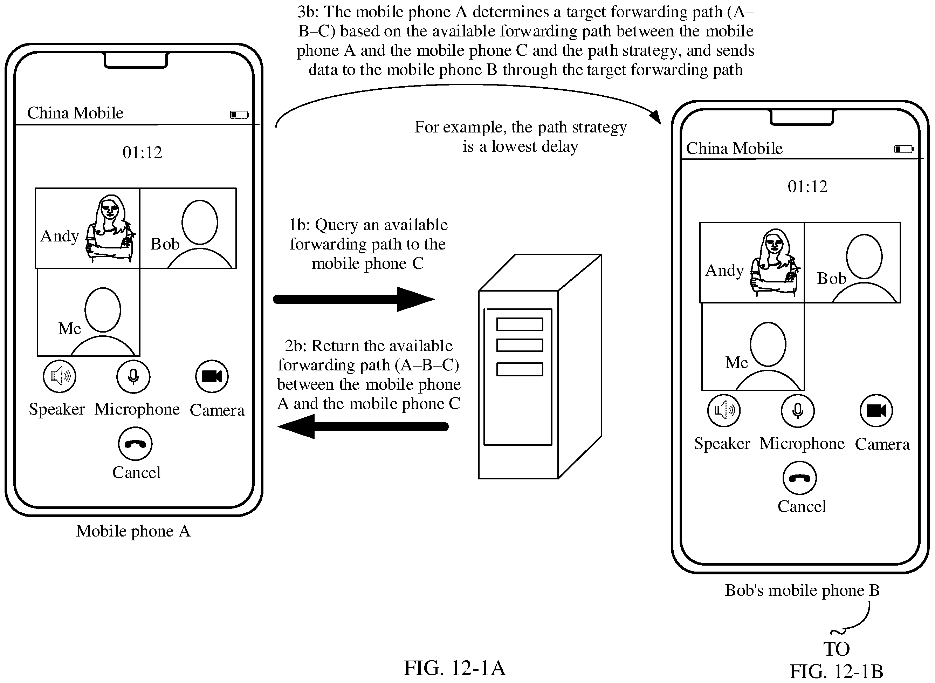

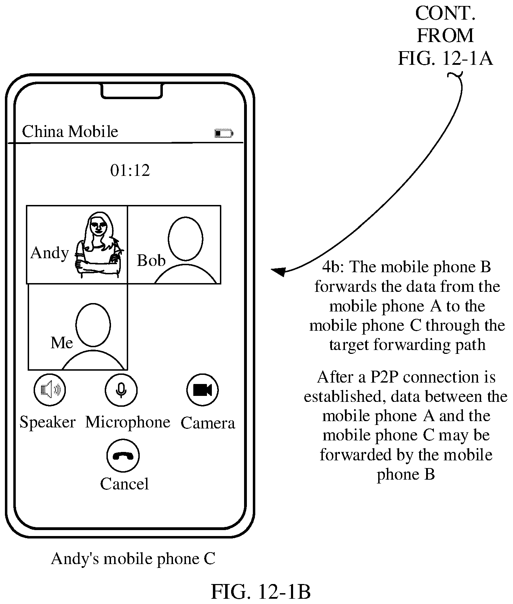

In the multi-party video call scenario, according to the P2P connection establishment procedure shown in FIG. 10, every two mobile phones attempt to establish a P2P connection, and report a P2P connection establishment result to the server. For example, a finally established P2P connection is shown in FIG. 11A and FIG. 11B. For example, the mobile phone A communicates with the mobile phone C, and a P2P direct link between the mobile phone A (the first terminal) and the mobile phone C (the second terminal) fails to be established. As shown in FIG. 12-1A and FIG. 12-1B, a procedure in which the mobile phone A sends data to the mobile phone C includes the following steps.

1b: The mobile phone A sends a path query request to the server.

The path query request is used to request to query one or more first forwarding paths between the mobile phone A and the mobile phone C. The first forwarding path is used to carry a packet between the mobile phone A (namely, the first terminal) and the mobile phone C (namely, the second terminal). The first forwarding path may also be referred to as an available forwarding path.

In this embodiment of this application, unless otherwise specified, the P2P connection, the P2P link, and the like may be a same concept.

In a possible implementation, the mobile phone A sends the path query request to the server periodically or based on another strategy. The server may feed back, to the mobile phone A based on the path query request, path information used to receive and send data.

Alternatively, the server sends updated path information to the terminal after updating a path. In this implementation, step 1b is an optional step. In other words, step 1b does not need to be performed.

The path query request carries a source device (namely, a device that needs to send data) identifier, a destination device (namely, a receiving party of the data) identifier, and the like.

In a possible implementation, a message structure of the path query request is shown in Table 3.

**Table 3**

| Key field | Description |
| --- | --- |
| srcDeviceId | Source device identifier |
| destDeviceId | Destination device identifier |

In this embodiment of this application, the available forwarding path is a P2P forwarding path. In other words, all links included in the available forwarding path are P2P links. FIG. 11A and FIG. 11B are used as an example. The available forwarding path between the mobile phone A and the mobile phone C may include the P2P connection between the mobile phone A and the mobile phone B and a P2P connection between the mobile phone B and the mobile phone C.

2b: The server sends a path query response to the mobile phone A (the first terminal).

The path query response indicates the one or more first forwarding paths between the mobile phone A (the first terminal) and the mobile phone C (the second terminal). For example, the path query response may include indexes of a plurality of available forwarding paths. In this way, the mobile phone A may send data to the mobile phone C through the available forwarding path including one or more P2P connections.

Alternatively, the path query response includes no available forwarding path. This means that there is no available forwarding path that includes only the P2P connection. In this case, the mobile phone A still sends data to the mobile phone C through a relay channel.

Optionally, the path query response carries the source device identifier (namely, the identifier of the mobile phone A), the destination device identifier (namely, the identifier of the mobile phone C), an available forwarding path list, and the like.

In a possible implementation, a message structure of the path query response is shown in Table 4.

**Table 4**

| Key field | Description |
| --- | --- |
| srcDeviceId | Source device identifier |
| destDeviceId | Destination device identifier |
| pathList | Available forwarding path list |

The available forwarding path list includes one or more available forwarding paths. Each available forwarding path may be indicated by an ordered sequence, and the ordered sequence may be an ordered sequence of device identifiers included in the available forwarding path. For example, an ordered sequence B-D-C indicates an available forwarding path on which a device B forwards data to a device D, and then the device D forwards the data to a device C.

In a possible implementation, the server determines an available forwarding path between a source device and a destination device based on P2P connection establishment results reported by a plurality of terminals. For example, the server may learn, based on a mobile phone A-mobile phone C P2P connection establishment result, that a P2P connection is established between the mobile phone A and the mobile phone B and a P2P connection is established between the mobile phone B and the mobile phone C; and determine the available forwarding path between the mobile phone A and the mobile phone C accordingly. For example, the available forwarding path between the mobile phone A and the mobile phone C is to perform forwarding through the P2P connection between the mobile phone A and the mobile phone B, and then perform forwarding through the P2P connection between the mobile phone B and the mobile phone C.

In a possible implementation, the server sends the path query response to the mobile phone A through a relay channel between the server and the mobile phone A.

3b: The mobile phone A determines the target forwarding path, and transmits the packet in the multi-party call through the target forwarding path.

The target forwarding path includes a plurality of established P2P links in the multi-party communication. Specifically, the target forwarding path includes M P2P links, where M is a positive integer greater than or equal to 2.

It is easy to understand that, after the mobile phone A receives the path query response, if the path query response includes one available forwarding path, the mobile phone A determines the available forwarding path as the target forwarding path, and sends data to a next-hop mobile phone through the target forwarding path. For example, as shown in FIG. 12-1A, the path query response fed back by the server to the mobile phone A is that the available forwarding path is A-B-C. To be specific, the mobile phone A first sends data to the mobile phone B through the P2P connection between the mobile phone A and the mobile phone B, and then the mobile phone B forwards the data from the mobile phone A to the mobile phone C through the P2P connection between the mobile phone B and the mobile phone C. In this case, the mobile phone A uses the available forwarding path as the target forwarding path, and sends the data to the mobile phone B through the P2P connection between the mobile phone A and the mobile phone B based on the target forwarding path.

Alternatively, in some other cases, the path query response fed back by the server to the mobile phone A in step 2b may include a plurality of available forwarding paths. In this case, the mobile phone A may select the target forwarding path from the plurality of available forwarding paths based on the plurality of available forwarding paths and a preset parameter.

The preset parameter includes a link level parameter and/or a path level parameter. For each first forwarding path, the link level parameter includes one or any combination of the following parameters: a delay of each P2P link included in the first forwarding path, QoS of each P2P link included in the first forwarding path, or a network type of the P2P link included in the first forwarding path; the network type includes a wireless high-fidelity Wi-Fi network or a cellular network; and/or the path level parameter includes a quantity of transit devices on the first forwarding path. The link level parameter may further include another parameter, for example, a link length, a packet loss rate, or a bandwidth. The path level parameter may further include another parameter. The link level parameter and the path level parameter are not limited in this embodiment of this application.

The preset parameter may have a corresponding quantized value. Optionally, a quantized value of the network type is used as an example. A quantized value corresponding to each network type may be determined based on a priority of the network type. For example, when a network type of a link is a Wi-Fi network, a priority is the highest, and a corresponding quantized value is the largest. Alternatively, a quantized value of a network type of each P2P link may be determined based on another factor.

Optionally, an available forwarding path is used as an example. A quantized value of a network type of each P2P link included in the available forwarding path may be determined based on the network type. For example, the available forwarding path includes two P2P links. A network type of a P2P link 1 is a Wi-Fi network, and the Wi-Fi network corresponds to a quantized value 1. A network type of a P2P link 2 is a cellular network, and the cellular network corresponds to a quantized value 2. A total quantized value may be obtained by performing a specific operation on the quantized value 1 and the quantized value 2. In other words, the quantized value of the network type corresponding to the available forwarding path is obtained.

In a possible implementation, selecting the target forwarding path from the plurality of first forwarding paths based on the plurality of first forwarding paths and the preset parameter includes: selecting the target forwarding path from the plurality of first forwarding paths based on the plurality of first forwarding paths, the preset parameter, and a preset strategy.

As mentioned above, the preset strategy includes one or any combination of the following strategies: the delay of the target forwarding path is the lowest, the delay of the target forwarding path is less than or equal to the upper delay threshold, the QoS of the target forwarding path is optimal, the QoS value of the target forwarding path falls within the preset QoS value range, the quantity of transit devices on the target forwarding path is the smallest, the quantity of transit devices on the target forwarding path falls within the preset quantity range, or the network type of the first P2P link in the target forwarding path is the preset network type. The preset network type includes the Wi-Fi network, and the first P2P link is a P2P link connected to the first terminal or a P2P link connected to the second terminal.

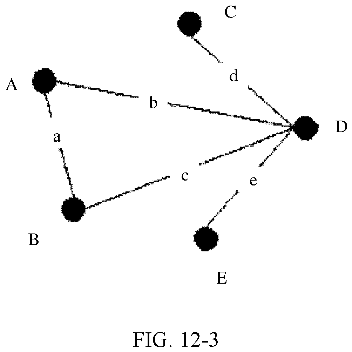

For example, the preset strategy is that an available forwarding path including a P2P link that currently uses the Wi-Fi network is selected as the target forwarding path. As shown in FIG. 12-3, there are two available forwarding paths from A to E. One is A-D-E, and the other is A-B-D-E. Both links A-D and D-E use the cellular network, a link A-B uses the Wi-Fi network, and both links B-D and D-E use the cellular network. In this case, A-B-D-E is selected as the target forwarding path.

In some other embodiments, the preset strategy may alternatively be another strategy. The preset strategy is not limited in this embodiment of this application. For example, the preset strategy may alternatively be that a sum of lengths of links in the forwarding path is the shortest, a packet loss rate is the lowest, or a bandwidth is the largest. The strategies in this embodiment of this application may be used separately or in combination. Various combination manners are not listed one by one in this embodiment of this application due to limited space.

In some other embodiments, the terminal may alternatively select the target forwarding path according to the following rules.

The target forwarding path is a first forwarding path with a lowest delay in the first forwarding paths when a network type of a first link is a preset network type; or

the target forwarding path is a first forwarding path with optimal QoS in the first forwarding paths when a network type of a first link is a preset network type; or
the target forwarding path is a first forwarding path with a smallest quantity of transit devices in the first forwarding paths when a network type of a first link is a preset network type; or
the target forwarding path is a first forwarding path with a lowest delay in first forwarding paths whose QoS values fall within a preset QoS value range; or
the target forwarding path is a first forwarding path with a smallest quantity of transit devices in first forwarding paths whose QoS values fall within a preset QoS value range; or
the target forwarding path is a first forwarding path whose network type is a preset network type in first forwarding paths whose QoS values fall within a preset QoS value range; or
the target forwarding path is a first forwarding path whose network type is a preset network type in first forwarding paths whose delays are less than or equal to a delay threshold; or
the target forwarding path is a first forwarding path with optimal QoS in first forwarding paths whose delays are less than or equal to a delay threshold; or
the target forwarding path is a first forwarding path with a smallest quantity of transit devices in first forwarding paths whose delays are less than or equal to a delay threshold; or
the target forwarding path is a first forwarding path with a lowest delay in first forwarding paths whose quantities of transit devices fall within a preset quantity range; or
the target forwarding path is a first forwarding path with optimal QoS in first forwarding paths whose quantities of transit devices fall within a preset quantity range; or
the target forwarding path is a first forwarding path in first forwarding paths whose quantities of transit devices fall within a preset quantity range when a network type of a first link is a preset network type.

In some other embodiments, that the mobile phone A determines the target forwarding path may be implemented as follows: The mobile phone A calculates a weight of each available forwarding path between a source terminal device and a destination terminal device, and selects one of the available forwarding paths as the target forwarding path based on weights of the available forwarding paths.

A weighted undirected graph may indicate a network topology. A forwarding path in the network topology may be abstracted as an edge in the weighted undirected graph, and each available forwarding path may be abstracted as including a plurality of edges. Each available forwarding path has a corresponding weight value. The weight value of the available forwarding path indicates quality of the available forwarding path. Optionally, the weight value $W$ corresponding to the available forwarding path meets the following relationship: $W = \left( \sum_{j=1}^{M} \sum_{i=1}^{N} p_i * w_i \right)$. Herein, $p_i$ is a quantized value of an $i^{th}$ link level parameter, $w_i$ is a weight corresponding to $p_i$, and N is a quantity of link level parameters. $\sum_{i=1}^{N} p_i * w_i$ is a weight value of a $j^{th}$ P2P link (abstracted as an edge in the weighted undirected graph) in the available forwarding path, and M is a quantity of P2P links (abstracted as edges) included in the available forwarding path. The parameters may be flexibly configured as required.

In some other embodiments, the weight value $W$ of the available forwarding path may alternatively be indicated by using the following formula: $W = \left( \sum_{j=1}^{M} \sum_{i=1}^{N} p_i * w_i \right) + \sum_{j=1}^{L} p_j * w_j$. Herein, $\sum_{j=1}^{M} \sum_{i=1}^{N} p_i * w_i$ has a same definition as that in the foregoing embodiment, $p_j$ is a quantized value of a $j^{th}$ path level parameter, $w_j$ is a weight corresponding to $p_j$, and L is a quantity of path level parameters.

For example, the quantity of path level parameters is 1, and the path level parameter is a quantity of transit devices. The weight value $W$ of the available forwarding path may be indicated by using the following formula: $W = \left( \sum_{j=1}^{M} \sum_{i=1}^{N} p_i * w_i \right) + w_{relay} * n_{relay}$. Herein, $n_{relay}$ is a quantity of transit devices on the forwarding path, and $w_{relay}$ is a weight corresponding to $n_{relay}$.

Both the link level parameter and the path level parameter may affect path quality. A weight value corresponding to each parameter is used to adjust a proportion of each parameter in the overall weight value, to optimize the weight value of the available forwarding path as much as possible.

A target forwarding path between any two points needs to be obtained. In other words, an available forwarding path whose $W$ meets a specific condition is searched for in the weighted undirected graph. Optionally, an available forwarding path whose path quality indicated by a weight value is higher than a threshold in the plurality of available forwarding paths may be obtained through calculation according to a graph algorithm (a Dijskra algorithm, a depth search, a breadth search, a Bellman-Ford algorithm, or the like), and the available forwarding path is used as the target forwarding path.

For example, as shown in FIG. 12-3, the network topology includes five terminal devices: A, B, C, D, and E. The figure shows a weighted undirected graph abstracted from the network topology. In the weighted undirected graph, available paths are abstracted as corresponding edges: an edge a to an edge e, and each edge has a corresponding weight. For example, indicators that affect path selection are a delay, QoS, and a network type. A weight value (weight) (a) of the edge a meets the following relationship: the weight (a) = a delay value of the edge a × w1 + a QoS value × w2 + a quantized value of a network type × w3. For a manner of calculating a weight value of another edge, refer to the manner of calculating the weight value of the edge a.

It is assumed that a target forwarding path between the device A and the device E needs to be determined, and available forwarding paths between the device A and the device E are A->D->E and A->B->D->E. In this case, weight values of the two available forwarding paths are respectively as follows.

A weight value of the available forwarding path A->D->E is: a weight (b) + a weight (e) + a quantity of transit devices × w4, where the quantity of transit devices on the path is 1, and the transit device is the device D.

A weight value of the available forwarding path A->B->D->E is: the weight (a) + a weight (c) + the weight (e) + a quantity of transit devices × w4, where the quantity of transit devices on the path is 2.

It is assumed that the weight value of the available forwarding path A->D->E is the largest, and it is specified that a larger weight value of an available forwarding path indicates higher path quality of the available forwarding path. In this case, the available forwarding path A->D->E is used as the target forwarding path. In this way, a forwarding path with highest path quality can be selected for packet transmission.

It should be noted that, before calculating the target forwarding path, the mobile phone A needs to obtain information related to each available forwarding path, including but not limited to a link level parameter (for example, a delay, a QoS value, or a network type) and/or a path level parameter of the available forwarding path. The information may be sent by the server to the mobile phone A. In a possible implementation, the path query response fed back by the server to the mobile phone A carries information such as the delay, the QoS, or the network type about the available forwarding path. Alternatively, the mobile phone A obtains information such as the delay, the QoS value, or the network type about the available forwarding path in another manner.

Alternatively, in some other cases, the path query response includes no available forwarding path. For example, the available forwarding path list is empty. In this case, the mobile phone A may send data through a path in the conventional technology. To be specific, the data is sent to the server through a relay channel between the mobile phone A and the server, and then the server forwards the data from the mobile phone A to the mobile phone C.

In a possible implementation, the mobile phone A encapsulates the source device identifier (namely, the identifier of the mobile phone A), the destination device identifier (namely, the identifier of the mobile phone C), and a complete target forwarding path or a target subpath (a part of the target forwarding path) into a to-be-sent packet, and sends the to-be-sent packet to a next-hop terminal (for example, the mobile phone B). As mentioned above, the target forwarding path includes the M P2P links. A source node of the target forwarding path is the first terminal, and a destination node of the target forwarding path is the second terminal. Herein, the target subpath includes (M-1) neighboring P2P links in the M P2P links. A source node of the target subpath is a next-hop terminal of the first terminal, and a destination node of the target subpath is the second terminal. In other words, when sending the packet to the next-hop mobile phone (for example, the mobile phone B), the mobile phone A may encapsulate the complete target forwarding path in the packet, or may encapsulate only a latter part of the target forwarding path, provided that the next-hop mobile phone (for example, the mobile phone B) can continue to forward the packet. For example, the mobile phone A may encapsulate, in the packet sent to the mobile phone B (not a destination node of the packet), an identifier of a next-hop mobile phone of the mobile phone B and identifiers of several hops of mobile phones after the next-hop mobile phone.

For example, the complete target forwarding path is encapsulated in the to-be-sent data. A format of data obtained through encapsulation is shown in Table 5.

**Table 5**

| Key field | Field meaning |
| --- | --- |
| srcDeviceId | Source device identifier |
| destDeviceId | Destination device identifier |
| path | Target forwarding path (A-B-C) |
| data | Data-plane packet content |

Herein, the data is the data-plane packet content, for example, audio data collected by a microphone of the mobile phone A and/or image data collected by a camera, and srcDeviceId, destDeviceId, and path may be encapsulated in a packet header or a packet body. This is not limited in this embodiment of this application.

For a format of the target forwarding path, refer to a form of the available forwarding path. For example, the target forwarding path may be an ordered sequence of device identifiers included in the forwarding path. For example, the target forwarding path between the mobile phone A and the mobile phone C is A-B-C shown in FIG. 12-1A.

For another example, a part of the target forwarding path is encapsulated in to-be-sent data. A format of data obtained through encapsulation is shown in Table 6.

**Table 6**

| Key field | Field meaning |
|---|---|
| srcDeviceId | Source device identifier |
| destDeviceId | Destination device identifier |
| part of path | Part of the target forwarding path (B-C) |
| data | Data-plane packet content |

It can be learned that, in the manner shown in Table 6, the part of the complete target forwarding path is encapsulated in the packet, to complete addressing in a packet forwarding process, so that sending overheads of a sending terminal can be reduced, and processing overheads of a receiving terminal can be reduced.

For a transit terminal (for example, a third terminal) on the target forwarding path, the third terminal may receive a packet sent by the first terminal to the second terminal through the target forwarding path, where the packet carries a second forwarding path; and the third terminal sends the packet through the second forwarding path.

The third terminal is located on the target forwarding path, and the second forwarding path is the target forwarding path or a target subpath. The target forwarding path is used to carry the packet between the first terminal and the second terminal, and the target forwarding path includes M P2P links. A source node of the target forwarding path is the first terminal, and a destination node of the target forwarding path is the second terminal. The target subpath includes N neighboring P2P links in the M P2P links. A source node of the target subpath is the third terminal, and a destination node of the target subpath is the second terminal. M is an integer greater than or equal to 2, N is a positive integer, and N is less than M. FIG. 12-3 is used as an example. It is assumed that a target forwarding path between the terminal A and the terminal E is A-B-D-E. For a transit terminal D, the terminal D is located on the target forwarding path. The terminal D receives a packet from the terminal B, and the packet may carry the complete target forwarding path, namely, A-B-D-E. A source node of the target forwarding path is the terminal A (namely, a source terminal), a destination node is the terminal E (namely, a destination terminal), and the target forwarding path includes M = 3 P2P links. The packet received by the terminal D from the terminal B may alternatively carry a part (namely, the target subpath) of the target forwarding path, for example, carry D-E. A source node of the target subpath is the terminal D, a destination node is the terminal E, and the target subnode includes N = 1 P2P link (namely, the P2P link from the terminal D to the terminal E) in the target forwarding path (A-B-D-E).

For another example, for a transit terminal B, the packet received by the transit terminal B from the terminal A may carry the target forwarding path (A-B-D-E). Alternatively, the packet received by the transit terminal B from the terminal A carries the target subpath (B-D-E). It can be learned that the target subpath includes N = 2 neighboring P2P links (namely, the P2P link from the terminal B to the terminal D and the P2P link from the terminal D to the terminal E) in the target forwarding path.

4b: The mobile phone B forwards the data from the mobile phone A to the mobile phone C based on the target forwarding path.

It is easy to understand that after receiving the data from the mobile phone A, the mobile phone B parses the data and determines whether the mobile phone B is a destination device. If the mobile phone B is the destination device, the mobile phone B receives and processes the packet. Otherwise, the mobile phone B forwards the data from the mobile phone A to a next-hop device of the mobile phone B based on the target forwarding path.

In some other embodiments, the target forwarding path may alternatively be determined by the server.

In a possible implementation, the server selects one target forwarding path from a plurality of available forwarding paths based on a preset parameter.

For descriptions of the preset parameter, refer to the foregoing embodiment.

In another possible implementation, that the server selects the first forwarding path from a plurality of available forwarding paths based on a preset parameter includes: selecting the first forwarding path from the plurality of available forwarding paths based on the preset parameter and a preset strategy. For descriptions of the preset strategy, refer to the foregoing embodiment.

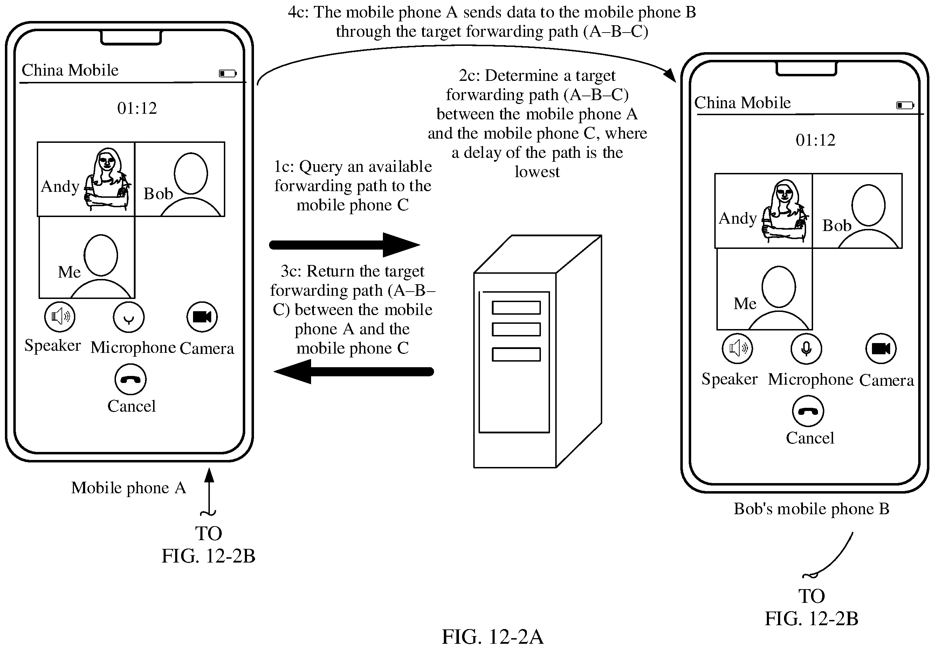

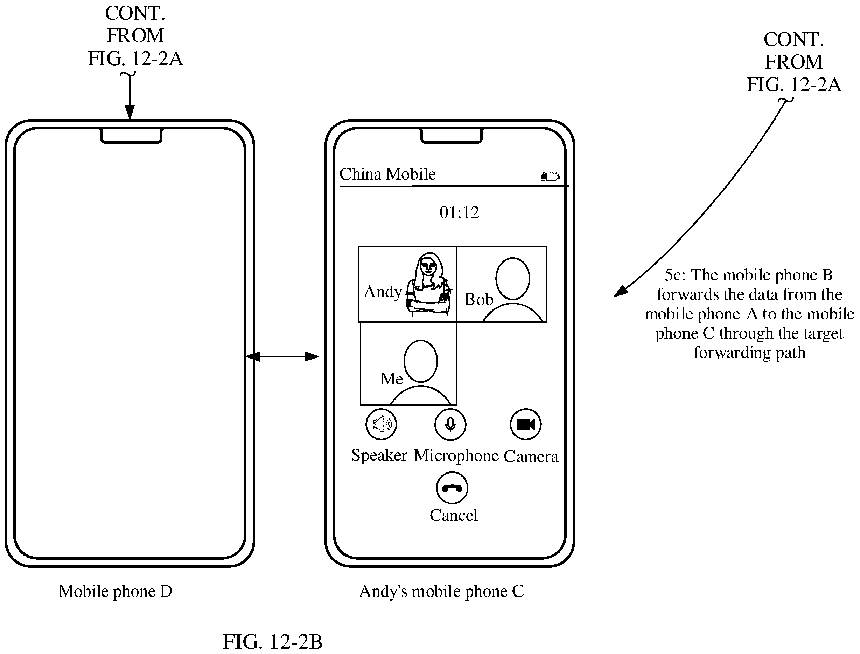

Specifically, as mentioned above, the terminal device may report the preset strategy to the server. For example, the terminal encapsulates, in a same message, the preset strategy and the P2P connection establishment result (for example, the delay and the QoS of the P2P link). Alternatively, the terminal may encapsulate, in different messages, the P2P connection establishment result and the preset strategy. For example, the preset strategy may be encapsulated in the path query request. In this case, the server may determine the target forwarding path between the source terminal device and the destination terminal device based on the preset strategy reported by the terminal device. For example, as shown in FIG. 12-2A, a preset strategy reported by the mobile phone A to the server is that a forwarding path with a lowest delay is select for data transmission. In this case, in response to available forwarding paths of the mobile phone C found by the mobile phone A, the server selects, as the target forwarding path, one of the available forwarding path A-B-C and the available forwarding path A-D-C between the mobile phone A and the mobile phone C. Because a delay of the forwarding path A-B-C in the available forwarding paths is lower, the server uses the forwarding path A-B-C as the target forwarding path between the mobile phone A and the mobile phone C, and sends the target forwarding path to the mobile phone A. In this way, the mobile phone A may send data to the mobile phone C through the target forwarding path A-B-C. In other words, mobile phone B is used as a relay. The mobile phone C may also send the data to the mobile phone A through the mobile phone B based on the target forwarding path.

In this embodiment of this application, the server determines the forwarding path between the mobile phone A and the mobile phone C by referring to the preset strategy of the mobile phone A and simultaneously combining the preset strategy reported by the mobile phone C.

In another possible implementation, the server may alternatively select the target forwarding path based on a weight value of each available forwarding path.

Each available forwarding path has a corresponding weight value, and the weight value indicates quality of the available forwarding path.

Optionally, the weight value $W$ of the available forwarding path meets the following relationship:

$$W = \sum_{j=1}^{M} \sum_{i=1}^{N} p_i * w_i .$$

Herein, $p_i$ is a quantized value of an $i^{th}$ link level parameter, $w_i$ is a weight corresponding to $p_i$, and N is a quantity of link level parameters. $\sum_{i=1}^{N} p_i * w_i$ is a weight of a $j^{th}$ P2P link in the available forwarding path, and M is a quantity of P2P links included in the available forwarding path.

The first forwarding path is an available forwarding path whose path quality indicated by a weight value is greater than a threshold in the plurality of available forwarding paths.

Alternatively, optionally, the weight value $W$ of the available forwarding path meets the following relationship:

$$W = \sum_{j=1}^{M} \sum_{i=1}^{N} p_i * w_i + w_{relay} * n_{relay} .$$

Herein, $p_i$ is a quantized value of an $i^{th}$ link level parameter, $w_i$ is a weight corresponding to $p_i$, and N is a quantity of link level parameters. $\sum_{i=1}^{N} p_i * w_i$ is a weight of a $j^{th}$ P2P link in the available forwarding path, M is a quantity of P2P links included in the available forwarding path, $n_{relay}$ is a path level parameter of the available forwarding path, and $w_{relay}$ is a weight corresponding to $n_{relay}$.

The first forwarding path is an available forwarding path whose path quality indicated by a weight value is greater than a threshold in the plurality of available forwarding paths.

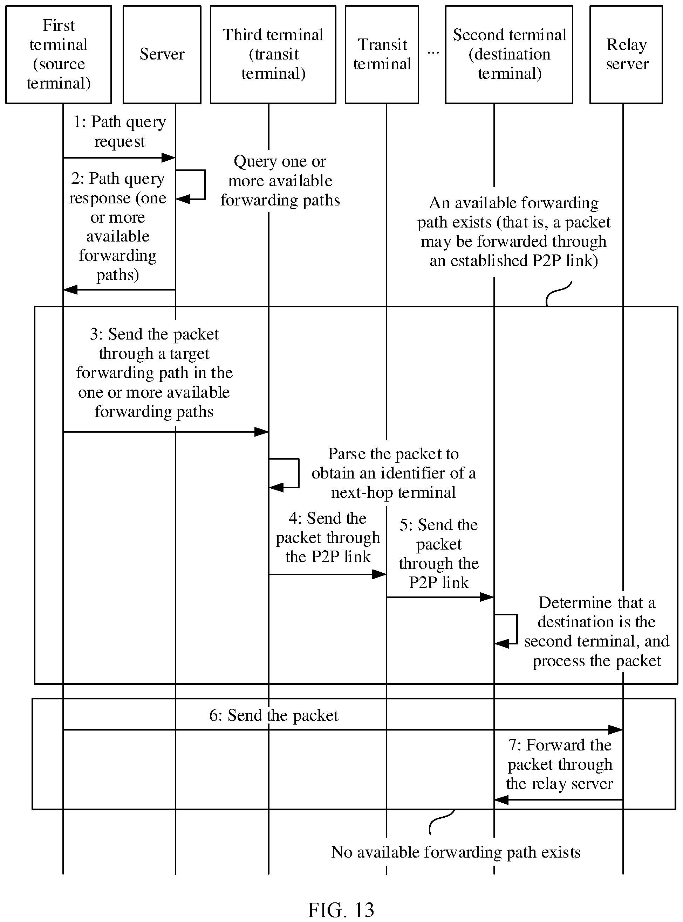

The method procedures corresponding to FIG. 12-1A and FIG. 12-1B and FIG. 12-2A and FIG. 12-2B may alternatively be indicated by FIG. 13. For specific descriptions, refer to the embodiments corresponding to FIG. 12-1A and FIG. 12-1B and FIG. 12-2A and FIG. 12-2B. Details are not described herein again.

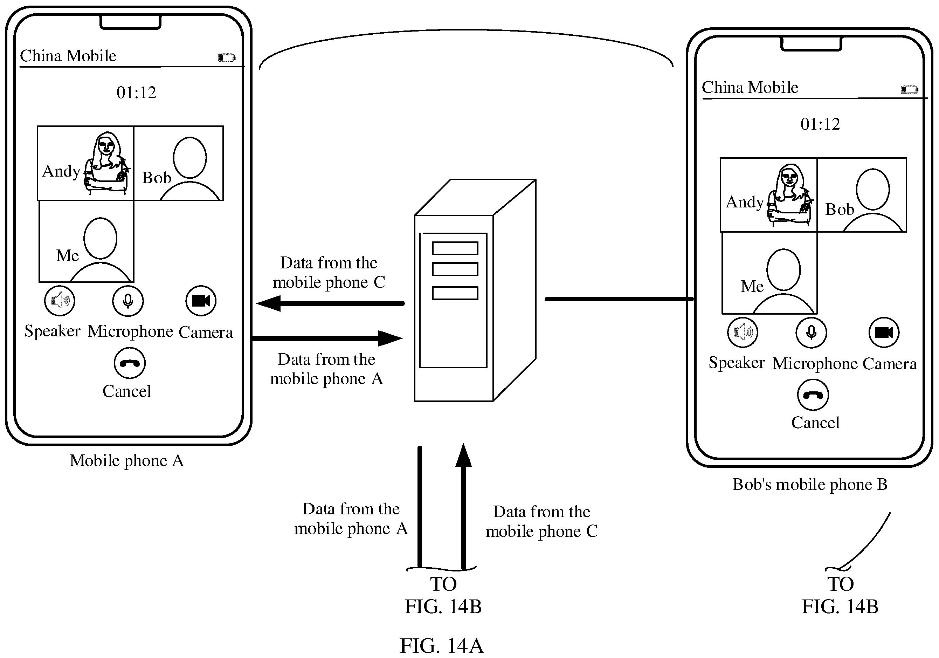

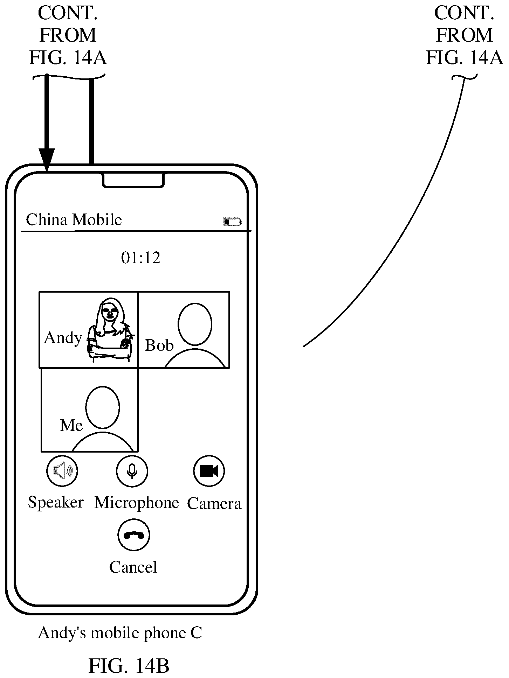

It can be learned that, compared with that in FIG. 14A and FIG. 14B, when no P2P connection is successfully established between the mobile phone A and the mobile phone C, data between the mobile phone A and the mobile phone C needs to be forwarded through the server, and a large quantity of resources such as a bandwidth of the server are consumed, in the video call method provided in this embodiment of this application, data between the mobile phone A and the mobile phone C may be forwarded through the P2P connection between the mobile phone A and the mobile phone B and the P2P connection between the mobile phone B and the mobile phone C, and the server is not required for data forwarding. Therefore, a quantity of servers to be deployed can be reduced, and networking complexity and networking costs are greatly reduced.

In this embodiment of this application, the server and each terminal may be divided into functional modules based on the foregoing method examples. For example, each functional module may be obtained through division for a corresponding function, or two or more functions may be integrated into one processing module. The integrated module may be implemented in a form of hardware, or may be implemented in a form of a software functional module. It should be noted that, in this embodiment of this application, module division is an example, and is merely logical function division. In actual implementation, another division manner may be used.

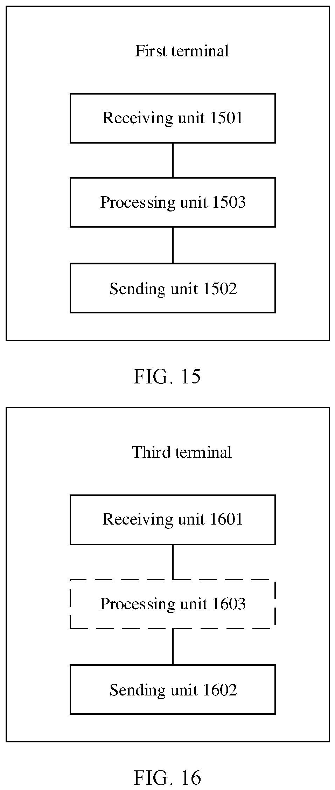

When an integrated unit is used, FIG. 15 is a possible schematic diagram of a structure of a communication apparatus related to the foregoing embodiments. The apparatus may be a first terminal or a component (for example, a chip system of a first terminal) that can be used together with the first terminal to implement a function of the first terminal. For example, the apparatus is the first terminal. The apparatus may include a sending unit 1502, a receiving unit 1501, and a processing unit 1503.

The sending unit 1502 is configured to send a path query request to a server, where the path query request is used to request at least one first forwarding path, and each of the at least one first forwarding path is used to carry a packet between the first terminal and a second terminal.

The receiving unit 1501 is configured to receive a path query response from the server, where the path query response indicates the at least one first forwarding path, and each of the at least one first forwarding path includes a plurality of established point-to-point P2P links in multi-party communication.

The sending unit 1502 is further configured to send the packet through a target forwarding path in the at least one first forwarding path.

In a possible design, there is one first forwarding path.

In a possible design, there are a plurality of first forwarding.

The processing unit 1503 is configured to select the target forwarding path from the plurality of first forwarding paths based on a preset parameter.

For descriptions of the preset parameter, refer to the foregoing method embodiment.

In a possible design, the selecting the target forwarding path from the plurality of first forwarding paths based on a preset parameter includes:

selecting the target forwarding path from the plurality of first forwarding paths based on the preset parameter and a preset strategy.

For descriptions of the preset strategy, refer to the foregoing method embodiment.

In a possible design, the target forwarding path is a first forwarding path with a lowest delay in the first forwarding paths when a network type of a first P2P link is a preset network type; or

the target forwarding path is a first forwarding path with optimal QoS in the first forwarding paths when a network type of a first P2P link is a preset network type; or
the target forwarding path is a first forwarding path with a smallest quantity of transit devices in the first forwarding paths when a network type of a first P2P link is a preset network type; or
the target forwarding path is a first forwarding path with a lowest delay in first forwarding paths whose QoS values fall within a preset QoS value range; or
the target forwarding path is a first forwarding path with a smallest quantity of transit devices in first forwarding paths whose QoS values fall within a preset QoS value range; or
the target forwarding path is a first forwarding path in first forwarding paths whose QoS values fall within a preset QoS value range when a network type of a first P2P link is a preset network type; or
the target forwarding path is a first forwarding path in first forwarding paths whose delays are less than or equal to a delay threshold when a network type of a first P2P link is a preset network type; or
the target forwarding path is a first forwarding path with optimal QoS in first forwarding paths whose delays are less than or equal to a delay threshold; or
the target forwarding path is a first forwarding path with a smallest quantity of transit devices in first forwarding paths whose delays are less than or equal to a delay threshold; or
the target forwarding path is a first forwarding path with a lowest delay in first forwarding paths whose quantities of transit devices fall within a preset quantity range; or
the target forwarding path is a first forwarding path with optimal QoS in first forwarding paths whose quantities of transit devices fall within a preset quantity range; or
the target forwarding path is a first forwarding path in first forwarding paths whose quantities of transit devices fall within a preset quantity range when a network type of a first P2P link is a preset network type.

In a possible design, each of the plurality of first forwarding paths has a corresponding weight value, the weight value of the first forwarding path indicates quality of the first forwarding path, and the weight value $W$ of the first forwarding path meets the following relationship: $W = \sum_{j=1}^{M} \sum_{i=1}^{N} p_i * w_i$.

Herein, $p_i$ is a quantized value of an $i^{th}$ link level parameter, $w_i$ is a weight corresponding to $p_i$, N is a quantity of link level parameters, $\sum_{i=1}^{N} p_i * w_i$ is a weight of a j<sup>th</sup> P2P link in the first forwarding path, and M is a quantity of P2P links included in the first forwarding path.

The target forwarding path is a first forwarding path whose path quality indicated by a weight value is greater than a threshold in the plurality of first forwarding paths.

In a possible design, each first forwarding path has a corresponding weight value, the weight value of the first forwarding path indicates quality of the first forwarding path, and the weight value *W* of the first forwarding path meets the following relationship: $W = \sum_{j=1}^{M} \sum_{i=1}^{N} p_i * w_i + w_{relay} * n_{relay}$ .

Herein, $p_i$ is a quantized value of an i<sup>th</sup> link level parameter, $w_i$ is a weight corresponding to $p_i$, N is a quantity of link level parameters, $\sum_{i=1}^{N} p_i * w_i$ is a weight of a j<sup>th</sup> P2P link in the first forwarding path, and M is a quantity of P2P links included in the first forwarding path; and

$n_{relay}$ is a quantized value of the path level parameter of the first forwarding path, and $w_{relay}$ is a weight corresponding to $n_{relay}$.

The target forwarding path is a first forwarding path whose path quality indicated by a weight value is greater than a threshold in the plurality of first forwarding paths.

In a possible design, the packet carries the target forwarding path or a target subpath.

The target forwarding path includes M P2P links, a source node of the target forwarding path is the first terminal, and a destination node of the target forwarding path is the second terminal. The target subpath includes (M-1) neighboring P2P links in the M P2P links, a source node of the target subpath is a next-hop terminal of the first terminal, and a destination node of the target subpath is the second terminal. M is an integer greater than or equal to 2.

FIG. 16 shows another communication apparatus according to an embodiment of this application. The apparatus may be a third terminal or may be a component (for example, a chip system of a third terminal) that is used together with the third terminal to implement a function of the third terminal. For example, the apparatus is the third terminal. The third terminal is located on a target forwarding path, and the third terminal may include a receiving unit 1601 and a sending unit 1602.

The receiving unit 1601 is configured to receive a packet sent by a first terminal to a second terminal through the target forwarding path, where the packet carries a second forwarding path. The second forwarding path is the target forwarding path or a target subpath, the target forwarding path is used to carry the packet between the first terminal and the second terminal, and the target forwarding path includes M P2P links. A source node of the target forwarding path is the first terminal, and a destination node of the target forwarding path is the second terminal. The target subpath includes N neighboring P2P links in the M P2P links. A source node of the target subpath is the third terminal, and a destination node of the target subpath is the second terminal. M is an integer greater than or equal to 2, N is a positive integer, and N is less than M.

The sending unit 1602 is configured to send the packet based on the second forwarding path.

Optionally, the apparatus further includes a processing unit 1603, configured to control an action of the apparatus, for example, control the receiving unit 1601 to perform a receiving action.

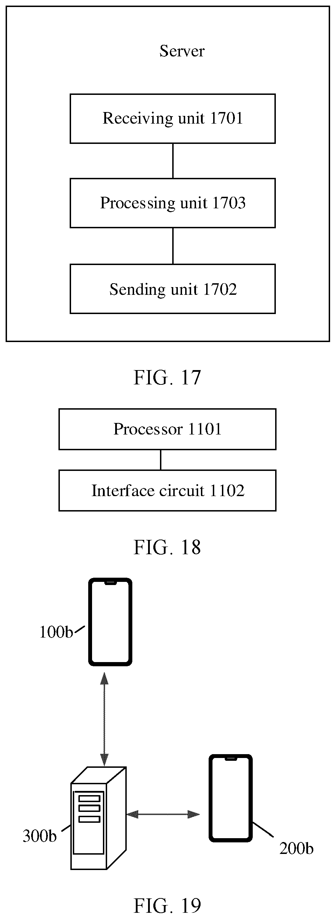

FIG. 17 shows another communication apparatus according to an embodiment of this application. The apparatus may be a server or may be a component (for example, a chip in a server) that is used together with the server to implement a function of the server. The apparatus includes a receiving unit 1701, a sending unit 1702, and a processing unit 1703.

The receiving unit 1701 is configured to receive a path query request from a first terminal, where the path query request is used to request at least one first forwarding path, and each of the at least one first forwarding path is used to carry a packet between the first terminal and a second terminal

The sending unit 1702 is configured to send a path query response to the first terminal in response to the path query request, where the path query response indicates the at least one first forwarding path, and each first forwarding path includes a plurality of established P2P links in multi-party communication.

In a possible design, there are a plurality of first forwarding paths.

In a possible design, there is one first forwarding path.

The processing unit 1703 is configured to select the first forwarding path from a plurality of available forwarding paths based on a preset parameter, where the available forwarding path is a forwarding path that is used to carry the packet between the first terminal and the second terminal.

In a possible design, the selecting the first forwarding path from a plurality of available forwarding paths based on a preset parameter includes:

selecting the first forwarding path from the plurality of available forwarding paths based on the preset parameter and a preset strategy.

In a possible design, each available forwarding path has a corresponding weight value, the weight value indicates quality of the available forwarding path, and the weight value *W* of the available forwarding path meets the following relationship: $W = \sum_{j=1}^{M} \sum_{i=1}^{N} p_i * w_i$ .

Herein, $p_i$ is a quantized value of an $i^{th}$ link level parameter, $w_i$ is a weight corresponding to $p_i$, N is a quantity of link level parameters, $\sum_{i=1}^{N} p_i * w_i$ is a weight of a $j^{th}$ P2P link in the available forwarding path, and M is a quantity of P2P links included in the available forwarding path.

The first forwarding path is an available forwarding path whose path quality indicated by a weight value is greater than a threshold in the plurality of available forwarding paths.

In a possible design, each available forwarding path has a corresponding weight value, the weight value indicates quality of the available forwarding path, and the weight value *W* of the available forwarding path meets the following relationship: $W = \sum_{j=1}^{M} \sum_{i=1}^{N} p_i * w_i + w_{relay} * n_{relay}$.

Herein, $p_i$ is a quantized value of an $i^{th}$ link level parameter, $w_i$ is a weight corresponding to $p_i$, N is a quantity of link level parameters, $\sum_{i=1}^{N} p_i * w_i$ is a weight of a $j^{th}$ P2P link in the available forwarding path, M is a quantity of P2P links included in the available forwarding path, $n_{relay}$ is a quantized value of the path level parameter of the available forwarding path, and $w_{relay}$ is a weight corresponding to $n_{relay}$.

The first forwarding path is an available forwarding path whose path quality indicated by a weight value is greater than a threshold in the plurality of available forwarding paths.

In a possible design, the receiving unit 1701 is further configured to receive, from each terminal that establishes the P2P link in the multi-party communication, a link level parameter corresponding to the connected P2P link.

In a possible design, the receiving unit 1701 is further configured to receive the preset strategy from the first terminal.

Optionally, each of the apparatuses shown in FIG. 15 to FIG. 17 may further include a storage unit (not shown in the figures), configured to store data, a program, or the like required by the apparatus. The receiving unit and the sending unit in the foregoing embodiments may be disposed through integration, or may be disposed separately.

The receiving units and the sending units shown in FIG. 15 to FIG. 16 may be implemented by using the mobile communication module 150 and the wireless communication module 160 shown in FIG. 4. The processing unit may be implemented by using the processor 110 shown in FIG. 4. The storage unit may be implemented by using, for example, a memory.

The receiving unit and the sending unit shown in FIG. 17 may be implemented by using, for example, the transceiver 404 shown in FIG. 6-1. The processing unit may be implemented by using, for example, the processor 401 and/or the processor 408 shown in FIG. 6-1. The storage unit may be implemented by using the memory 403 shown in FIG. 6-1. In some other embodiments, optionally, the processing unit shown in FIG. 17 may implement functions of the path query module 302 and the path management module 301 shown in FIG. 6-2.

An embodiment of this application further provides a chip system. As shown in FIG. 18, the chip system includes at least one processor 1101 and at least one interface circuit 1102. The processor 1101 and the interface circuit 1102 may be interconnected through a line. For example, the interface circuit 1102 may be configured to receive a signal from another apparatus (for example, a memory). For another example, the interface circuit 1102 may be configured to send a signal to another apparatus (for example, the processor 1101). For example, the interface circuit 1102 may read instructions stored in the memory, and send the instructions to the processor 1101. The chip system may be applied to a terminal or a server. When the chip system is applied to the first terminal, and the instructions are executed by the processor 1101, the first terminal is enabled to perform the steps performed by the first terminal in the foregoing embodiment. When the chip system is applied to the third terminal, and the instructions are executed by the processor 1101, the third terminal is enabled to perform the steps performed by the second terminal in the foregoing embodiment. When the chip system is applied to the server, and the instructions are executed by the processor 1101, the server is enabled to perform the steps performed by the server in the foregoing embodiments. Certainly, the chip system may further include another discrete device. This is not specifically limited in this embodiment of this application.

An embodiment of this application further provides a computer-readable storage medium. The computer-readable storage medium includes a computer program or instructions. When the computer program or the instructions are run on a computer, the computer is enabled to perform the communication method in the foregoing method embodiment.

An embodiment of this application provides a computer program product, including a computer program or instructions. When the computer program or the instructions are run on a computer, the computer is enabled to perform the communication method in the foregoing method embodiment.

An embodiment of this application further provides a communication method. FIG. 19 is a schematic diagram of an architecture of a possible communication system to which the method is applicable. Specifically, the communication system includes a terminal 100b, a terminal 200b, and a server 300b.

In some embodiments, the server 300b is an application server. One or more applications may be installed on the terminal 100b, and the installed applications may correspond to one or more application servers. In other words, the applications of the terminal 100b may communicate with the one or more application servers. For example, the application server may be a server of a voice/video call application that may provide a voice/video call function for the terminal 100b, or the like.

In this embodiment of this application, the voice/video call function is a voice call function or a video call function. The video call function usually includes the voice call function. To be specific, during a video call, a user of the video call can see an image of the other party and hear a voice of the other party.

Specifically, the terminal 100b may establish a connection to the server 300b by using one or more networks. The network may be a local area network (local area network, LAN), or may be a wide area network (wide area network, WAN), for example, the Internet. The network may be implemented by using any known network communication protocol. The network communication protocol may be various wired or wireless communication protocols, for example, the Ethernet, a universal serial bus (universal serial bus, USB), FireWire (FireWire), any cellular network communication protocol (for example, 3G/4G/5G/future communication technologies), Bluetooth, wireless fidelity (wireless fidelity, Wi-Fi), NFC, or any other appropriate communication protocol.

Similarly, the terminal 200b may also establish a connection to the server 300b by using one or more networks. For a type of the network and the communication protocol used by the network, refer to the network used by the terminal 100b to connect to the server 300b.

In this embodiment of this application, the provided communication method is mainly described by using a voice/video call application as an example. The voice/video call application may be, for example, but is not limited to, a MeeTime application, a WeChat application, facetime (a type of voice/video call software), and another application having a video call function.

In this embodiment of this application, both the terminal 100b and the terminal 200b may determine and report status information corresponding to the terminal 100b and the terminal 200b to the server 300b. The status information corresponding to the terminal is used to reflect a status of the terminal (for example, a low battery level) and/or reflect a status of a user using the terminal (for example, sleeping or exercising). In other words, the status information corresponding to the terminal includes status information of the terminal and/or status information of the user of the terminal. Subsequently, in a call process, the terminal 100b and the terminal 200b may separately obtain status information of each other from the server, to perform a subsequent operation based on the status information of each other.

That the terminal determines the status information may be that the terminal determines the status information by using data collected by hardware, for example, a wearable device, a sensor, or another device, or the terminal determines the status information by using data collected by software (for example, the MeeTime application).

An example in which the terminal 100b initiates a video call to the terminal 200b is used. For example, when a user of the terminal 200b is taking a bath, and it is inconvenient to answer the call at this moment, the user may set status information to "taking a bath" by using the terminal 200b, and report the status information to the server 300b. In this case, when calling the terminal 200b, the terminal 100b may obtain the status information corresponding to the terminal 200b from the server 300b, that is, the user is taking a bath. The terminal 100b may further display the status information to a user of the terminal 100b in a display manner such as a text, a voice, or a picture. It can be learned that the terminal 100b may prompt the user with the status information that corresponds to the terminal 200b and that can be reflected, that is, the user is taking a bath. It can be learned that information obtained by the terminal 100b is no longer limited to a single preselected multimedia resource, so that audio-visual requirements of the user can be met to a great extent. In addition, the user of the terminal 100b may know a current status of the user of the terminal 200b based on the status information prompted by the terminal 100b. In this case, the user of the terminal 100b may leave a message or make a call later based on the current status of the user of the terminal 100b. In this way, communication efficiency can be improved.

For example, the terminal 100b has a call capability and an Internet access capability. The terminal 100b may be, for example, a mobile phone, a tablet computer, HUAWEI Vision (smart television), a personal computer (personal computer, PC), a personal digital assistant (personal digital assistant, PDA), a smart watch, a netbook, a wearable electronic device, an augmented reality (augmented reality, AR) device, a virtual reality (virtual reality, VR) device, a vehicle-mounted device, an intelligent vehicle, a smart speaker, or a robot. A specific form of the terminal 100b is not specially limited in this application. The terminal 200b and the terminal 100b may be of a same type or different types. For example, the terminal 100b is a mobile phone, and the terminal 200b is a tablet. For a structure of the terminal 200b, refer to that of the terminal 100b. Details are not described again. The call capability is not limited to a call provided by an operator (for example, a call is made by using a phone number), or may include a voice over internet protocol (voice over internet protocol, VoIP) call provided by a mobile phone manufacturer or a third-party company (over the top, OTT).

For a schematic diagram of a hardware structure of the terminal 100b, refer to FIG. 4. Details are not described again.

In some embodiments of this application, the terminal 100b may be connected to an external device through the USB interface 130, to implement data communication between the terminal 100b and the external device. Certainly, the terminal 100b may alternatively be connected to an external device through another interface, or the terminal 100b may be connected to an external device in a wireless connection manner. In this embodiment of this application, the terminal 100b may collect sensing data by using one or more external devices, and determine, based on the sensing data, status information corresponding to the terminal 100b. The status information corresponding to the terminal is provided for a communication peer end of the terminal.

In some embodiments, the terminal 100b may establish a wireless connection to the external device through the wireless communication unit 160 and the antenna 2, to implement data communication between the terminal 100b and the external device.

A software system of the terminal 100b may use a layered architecture, an event-driven architecture, a microkernel architecture, a microservice architecture, or a cloud architecture. In this embodiment of the present invention, the Android system with the layered architecture is used as an example to describe a software structure of the terminal 100b.

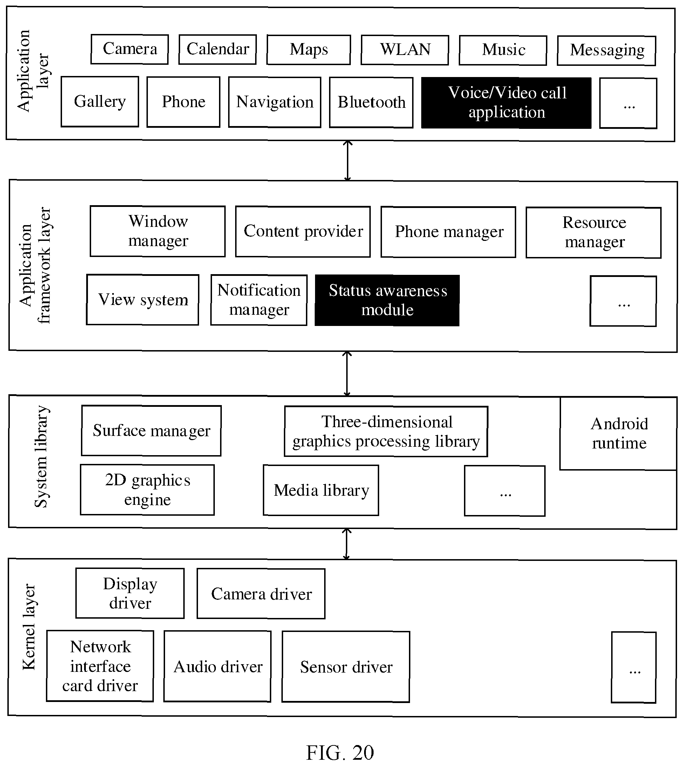

FIG. 20 is a block diagram of a software architecture of the terminal 100b according to an embodiment of the present invention. For a block diagram of a software architecture of the terminal 200b, refer to the block diagram of the software architecture of the terminal 100b.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 20, the application packages may include applications such as Camera, Gallery, Calendar, Phone, Maps, Navigation, WLAN, Bluetooth, Music, Videos, and Messaging.

In some embodiments of this application, the application package further includes a voice/video call application having a voice/video call function, for example, a MeeTime application, a WeChat application, a QQ application, and facetime. The voice/video call application may be an application preset in the terminal 100b, or may be an application integrated in a system, or may be an application downloaded by a user from an application market or in another manner. The voice/video call application is not limited in this embodiment of this application.

The application further includes an application that can record status information. A user can set status information by using this type of application. The status information includes user status information used to reflect a user status, and terminal status information used to reflect a terminal status. The user status information of the terminal includes at least one piece of the following information: a location of the user, time, environment information, an activity performed by the user, a health condition, or a mood. The terminal status information includes, but is not limited to, at least one piece of the following information: a battery level of the terminal, signal quality, a location, or environment information. Specific content of the status information is not limited in this embodiment of this application. For example, the user inputs pieces of status information of the user on an interface of the application, that is, "On vacation, do not disturb", "Reading", "Eating", "Off work, do not want to answer a call", "Contact my secretary if you have something to do with it", "Add a new batch of dishes, come to taste", "Nice day", "I am in a good mood at this moment", and "Vanke is about to open, contact me if necessary".

The application that can record status information may be an application preinstalled in the terminal 100b, or may be an application subsequently downloaded from, for example, a third-party application store. This is not limited in this embodiment of this application. For example, the application that can record status information may be the MeeTime application, Notes, Notepad, or the like.

The application framework layer provides an application programming interface (application programming interface, API) and a programming framework for an application at the application layer. The application framework layer includes some predefined functions.

As shown in FIG. 20, the application framework layer may include a window manager, a content provider, a view system, a phone manager, a resource manager, a notification manager, and the like.

The window manager is configured to manage a window program. For specific descriptions, refer to the texts corresponding to FIG. 5.

In some embodiments of this application, the application framework layer may further include a status awareness (statement awareness) module. The status awareness module may be configured to monitor various types of environment change information of the terminal 100b, sensor data, running data of the terminal, status data set by a user by using an application (such as the MeeTime APP), change information of user behavior, and the like, to determine status information. Then, the status awareness module may invoke a corresponding module (for example, a WLAN chip included in the wireless communication unit 160) of the terminal 100b through a driver (for example, a WLAN driver) at the kernel layer, to report the status information to the server through the module (for example, the WLAN chip).

The Android runtime includes a kernel library and a virtual machine. The system library may include a plurality of functional modules. For specific descriptions of the system library, refer to the embodiment corresponding to FIG. 5.

The kernel layer is a layer between hardware and software. The kernel layer includes at least a display driver, a camera driver, an audio driver, and a sensor driver.

It should be noted that, for a structure of the server 300b, refer to the structure of the terminal 100a in FIG. 4. The server 300b may have more or fewer components than the structure shown in FIG. 4, or some components may be combined, or some components may be split, or different component arrangements may be used. The components shown in the figure may be implemented by hardware, software, or a combination of software and hardware.

For example, in an example, for the structure of the server 300b, refer to FIG. 6-1.

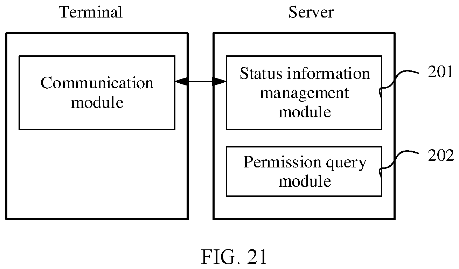

FIG. 21 is a schematic diagram of another structure of the server 300b. The server 300b includes a status information management module 201 and a permission query module 202.

The status information management module 201 of the server is configured to exchange, with a communication unit (for example, a WLAN module) of the terminal, content related to status information. For example, the status information management module 201 is configured to receive, from the terminal, status information of the terminal or status information of a user using the terminal. For another example, the status information management module 201 is further configured to receive, from a first terminal, a query request for querying status information corresponding to a second terminal (including status information of the second terminal and/or status information of a user using the second terminal).

The permission query module 202 is configured to query a permission of the first terminal, that is, whether the first terminal has a permission to access the status information corresponding to the second terminal.

The status information management module 201 is further configured to: when the first terminal has the permission to access the status information corresponding to the second terminal, feed back the status information corresponding to the second terminal to the first terminal.

The following describes in detail the technical solutions in embodiments of this application by using an example in which both the terminal 100b and the terminal 200b are mobile phones.

In some embodiments of this application, a terminal may obtain, in response to an instruction input by a user, status information corresponding to the terminal. Specifically, the terminal receives a status input instruction input by the user, where the status input instruction is used to input status information corresponding to the first terminal, and obtains, based on the status input instruction, the status information corresponding to the first terminal. For example, the user may input the status input instruction by using some applications in the mobile phone, and set status information. For example, the status information of the user, that is, a location of the user, a surrounding environment, an activity performed by the user, or a mood of the user, may be set. Certainly, the user may also set the status information of the terminal by using an application.

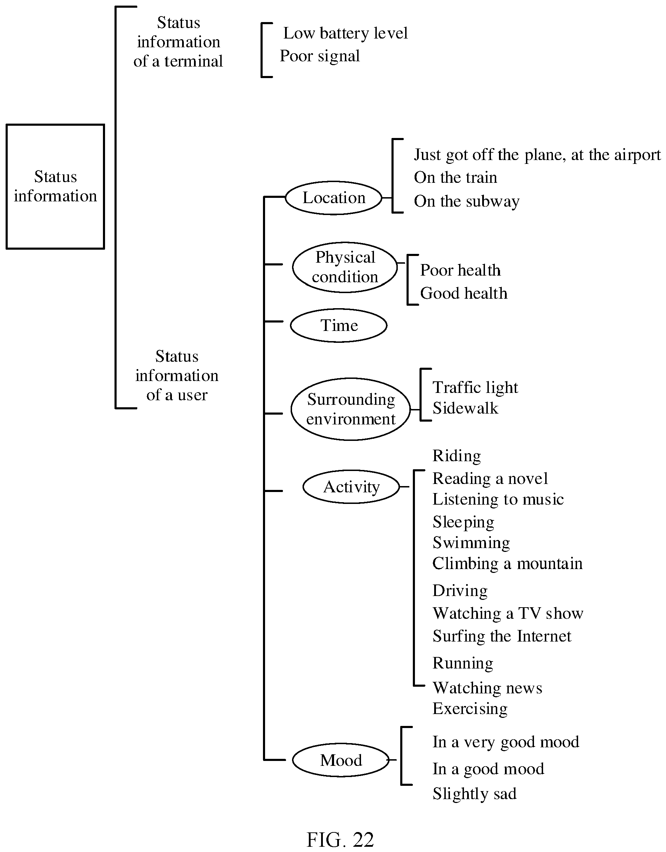

As shown in FIG. 22, several types of status information are listed. Alternatively, there may be other types of status information. Specific content of the status information is not limited in this embodiment of this application.

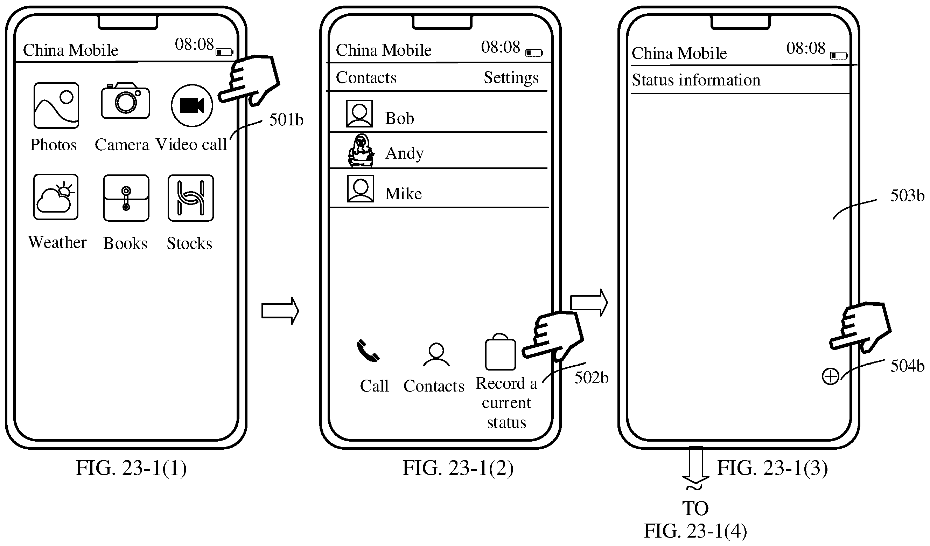

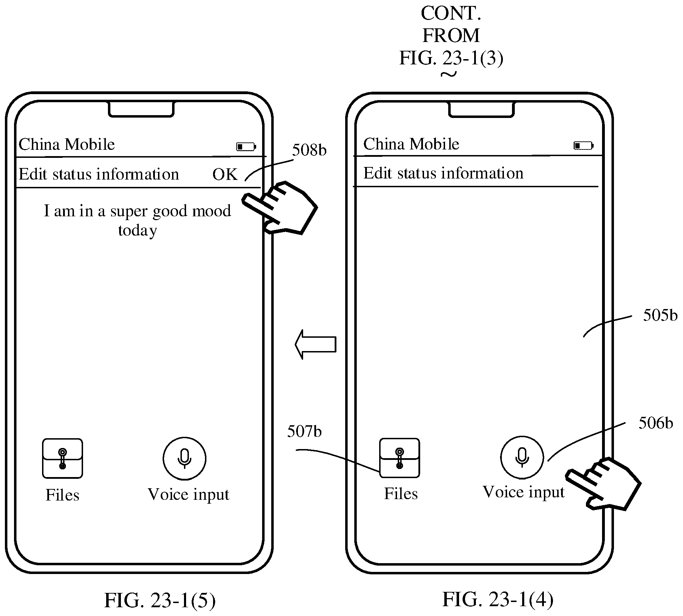

For example, the user may input the status information of the user on an operation interface of the MeeTime application. For example, as shown in FIG. 23-1(1), the user triggers, by performing an operation such as tapping a MeeTime application icon on an interface 501b, the mobile phone to display an application main interface shown in FIG. 23-1(2). The application main interface includes a control 502b. The user may trigger, by performing an operation such as tapping the control 502b, the mobile phone to display a status recording interface 503b shown in FIG. 23-1(3). The status recording interface 503b includes a control 504b for adding status information. The user may trigger, by performing an operation such as tapping the control 504b, the mobile phone to display a status information editing interface 505b shown in FIG. 23-1(4). The user may input some information in the status information editing interface 505b. Optionally, the status information editing interface 505b further includes a file control 507b. The user may add some files to inputted status information by using the file control 507b, for example, add a picture or audio, to enrich content of the status information.

In some embodiments, the user may input the status information on the interface 505b of the MeeTime application by using a keyboard of the mobile phone, for example, input "I am in a super good mood today".

In some other embodiments, optionally, the status information editing interface 505b of the MeeTime application further includes a voice input control 506b. The user may input the status information by using the voice input control 506b. Specifically, the user inputs a voice instruction (the status input instruction) to the mobile phone, for example, inputs "I am in a super good mood today". The mobile phone receives the voice instruction input by the user, and obtains, based on the voice instruction, status information corresponding to the mobile phone. The mobile phone may alternatively convert a voice into a text, and present the converted text on the status information editing interface.

Certainly, the user may alternatively input the status information in a manner other than a keyboard input or a voice input. A specific manner of inputting the status information by the user is not limited in this embodiment of this application.

FIG. 23-1(5) shows the status information input by the user, namely, "I am in a super good mood today", and the user may re-edit the status information at any time. When determining that the status information has been edited, the user may save the status information by, for example, tapping an "OK" control 508b shown in FIG. 23-1(5).

The foregoing shows only a schematic diagram of an example of a possible interface and a corresponding interface operation. In this embodiment of this application, the status information may alternatively be recorded in the mobile phone by using another interface or interface operation. For example, a "Record a current status" option may be set in a submenu of a setting option on the application main interface shown in FIG. 23-1(2). Alternatively, a "Record a current status" option may be set in another submenu of another interface of the MeeTime application. A specific interface type and interface operation are not limited in this embodiment of this application.

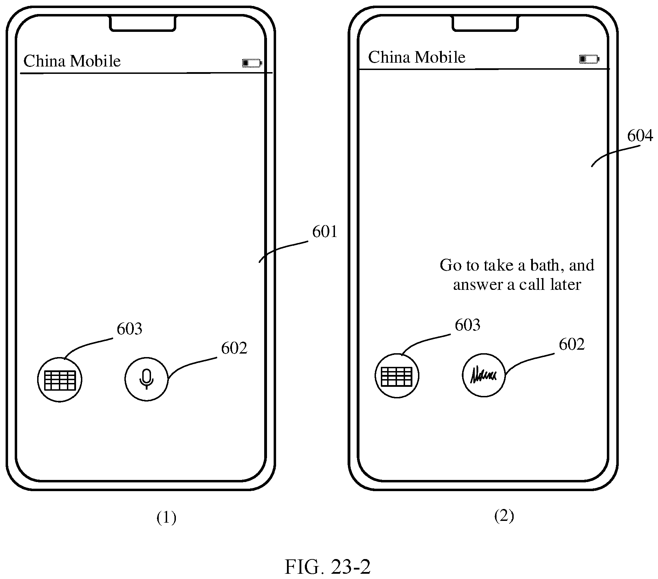

In some other embodiments, the user inputs the status information by using a voice assistant application. For example, the user may wake up a voice assistant by inputting a voice instruction or performing another operation (for example, pressing and holding a navigation button), and the mobile phone displays an interface 601 shown in (1) in FIG. 23-2. The interface 601 includes a voice input control 602 and a text input control 603. The user may input the status information by performing an operation such as tapping the control 602, for example, input a voice instruction "Go to take a bath and answer a call later". In response to the voice input control 602 that is shown in (1) in FIG. 23-2 and that is tapped by the user, the mobile phone recognizes the voice instruction input by the user, converts the voice instruction into a text, and displays an interface 604 shown in (2) in FIG. 23-2, to display the text "Go to take a bath and answer a call later" to the user.

Herein, a style of the voice input control 602 shown in (2) in FIG. 23-2 may be different from that of the voice input control 602 shown in (1) in FIG. 23-2. On the interface 604 shown in (2) in FIG. 23-2, the voice input control 602 may be displayed as a sound spectrum, and corresponds to a voice input by the user.

So far, the voice assistant application learns the status information by receiving the voice instruction input by the user, that is, the user goes to take a bath and needs to answer the call later.

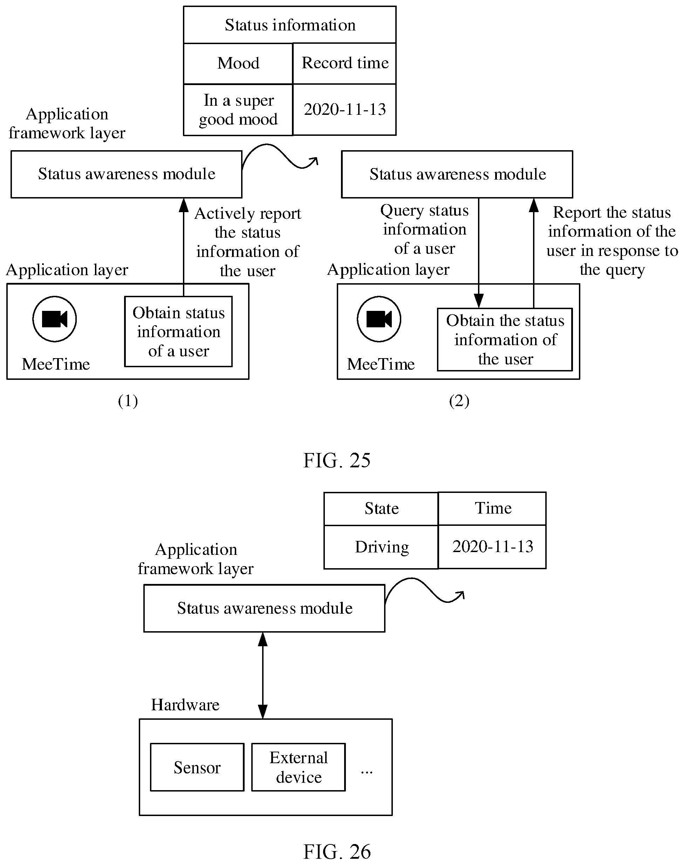

In some other embodiments, the application used to record status information may alternatively be applications such as Notepad and Notes. To be specific, the status awareness module may read data of these applications, and determine status information based on the data. For a process of exchanging status information between the status awareness module and the application, refer to a process of interaction between the status awareness module and the MeeTime application shown in FIG. 25.

Optionally, only when the data of the foregoing applications carries a preset keyword, the data is used as status information, and the status information is reported to the status awareness module. The preset keyword may be related to a status. For example, the preset keyword may be, but is not limited to, a keyword such as a mood, a place, a status, or time. Specific content of the preset keyword is not limited in this embodiment of this application.

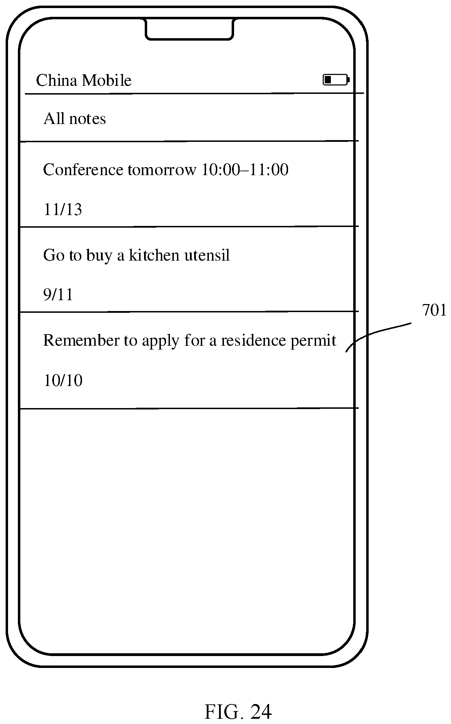

For example, FIG. 24 is a main interface of the Notepad application, including three notes. The first note includes a preset keyword, namely, time from 10:00 to 11:00. Therefore, information about the note may be used as the status information.

It may be understood that, after obtaining the status information input by the user, the application further needs to report the status information to the status awareness module at the application framework layer, so that the status awareness module performs a subsequent operation based on the status information.

For example, the user inputs the status information by using the MeeTime application. In a possible implementation, as shown in (1) in FIG. 25, after obtaining the status information, the MeeTime application actively reports the status information to the status awareness module. For example, after the user taps the "OK" control 508b shown in FIG. 23-1(5), the status information obtained by the MeeTime application is "I am in a super good mood today". In this case, the MeeTime application reports the status information of the user to the status awareness module.

In another possible implementation, as shown in (2) in FIG. 25, the status awareness module may trigger, periodically or based on another condition, to query the MeeTime application for the status information, and the MeeTime application reports the status information to the status awareness module in response to a query request of the status awareness module. A query period may be set to a small value, so that the status information can be updated quickly. A specific value of the query period may be flexibly set. This is not limited in this embodiment of this application. A condition for triggering the status awareness module to query the status information is not limited in this embodiment of this application.

In some other embodiments, the mobile phone may alternatively determine the status information based on perception data collected by an internal component. The internal component includes at least one of the following components: a sensor, a camera, or a location positioning component (for example, a GPS module). The sensor may include, but is not limited to, one or more of the following: an acceleration sensor, a gyroscope, a proximity sensor, or an acceleration sensor, and is configured to collect data of a corresponding type. The camera may be configured to collect an image, and the location positioning component may be configured to collect location information. In some cases, the camera and the location positioning component may also be used as sensors.

For example, status information corresponding to the terminal is obtained by using a sensor (such as a microphone) and a camera of the terminal. In a possible implementation, the status awareness module may obtain perception data collected by the microphone and the camera, and determine the status information based on the perception data. For example, the status awareness module may perform environment identification based on audio data detected by using the microphone and image data collected by the camera, to identify that the user is currently in a video conference. For another example, the status awareness module may alternatively determine, based on data of the sensor such as the acceleration sensor, the gyroscope, the proximity sensor, or the acceleration sensor, a status of the user or a status of the terminal, for example, the user is walking, running, or driving, or a battery level of the terminal is low.

In a possible implementation, the status awareness module may obtain perception data of the sensor periodically or based on another strategy, and determine the status information based on a perception quantity.

In some other embodiments, a battery level of the mobile phone may be low, or corresponding status information obtained by using application data of the mobile phone or by using the internal component is not accurate enough, or based on another consideration, for data accuracy or the like, the mobile phone may alternatively obtain the corresponding status information by using an external device. The external device may be an extended device of the mobile phone, for example, an external camera, an external location positioning component, or an external sensor. The external device may alternatively be another device connected to the mobile phone, for example, a watch, a band, or HUAWEI Vision. The external device may alternatively be a sensor on another device connected to the mobile phone, for example, a camera and a microphone on a head unit.

For example, the mobile phone may collect image data by using the external camera, and the status awareness module determines, based on the images, that the status of the user is, for example, on an outing. For another example, the status awareness module of the mobile phone may obtain data of the watch connected to the mobile phone, for example, application data of the watch or sensor data of the watch, and determine, based on the data, that the status of the user is, for example, running. For another example, when the user is in a vehicle, the mobile phone may collect an image by using the camera on the head unit connected to the mobile phone, and the status awareness module determines, based on the image data, that the status of the user is driving and that a health status of the user is good.

FIG. 26 shows an example of interaction between the status awareness module and the sensor (or the external device). In this way, the status awareness module can obtain data of the sensor or the external device, to determine status information of the user or the terminal based on the data.

That the status awareness module obtains the data (including the status information) of the sensor (or the external device) may be that the status awareness module queries the sensor for the status information periodically or based on an event or based on another strategy, or that the sensor (or the external device) actively reports the status information to the status awareness module after obtaining the status information.

Compared with the manner in which the user sets the status information, in this manner, the status information is determined by using hardware such as the sensor, so that the status information is obtained in a more timely manner, and the status information can be obtained without waiting for the user to set.

In some other embodiments, the status information may alternatively be determined in a manner of combining hardware and software, to ensure accuracy of the obtained status information as much as possible while the status information is obtained in a timely manner.

After obtaining the status information, the mobile phone further needs to report the status information to the server. In a possible implementation, after obtaining the status information, the mobile phone actively sends the status information to the server. Alternatively, the server triggers, periodically or based on an event, to query the terminal for the status information, and the mobile phone sends the status information to the server in response to a query request of the server.

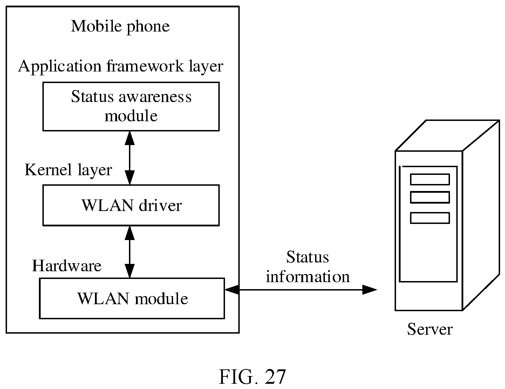

As shown in FIG. 27, that the mobile phone sends the status information to the server may be that the status awareness module of the mobile phone invokes a corresponding communication unit (for example, a WLAN module) by using a driver (for example, a WLAN driver) at the kernel layer to send the status information to the server.

According to the foregoing embodiment, the mobile phone may obtain and update the status information in a timely manner, and report the status information to the server.

After a terminal, for example, a terminal 1, collects and reports the status information to the server according to the foregoing embodiment, when another terminal (for example, a terminal 2) calls the terminal 1, the terminal 2 may obtain the status information of the terminal 1 from the server. Therefore, a user of the terminal 2 may know a current status of a user of the terminal 1, and may further formulate different call strategies based on the current status of the user of the terminal 1. In this way, user experience can be improved. For example, if the current status of the user of the terminal 1 is in a conference, the user of the terminal 2 may call the user of the terminal 1 later. For another example, if the user of the terminal 1 is in a bad mood currently, the user of the terminal 2 may need to adjust a call tone, speech wording, and the like when making a call with the user of the terminal 1.

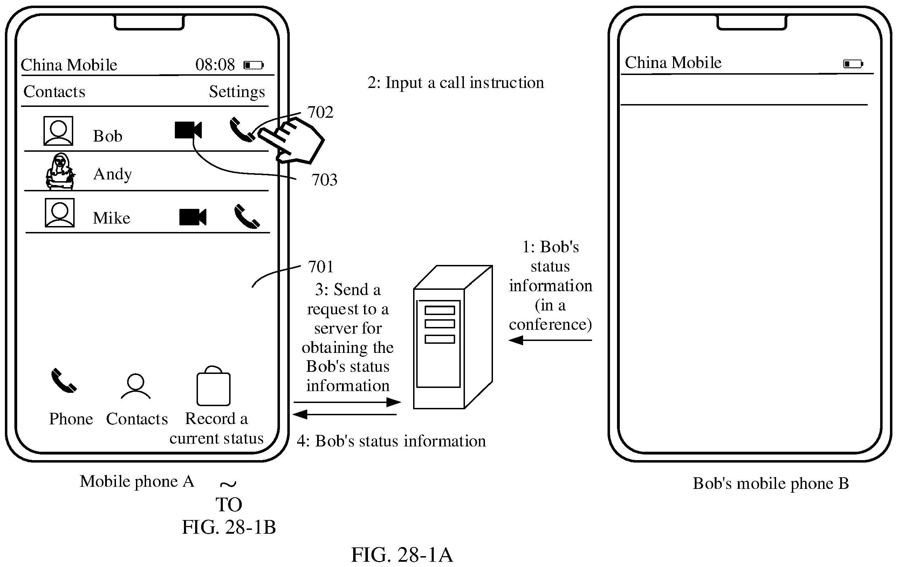

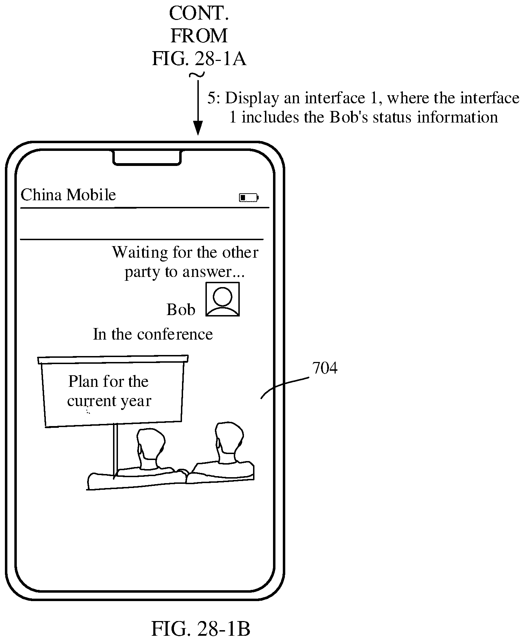

FIG. 28-1A and FIG. 28-1B are a schematic interaction diagram of a communication method according to an embodiment of this application. First, Bob's mobile phone (namely, a mobile phone B) reports Bob's status information (including Bob's status information and/or status information of the mobile phone B) to a server according to the foregoing embodiment. Subsequently, a user inputs a call instruction by using a mobile phone A. For example, on an interface 701 shown in FIG. 28-1A, the user taps a video call control 703 or taps a voice call control 702 on the interface 701. The technical solutions in embodiments of this application are described herein by using an example in which the user taps the video call control 703 to initiate a video call to Bob. In response to an operation performed by the user on the control 703, the mobile phone A (namely, a first terminal) sends an obtaining request to the server, where the obtaining request is used to request to obtain status information corresponding to the mobile phone B (namely, a second terminal). The mobile phone A receives, from the server, the status information corresponding to the mobile phone B. After obtaining Bob's status information, the mobile phone A may prompt Bob's status information to the user of the mobile phone A. Bob's status information may be displayed to the user of the mobile phone A in a multimedia manner such as a picture, a text, a voice, or a video. For example, after obtaining Bob's status information, the mobile phone A displays an interface 704 shown in FIG. 28-1B. The interface 704 may be a calling interface, and the interface 704 includes Bob's status information, that is, in a conference. Herein, the status information is displayed to the user of the mobile phone A in a form of a text and a picture. A specific form of displaying the status information is not limited in this embodiment of this application.

An example in which the mobile phone A obtains, by using the server, the status information corresponding to the mobile phone B is used in the foregoing description. Optionally, that the mobile phone A obtains the status information corresponding to the mobile phone B may alternatively be implemented below: obtaining the status information that corresponds to the second terminal and that is obtained from a status server in advance and stored in the mobile phone A (the first terminal). In other words, the mobile phone A may obtain the status information corresponding to the mobile phone B from the status server in advance and store the status information corresponding to the mobile phone B. Subsequently, the mobile phone A may locally read the status information corresponding to the mobile phone B.

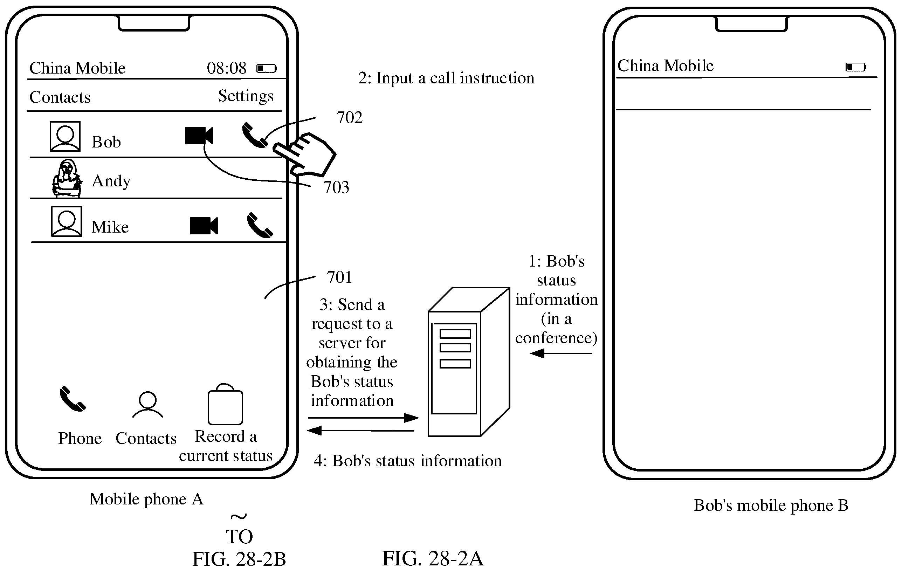

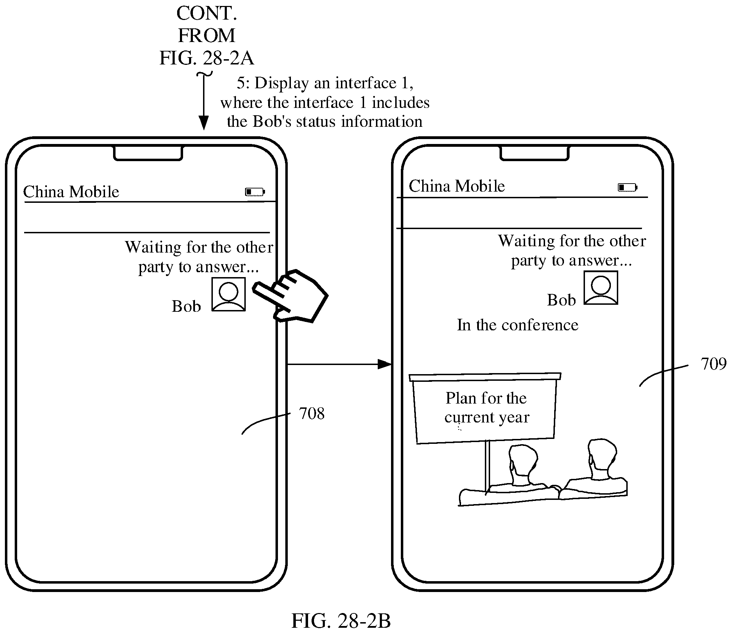

In some other embodiments, after selecting objects (such as Bob and Mike) for multi-party communication, the user may further trigger, by performing an operation or the like on an interface, the mobile phone to display the status information. For example, on an interface 708 shown in FIG. 28-2B, the user triggers, by tapping Bob's name hot area or Bob's profile picture, the mobile phone A to display an interface 709 shown in FIG. 28-2B. The interface 709 includes Bob's status information (in a conference).

In some other embodiments, in a call process, prompt information may be further displayed to the user by using a corresponding interface, to prompt that the status information corresponding to a communication peer end can be obtained. Optionally, the prompt information is displayed by using a text. Alternatively, optionally, the prompt information is displayed by using a preset icon effect. Alternatively, the prompt information (for example, audio or an animation effect) may be displayed in another manner.

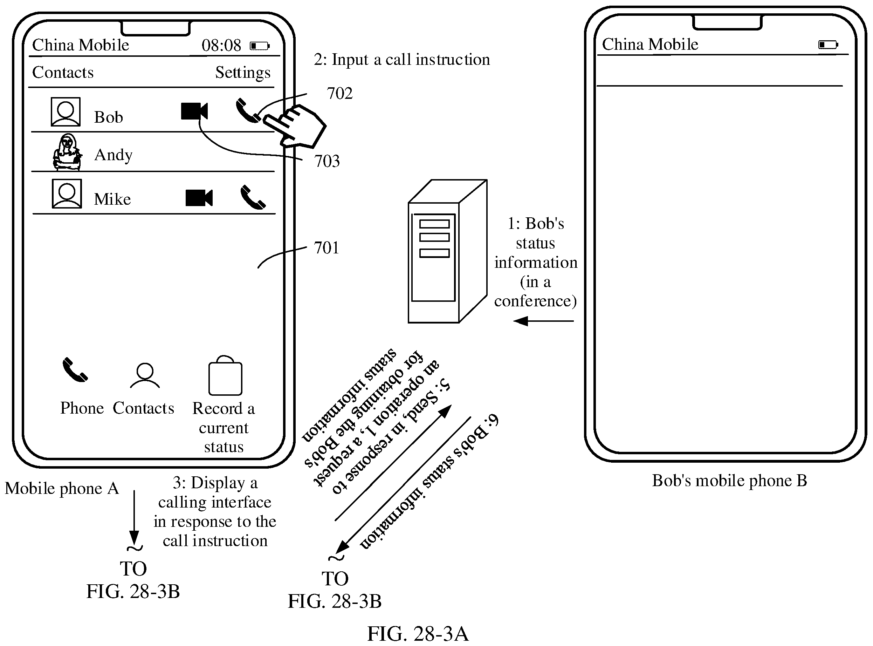

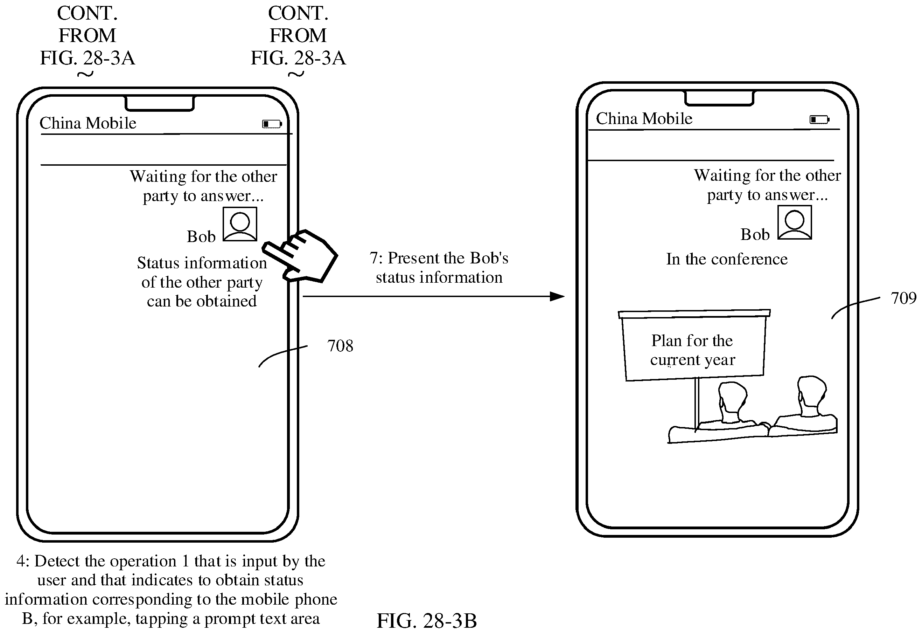

For example, the prompt information is displayed to the user by using a text. As shown in FIG. 28-3B, when detecting a call between the mobile phone A and the mobile phone B (namely, the second terminal), the mobile phone A displays text prompt information "Status information of the other party can be obtained" on a calling interface 708 of the call, to prompt that the status information corresponding to the second terminal can be obtained. When a target user operation indication indicating to obtain the status information corresponding to the mobile phone B (the second terminal) is detected by using the calling interface 708, the status information corresponding to the second terminal is obtained. For example, an operation such as tapping on a text area (which may alternatively be an operation such as inputting a voice to the mobile phone A) performed by the user is detected by using the calling interface 708 shown in FIG. 28-3B. In this case, the mobile phone A obtains the status information corresponding to the mobile phone B (the mobile phone A obtains the status information corresponding to the mobile phone B from the status server as an example in FIG. 28-3A), and presents the status information (namely, in a conference) corresponding to the mobile phone B.

It should be noted that, in this embodiment of this application, the operations of the user that are detected on the interface may be operations such as a tapping operation and a sliding operation generated by the user by touching the interface, or may be a floating operation of a hand of the user. In other words, the hand of the user and a screen may be separated at a specific distance, and the hand of the user does not have to touch the screen.

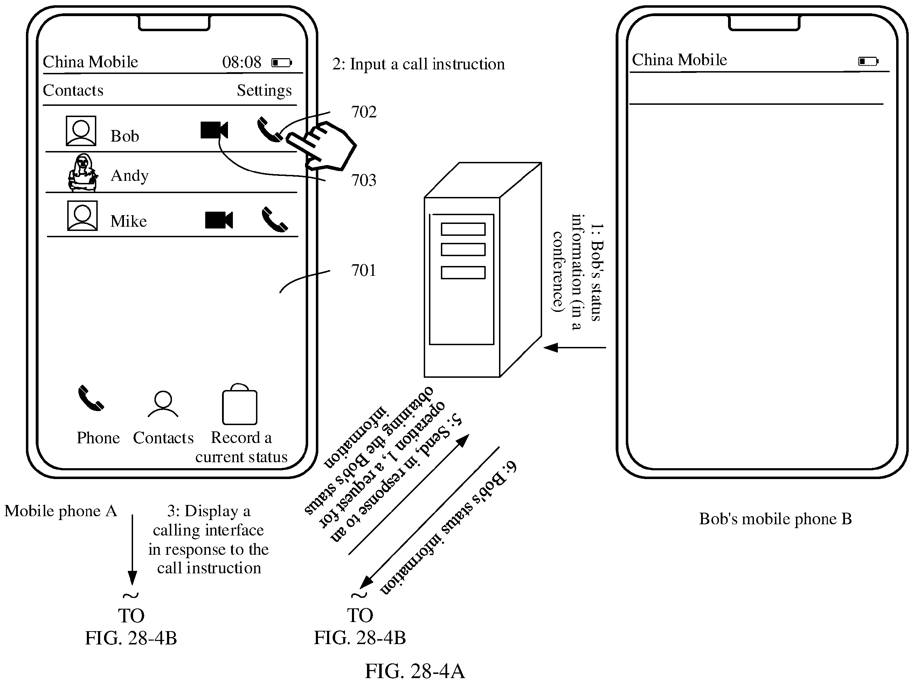

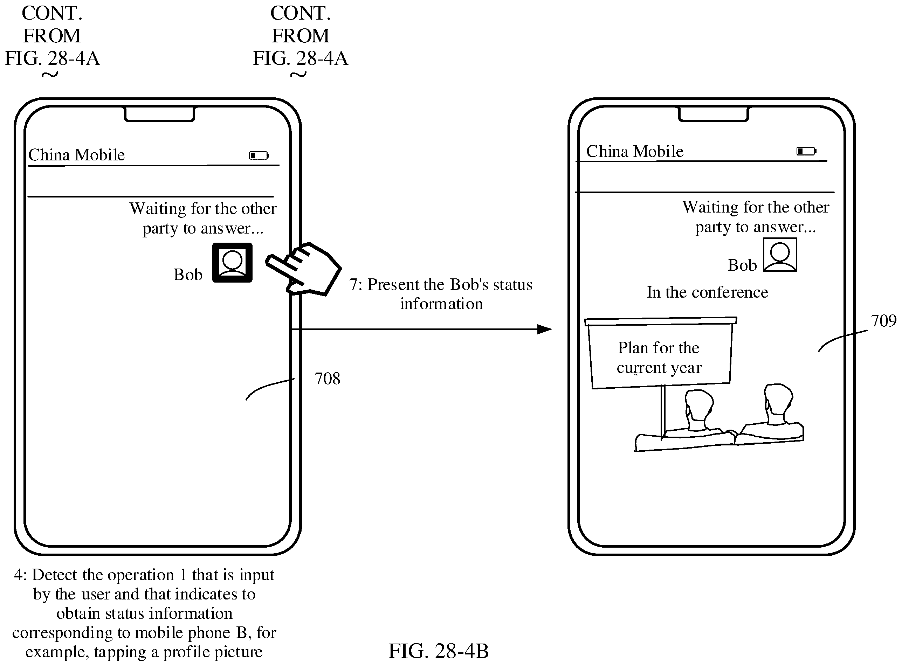

An example in which the prompt information is displayed by using the preset icon effect is used. As shown in FIG. 28-4B, the prompt information is presented by displaying a box outside a profile picture. Optionally, whether the status information corresponding to the mobile phone B is updated may be prompted based on a color of the box. For example, if the box is red, it indicates that the status information corresponding to the mobile phone B is updated; or if the box is gray, it indicates that the status information corresponding to the mobile phone B is not updated. Alternatively, optionally, whether the status information corresponding to the mobile phone B is updated is prompted in another manner. For example, if the box has a flashing animation effect, it indicates that the status information corresponding to the mobile phone B is updated; or if the box has no flashing animation effect, it indicates that the status information corresponding to the mobile phone B is not updated. Alternatively, whether the status information corresponding to the mobile phone B is updated may be prompted in another manner.

If the status information corresponding to the mobile phone B is updated, after inputting an operation such as tapping the profile picture, the user of the mobile phone A may obtain, from the status server, the latest status information corresponding to the mobile phone B. On the contrary, if the status information corresponding to the mobile phone B is not updated, after inputting an operation such as tapping the profile picture, the user of the mobile phone A may obtain the status information that corresponds to the mobile phone B and that is obtained by the mobile phone A in advance from the status server and stored locally.

Alternatively, optionally, it is not limited to displaying the box outside the profile picture. Alternatively, the user may be prompted with an interface effect of another shape, size, and location, to prompt the user whether the status information of the communication peer end is updated.

Alternatively, optionally, the prompt information may be presented by using another preset icon effect, to prompt the user that the status information corresponding to the communication peer end can be obtained.

In some other embodiments, after presenting the status information corresponding to the second terminal, the first terminal may further obtain first comment information input by the first terminal for the first status information in the status information corresponding to the second terminal, and send a first comment message to a message server. The first comment message includes the first comment information, and further includes the first status information or an identifier of the first status information. In other words, there may be one or more pieces of status information corresponding to the second terminal, and the user of the first terminal may comment on some status information in the one or more pieces of status information.

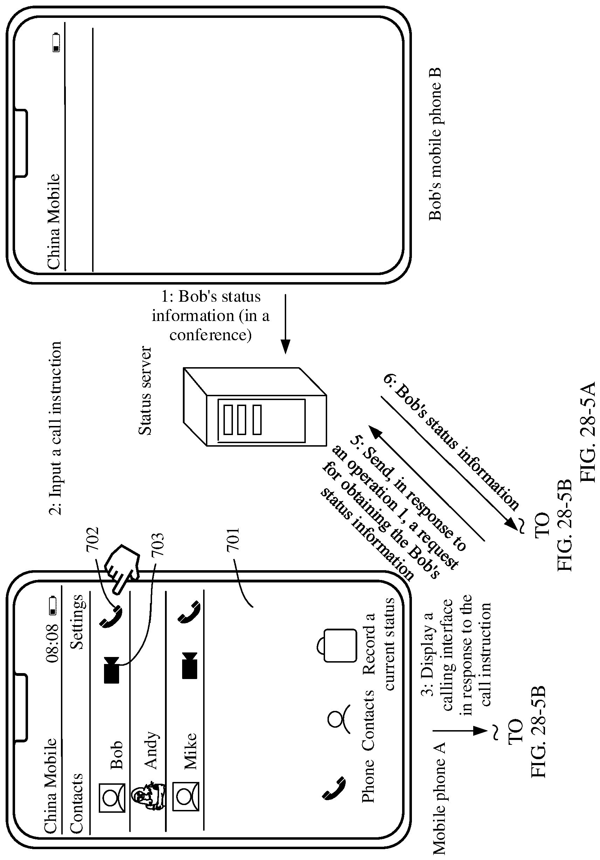

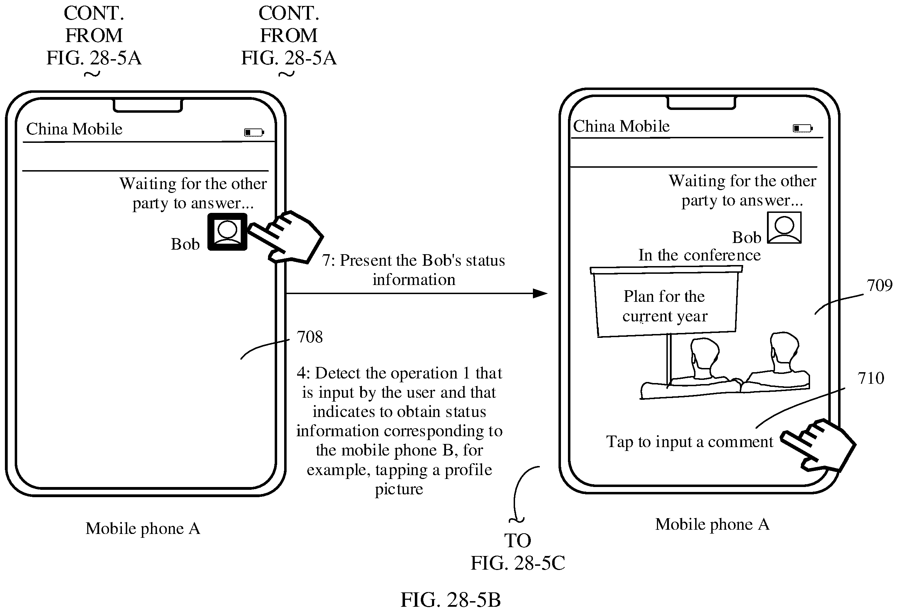

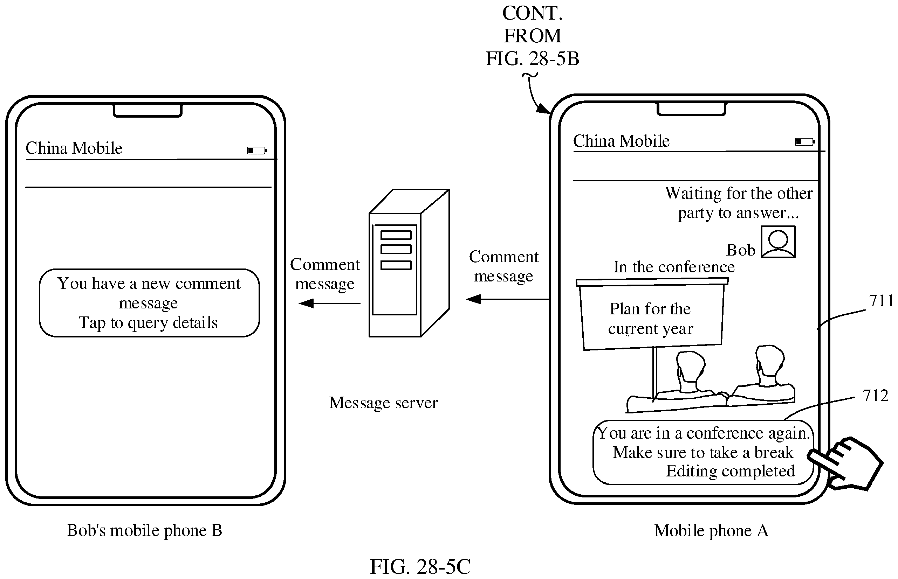

For example, as shown in FIG. 28-5B, the mobile phone A presents, on the interface 709, the status information (namely, in a conference) corresponding to the mobile phone B. The interface 709 may further include a control 710, used to input comment information. The user may input, by using the control 710, an operation such as a tapping operation to trigger the mobile phone A to display an interface 711, where the interface 711 includes an input box 712, and input the comment information in the input box 712. Alternatively, the interface 709 may directly include an input box 712 used to input comment information. A specific manner of displaying the interface is not limited in this embodiment of this application.

Still as shown in FIG. 28-5C, after editing the comment information, the user may perform an operation such as tapping an "editing completed" control. In response to the operation, the mobile phone A sends a comment message to the message server, where the comment message includes the comment information (You are in a conference again. Make sure to take a break). The comment message may further include the status information (namely, in a conference) of the comment or an identifier of the status information. The mobile phone B receives the comment message sent by the message server, and displays content of the comment message.

That the mobile phone B displays the content of the comment message may indicate that the user is prompted to receive new comment information, but specific content is not displayed. In other words, a comment made for a piece of status information is not displayed, and a specific comment (You are in a conference again. Make sure to take a break) of the user of the mobile phone A is also not displayed. For example, as shown in FIG. 28-5C, the mobile phone B prompts the user of the mobile phone B that there is new comment information, but specific comment information is collapsed.

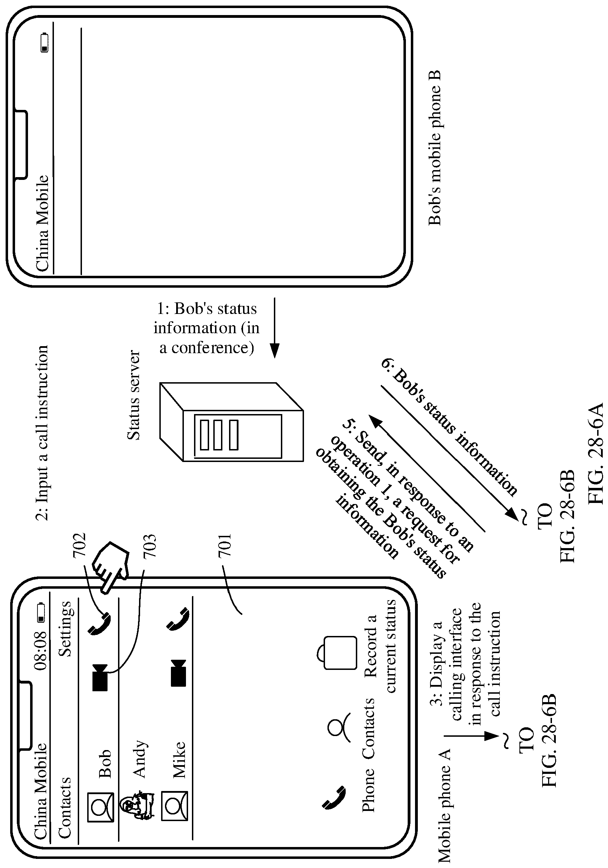

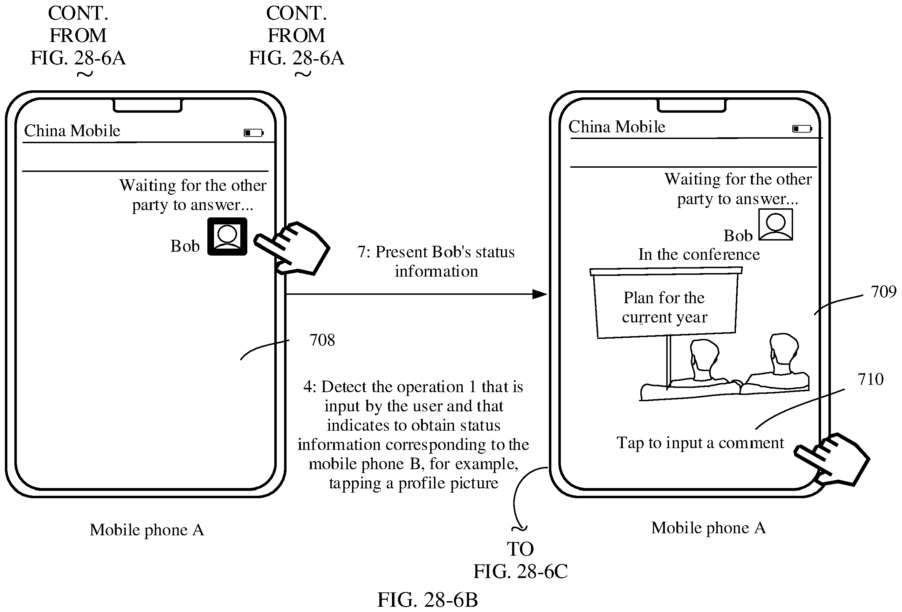

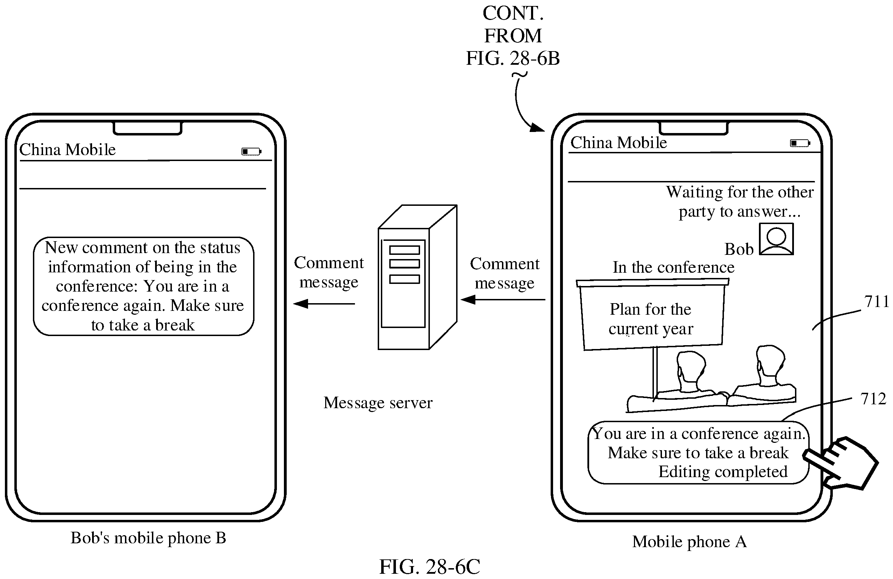

For example, as shown in FIG. 28-6C, that the mobile phone B displays the content of the comment message may alternatively indicate that specific comment information is displayed to the user. Optionally, the mobile phone B may alternatively prompt the user with other information such as a user from which the comment information comes.

In some other embodiments, the user A may set a permission for status information. The user A sets the status information of user A to which user is visible and to which user is invisible. If the status information is visible to a user, it indicates that when calling the user A, the user may obtain, from the server, the status information of the user A or status information of a terminal used by the user A. If the status information of the user A is invisible to a user, the user cannot obtain the status information of user A from the server.

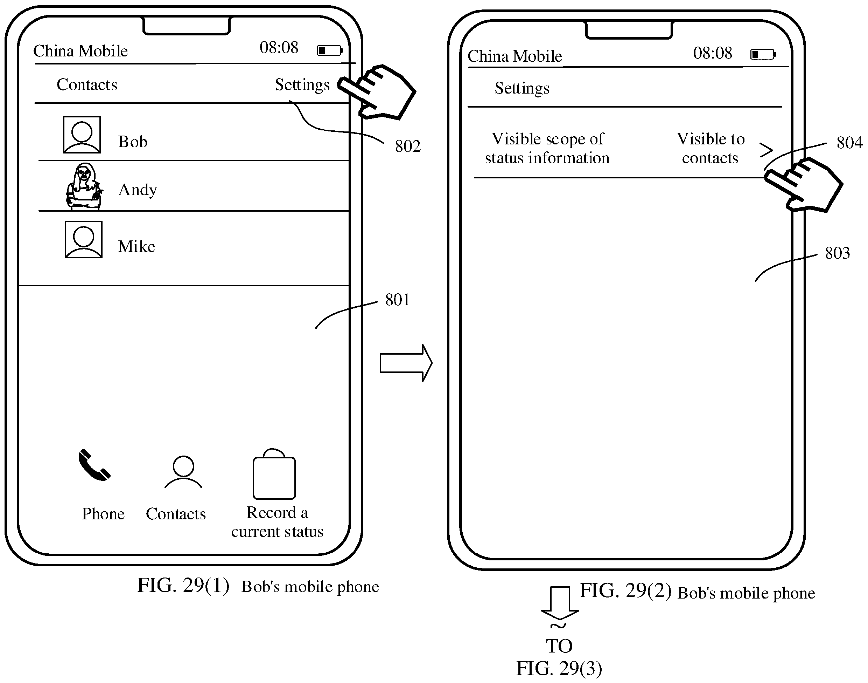

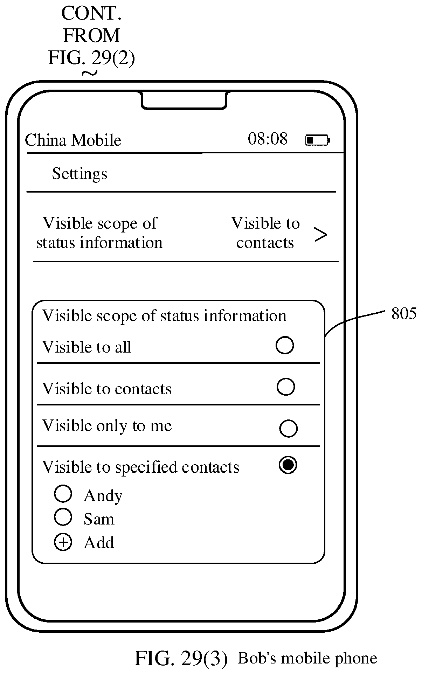

For example, FIG. 29(1) to FIG. 29(3) are a schematic diagram of an interface operation for setting a visible scope of status information. An example in which the visible scope of the status information is set by using a MeeTime application is used. FIG. 29(1) shows an example of a home interface 801 of the MeeTime application. The interface 801 includes a setting option 802. For example, the user may tap the setting option 802 to trigger the mobile phone to display a setting interface 803 shown in FIG. 29(2). The setting interface 803 includes a control 804, used to set a visible scope of the status information, in other words, set a visible contact of the status information. For example, the user taps the control 804 to trigger the mobile phone to display a setting box 805 shown in FIG. 29(3). The user may set the visible scope of the status information by using the setting box 805. For example, the status information is set to be visible only to contacts Andy and Sam.

Optionally, the user may alternatively set different visible scopes for different status information. For example, private status information is set to be visible to friends, and status information that is not private is set to be visible to all contacts. In this way, security of private data can be improved.

Optionally, a same user may alternatively set different permissions for different terminals of the user. For example, a high-level permission requirement is set for a terminal such as a mobile phone or office computer with a high privacy requirement. In other words, the status information is visible only to familiar people. For a terminal such as Huawei Vision with a low privacy requirement, the status information is visible to common people. Specific setting may be flexibly set based on actual application, and is not limited.

Alternatively, the user may set the visible scope of the status information by using an application other than the MeeTime application. An application used to set the visible scope of the status information and a related interface operation are not limited in this embodiment of this application.

Optionally, the mobile phone may further report the visible scope of the status information to the server, so that the server determines, based on the visible scope of the status information, whether to feed back status information of a called party to a corresponding calling party.

Optionally, for a terminal that does not have an access permission, the terminal does not display prompt information "Status information corresponding to the communication peer end can be obtained" in a call process. For example, if (the user of) the mobile phone A does not have a permission to access the mobile phone B, the mobile phone A does not display the box outside the profile picture in FIG. 28-4B. In this way, a probability of attracting attention of the user can be reduced.

Optionally, alternatively, a function related to "Status information corresponding to the communication peer end can be obtained" of the terminal may be disabled, to reduce a probability that the terminal obtains the status information corresponding to the communication peer end. For example, as shown in FIG. 28-4B, the mobile phone A does not have the permission to access the mobile phone B. In a possible implementation, the mobile phone A may display the box outside the profile picture, but prohibit the user of the mobile phone A from inputting an operation such as tapping the box. This prevents the user of the mobile phone A from obtaining, by using the operation, the status information corresponding to the mobile phone B.

It should be noted that a same user may use a plurality of terminals, and the plurality of terminals may be referred to as terminals associated with the user. In this embodiment of this application, the plurality of terminals associated with the user may have a same account, or certainly may have different accounts.

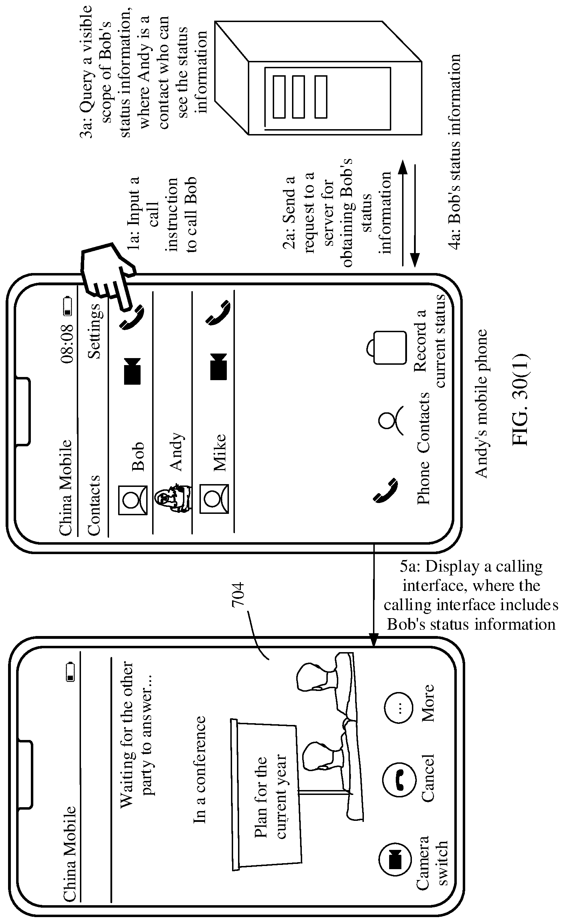

For example, as shown in FIG. 30(1), Andy's mobile phone calls Bob. In step 2a, the query request sent by Andy's mobile phone to the server may carry a device identifier of Andy's mobile phone and a device identifier of Bob's mobile phone. The server learns, based on the device identifier of Bob's mobile phone, that a visible scope of Bob's status information needs to be queried, for example, queries the following Table 7.

**Table 7**

| Visible scope of Bob's status information | Identifier of a device associated with a visible contact | |
|---|---|---|
| User Andy | Identifier of Andy's mobile phone | Identifier of Andy's tablet |
| User Sam | Identifier of Sam's mobile phone | Identifier of Sam's tablet |

Further, the query request includes the identifier of Andy's mobile phone. The server learns, by querying Table 7, that Andy's mobile phone is a device associated with the visible contact Andy. In this case, Andy's mobile phone has a permission to access Bob's status information. Therefore, the server returns Bob's status information to Andy's mobile phone, so that Andy can learn Bob's current status by using Andy's mobile phone. Therefore, in a process in which the call is not connected, Andy's mobile phone may display an interface 704 shown in FIG. 30(1), and the interface 704 prompts that Bob is in a conference.

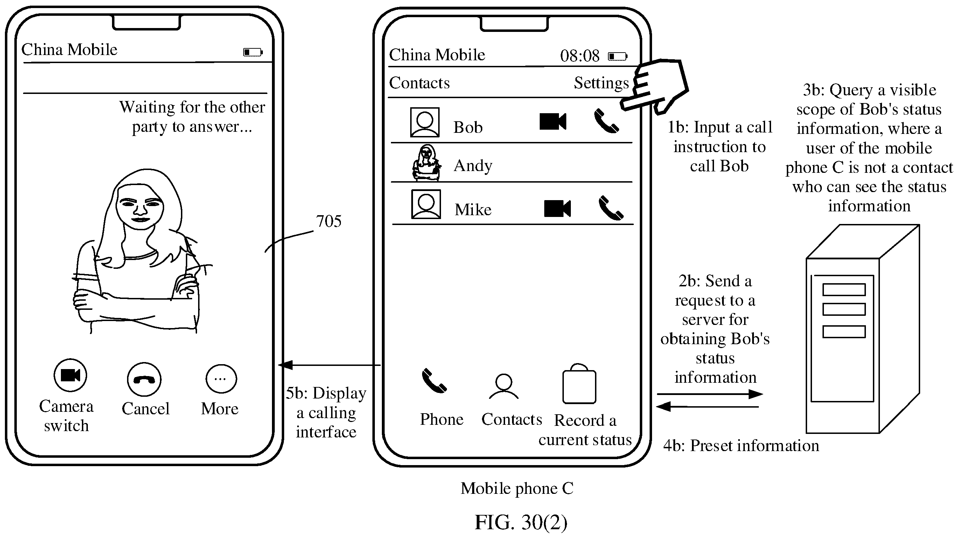

For another example, as shown in FIG. 30(2), the mobile phone C initiates a call to Bob, and queries the server for Bob's status information. The server learns, through query, that the mobile phone C is not a device associated with a visible contact of Bob's status information. In this case, the mobile phone C has no permission to access Bob's status information, and the server does not return Bob's status information to the mobile phone C. Optionally, the server returns preset information to the mobile phone C. The preset information may be information in the conventional technology. After receiving the preset information, the mobile phone C performs a subsequent operation according to the conventional technology. For example, in a call (the call is not connected) process, a calling interface shown FIG. 30(2) is displayed. For example, when a front-facing camera of the mobile phone C is turned on, the mobile phone C may display, on a call interface 705, a real-time image captured by the front-facing camera.

As shown in FIG. 30(1), when Andy calls Bob, if Andy knows that Bob is in a conference, Andy may choose to call Bob later. In this way, interference caused by the call to Bob's ongoing conference can be reduced, and waiting time for Andy can be reduced. In other words, Andy may cancel the call immediately after learning that Bob is busy. This prevents a waste of time due to a case in which Andy waits for the call to be answered, and improves user experience.

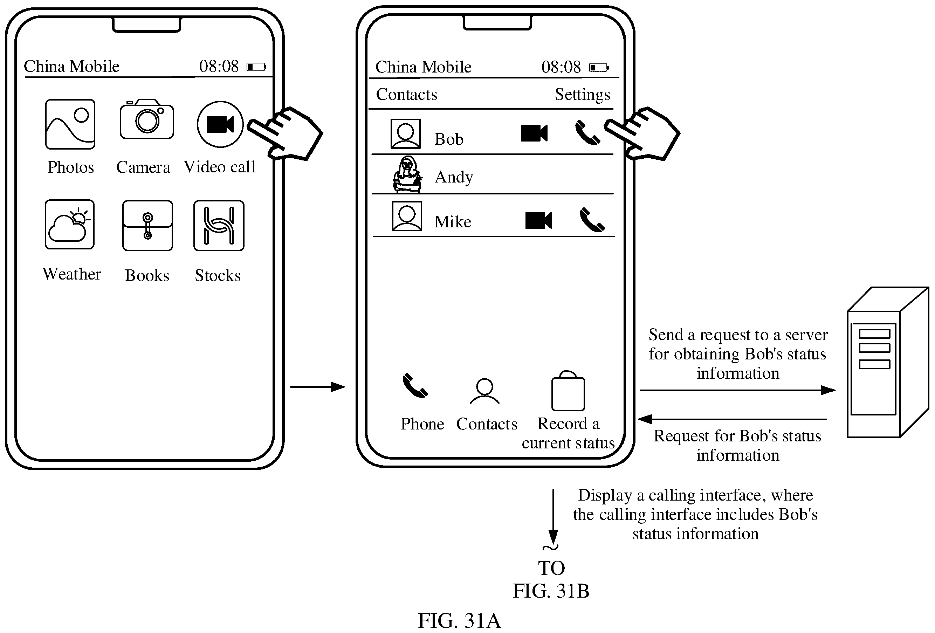

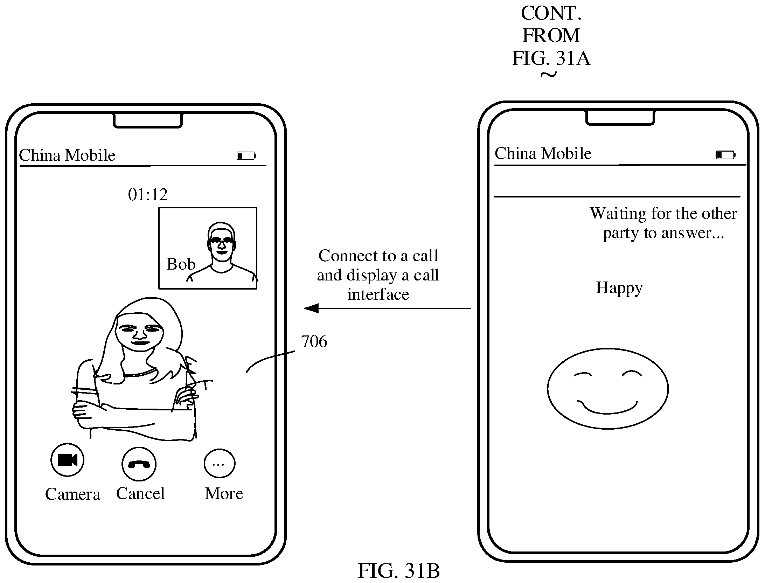

In some other embodiments, after the call initiated by the user is connected, two or more parties of the call may display an interface according to the conventional technology. For example, as shown in FIG. 31B, before the call is connected from a time at which the mobile phone initiates a call, the mobile phone may display Bob's status information. After the call is connected, the mobile phone of the user A may display a call interface 706 (which may include the image captured by the front-facing camera) shown in FIG. 31A and FIG. 31B.

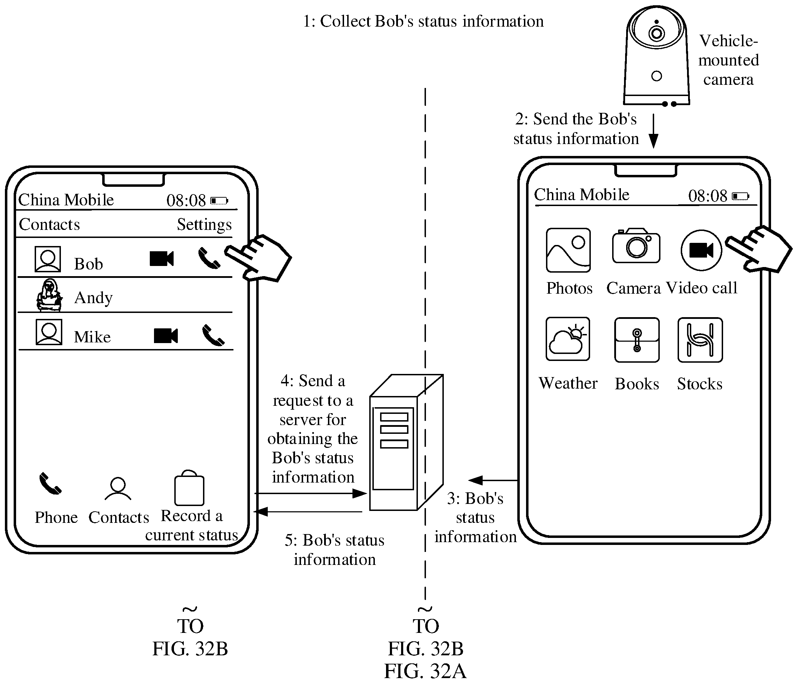

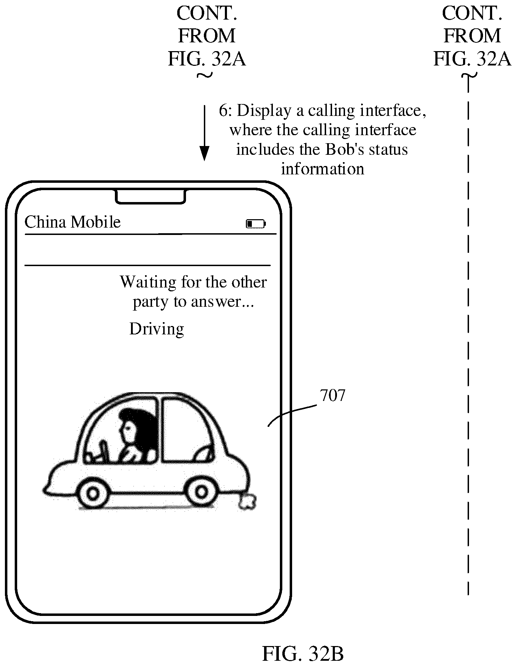

For example, FIG. 32A and FIG. 32B show another example of the communication method according to this embodiment of this application. Bob's mobile phone invokes a camera on a vehicle-mounted terminal to capture an image, and learns, based on the image, that Bob is driving. In this case, the mobile phone reports Bob's status information to the server, in other words, Bob is driving. Subsequently, when someone calls Bob, the server may feed back Bob's status information to a calling party, and therefore the calling party learns that Bob is driving. Optionally, in a call process, the calling party may display a call interface 707 shown in FIG. 32B.

Compared with an existing color ring back tone/customized ringing signal tone service that can select only a specific type of multimedia information such as music, videos, and pictures and is not flexible enough, in the communication method provided in embodiments of this application, multimedia content provided by a terminal in a call process can be freely customized. In addition, the multimedia content can fully reflect a current status (for example, a mood or an activity) of a user, and can enrich audio-visual experience of the user.

In the communication method provided in embodiments of this application, multimedia content presented by the terminal to the user is not limited to a specific type. For example, more colorful content forms such as a text, a photo, a user-defined audio, and a user-defined video may be presented, and a presentation manner is more flexible.

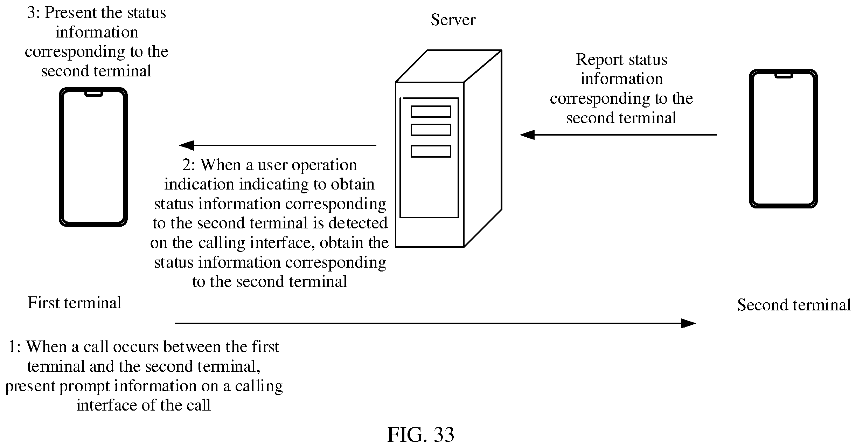

FIG. 33 is a schematic diagram of a communication method according to an embodiment of this application. For detailed implementation of the method, refer to the embodiments corresponding to FIG. 22 to FIG. 32A and FIG. 32B. In FIG. 33, an example in which a first terminal initiates an obtaining request to a server, and obtains, from the server in real time, status information corresponding to a second terminal is used.

In the foregoing embodiment, the technical solutions in embodiments of this application are mainly described by using an example in which a calling terminal obtains status information of a called terminal from the server. In some other embodiments, a called terminal may alternatively obtain status information of a calling terminal from the server. An example in which the first terminal is a calling terminal is used. When initiating a call to the second terminal, the first terminal may obtain the status information corresponding to the second terminal. Alternatively, an example in which the first terminal is a called terminal is used. When receiving a call initiated by the second terminal, the first terminal may obtain the status information corresponding to the second terminal.

In a possible manner, when it is detected that a called user is near a called mobile phone, the called mobile phone may query the server for the status information of a calling mobile phone, to learn a status of a calling party. As shown in FIG. 33, a called mobile phone B may obtain, from the server, status information corresponding to a calling mobile phone A, and present the status information corresponding to the mobile phone A to a user of the mobile phone B.

In this embodiment of this application, the status information corresponding to the terminal includes any one piece or a combination of the following information: a text, a picture, audio, a video, a link, or an applet. In a possible manner, that the status information corresponding to the second terminal is displayed on a display interface of the first terminal may be specifically implemented below: Rich media forms such as a text, an image, a videos, a link, and an applet are displayed to a peer device in an interface form in a manner such as a user interface (user interface, UI) template.

The foregoing provides descriptions by using an example in which the status information corresponding to the second terminal is presented on the display interface of the first terminal. The first terminal may display the status information of the peer terminal in another manner, for example, playing a voice used to prompt the status information corresponding to the second terminal. For example, the status information of the other party is displayed in a manner such as sound and vibration.

For example, the user B sets status information, for example, "running", in a text form by using the MeeTime application. The mobile phone of the user A calls the mobile phone of the user B, and obtains, from the server, the status information corresponding to the user B in the text form. The mobile phone of the user A may convert the status information in a text form into the status information in a voice form by using a text to speech (text to speech, TTS) technology, and broadcast the status information. In this way, when the mobile phone of the user A is placed next to the ear, the user A may hear the status information of the user B, for example, "the subscriber you dialed is running". This experience can be seamlessly integrated with the experience of listening to a ringback tone in a normal call, to improve user experience.

It should be noted that the status server and the message server may be a same server. Alternatively, optionally, the status server and the message server are different servers.

In this embodiment of this application, a call between mobile phones may be made based on a phone number, or may be made on a message sending interface, or may be made by searching contacts for a corresponding contact. A call scenario scope is not limited in this embodiment of this application.

In some embodiments, in a communication process, the terminal device may obtain and present status information of a communication peer end, so that communication efficiency can be improved. In addition, when a plurality of terminal devices join the communication process, a packet between the terminal device and the communication peer end is transmitted through a successfully established P2P connection in multi-party communication, and a relay server is not required for packet transmission. In other words, the terminal device and the communication peer end do not need to contend with another terminal device for communication resources, to further improve communication efficiency.

In this embodiment of this application, the first terminal, the second terminal, or the server may be divided into functional modules based on the foregoing method examples. For example, each functional module may be obtained through division for a corresponding function, or two or more functions may be integrated into one processing module. The integrated module may be implemented in a form of hardware, or may be implemented in a form of a software functional module. It should be noted that, in this embodiment of the present invention, module division is an example, and is merely logical function division. In actual implementation, another division manner may be used.

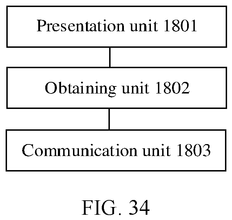

FIG. 34 is a possible schematic diagram of a structure of a communication apparatus provided based on functional module division according to an embodiment of this application. The communication apparatus includes a presentation unit 1801, an obtaining unit 1802, and a communication unit 1803.

The presentation unit 1801 is configured to present related information. For example, prompt information is presented, status information corresponding to a communication peer end is presented, and a second comment message is presented. That the status information corresponding to the communication peer end is presented may be that the status information corresponding to the communication peer end is presented by using an interface; and/or a voice used to prompt the status information corresponding to the communication peer end is played.

The obtaining unit 1802 is configured to obtain related information. For example, status information corresponding to the communication apparatus is obtained, status information corresponding to the communication peer end is obtained, and first comment information input by the communication apparatus for the first status information of the communication peer end is obtained.

The communication unit 1803 is configured to communicate with another apparatus. For example, the communication unit 1803 is configured to send, to a message server, a first comment message carrying the first comment information; may be further configured to send, to a status server, status information corresponding to the communication apparatus; and may be further configured to receive the second comment message sent by the message server.

The obtaining unit 1802 is configured to obtain the status information corresponding to the communication peer end, which may be: sending an obtaining request to the status server by using the communication unit 1803, receiving a response from the status server by using the communication unit 1803, and obtaining the status information that corresponds to the communication peer end and that is carried in the response.

The obtaining unit 1802 is configured to obtain the status information corresponding to the communication peer end, which may alternatively be: obtaining the status information that corresponds to the communication peer end and that is obtained from the status server in advance and stored locally.

In a possible implementation, when the communication apparatus is a terminal, a function of the communication unit 1803 may be implemented by the mobile communication unit 150 and/or the wireless communication unit 160 shown in FIG. 4. When the communication apparatus is a server, a function of the communication unit 1803 may be implemented by the processor 401 and/or the processor 408 shown in FIG. 6-1.

In a possible implementation, the obtaining unit 1802 and the presentation unit 1801 may be implemented by the processor. It may be understood that the presentation unit 1801 may alternatively be implemented by, for example, a display or a speaker. For example, the display presents, in an interface manner, the status information corresponding to the communication peer end, and the speaker plays the voice used to prompt the status information corresponding to the communication peer end.

Optionally, the communication apparatus may further include a storage module (not shown in FIG. 34). In a possible implementation, the storage module may be implemented by a memory.

FIG. 34 is merely an example of module division of the communication apparatus. A specific module division manner is not limited in this embodiment of this application. For example, one or more modules may be split, combined, or arranged in another manner. For example, the communication unit may be used as a submodule of the obtaining unit.

For another example, when the communication apparatus is a server, the module division manner shown in FIG. 21 may alternatively be used.

An embodiment of this application further provides a chip system. For a structure of the chip system, refer to FIG. 18. The processor 1101 and the interface circuit 1102 may be interconnected through a line. For example, the interface circuit 1102 may be configured to receive a signal from another apparatus (for example, a memory). For another example, the interface circuit 1102 may be configured to send a signal to another apparatus (for example, the processor 1101). For example, the interface circuit 1102 may read instructions stored in the memory, and send the instructions to the processor 1101. The chip system may be applied to a terminal or a server (a status server or a message server). When the chip system is applied to a first terminal, and the instructions are executed by the processor 1101, the first terminal is enabled to perform the steps performed by the first terminal in the foregoing embodiments. When the chip system is applied to a second terminal, and the instructions are executed by the processor 1101, the second terminal is enabled to perform the steps performed by the second terminal in the foregoing embodiments. When the chip system is applied to the server, and the instructions are executed by the processor 1101, the server is enabled to perform the steps performed by the server in the foregoing embodiments. Certainly, the chip system may further include another discrete device. This is not specifically limited in this embodiment of this application.

An embodiment of this application further provides an apparatus. The apparatus is included in a terminal or a server. The apparatus has a function of implementing behavior of the first terminal, the second terminal, the status server, or the message server in any method in the foregoing embodiments. The function may be implemented by using hardware, or may be implemented by executing corresponding software by hardware. The hardware or software includes at least one module or unit corresponding to the function, for example, a presentation module or a presentation unit and an obtaining module or an obtaining unit.

An embodiment of this application further provides a computer-readable storage medium, including computer instructions. When the computer instructions are run on a first terminal, a second terminal, a status server, or a message server (where the status server and the message server may be a same server), the first terminal or the second terminal is enabled to perform any method in the foregoing embodiments.

An embodiment of this application further provides a computer program product. When the computer program product runs on a computer, the computer is enabled to perform any method in the foregoing embodiments.

The terminal device, the server, the computer storage medium, the computer program product, and the like provided in embodiments of this application each are configured to perform the corresponding method provided above. Therefore, for beneficial effects that can be achieved, refer to the beneficial effects in the corresponding method provided above. Details are not described herein again.

It may be clearly understood by a person skilled in the art that, for the purpose of convenient and brief description, for a detailed working process of the foregoing system, apparatus, and module, refer to a corresponding process in the foregoing method embodiment. Details are not described herein again.

All or some of the foregoing embodiments may be implemented by using software, hardware, firmware, or any combination thereof. When a software program is used to implement embodiments, all or some of embodiments may be implemented in a form of the computer program product. The computer program product includes one or more computer instructions. When the computer program instructions are loaded and executed on a computer, all or some of the procedures or functions according to embodiments of this application are generated.

The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (digital subscriber line, DSL)) or a wireless manner (for example, infrared, radio, or microwave). The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The foregoing descriptions about implementations allow a person skilled in the art to clearly understand that, for the purpose of convenient and brief description, division of the foregoing functional modules is taken as an example for illustration. In actual application, the foregoing functions may be allocated to different functional modules for implementation based on a requirement, in other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or unit division is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, in other words, may be located in one place, or may be distributed in different places. In an application process, some or all of the units may be selected based on an actual requirement to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in embodiments of this application essentially, or the part contributing to the conventional technology, or some of the technical solutions may be implemented in a form of a software product. The computer software product is stored in a storage medium and includes several instructions for instructing a device (which may be a personal computer, a server, a network device, a single-chip microcomputer, or a chip) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application.

**Claims**

1. A communication method, wherein the method is applied to a first terminal, and the method comprises:

   sending a path query request to a server, wherein the path query request is used to request at least one first forwarding path, and each of the at least one first forwarding path is used to carry a packet between the first terminal and a second terminal;
   receiving a path query response from the server, wherein the path query response indicates the at least one first forwarding path, and each of the at least one first forwarding path comprises a plurality of established point-to-point P2P links in multi-party communication; and
   sending the packet through a target forwarding path in the at least one first forwarding path.

2. The communication method according to claim 1, wherein there is one first forwarding path.

3. The communication method according to claim 1, wherein there are a plurality of first forwarding paths; and the method further comprises:

   selecting the target forwarding path from the plurality of first forwarding paths based on a preset parameter, wherein
   the preset parameter comprises a link level parameter and/or a path level parameter; for each first forwarding path, the link level parameter comprises one or any combination of the following parameters: a delay of the P2P link comprised in the first forwarding path, quality of service QoS of the P2P link comprised in the first forwarding path, or a network type of the P2P link comprised in the first forwarding path; the network type comprises a wireless high-fidelity Wi-Fi network or a cellular network; and the path level parameter comprises a quantity of transit devices on the first forwarding path.

4. The communication method according to claim 3, wherein the selecting the target forwarding path from the plurality of first forwarding paths based on a preset parameter comprises:

   selecting the target forwarding path from the plurality of first forwarding paths based on the preset parameter and a preset strategy, wherein
   the preset strategy comprises one or any combination of the following strategies: a delay of the target forwarding path is the lowest, a delay of the target forwarding path is less than or equal to an upper delay threshold, QoS of the target forwarding path is optimal, a QoS value of the target forwarding path falls within a preset QoS value range, a quantity of transit devices on the target forwarding path is the smallest, a quantity of transit devices on the target forwarding path falls within a preset quantity range, or a network type of a first P2P link in the target forwarding path is a preset network type; the preset network type comprises a Wi-Fi network; and the first P2P link is a P2P link connected to the first terminal or a P2P link connected to the second terminal.

5. The communication method according to claim 3, wherein

   the target forwarding path is a first forwarding path with a lowest delay in the first forwarding paths when a network type of a first P2P link is a preset network type, and the first P2P link is a P2P link connected to the first terminal or a P2P link connected to the second terminal; or
   the target forwarding path is a first forwarding path with optimal QoS in the first forwarding paths when a network type of a first P2P link is a preset network type; or
   the target forwarding path is a first forwarding path with a smallest quantity of transit devices in the first forwarding paths when a network type of a first P2P link is a preset network type; or

the target forwarding path is a first forwarding path with a lowest delay in first forwarding paths whose QoS values fall within a preset QoS value range; or

the target forwarding path is a first forwarding path with a smallest quantity of transit devices in first forwarding paths whose QoS values fall within a preset QoS value range; or

the target forwarding path is a first forwarding path in first forwarding paths whose QoS values fall within a preset QoS value range when a network type of a first P2P link is a preset network type; or

the target forwarding path is a first forwarding path in first forwarding paths whose delays are less than or equal to a delay threshold when a network type of a first P2P link is a preset network type; or

the target forwarding path is a first forwarding path with optimal QoS in first forwarding paths whose delays are less than or equal to a delay threshold; or

the target forwarding path is a first forwarding path with a smallest quantity of transit devices in first forwarding paths whose delays are less than or equal to a delay threshold; or

the target forwarding path is a first forwarding path with a lowest delay in first forwarding paths whose quantities of transit devices fall within a preset quantity range; or

the target forwarding path is a first forwarding path with optimal QoS in the first forwarding paths whose quantities of transit devices fall within a preset quantity range; or

the target forwarding path is a first forwarding path in first forwarding paths whose quantities of transit devices fall within a preset quantity range when a network type of a first P2P link is a preset network type.

6. The communication method according to claim 3, wherein each of the plurality of first forwarding paths has a corresponding weight value, the weight value of the first forwarding path indicates quality of the first forwarding path, and the weight value $W$ of the first forwarding path meets the following relationship: $W = \sum_{j=1}^{M} \sum_{i=1}^{N} p_i * w_i$ , wherein

$p_i$ is a quantized value of an i$^{th}$ link level parameter, $w_i$ is a weight corresponding to $p_i$, N is a quantity of link level parameters, $\sum_{i=1}^{N} p_i * w_i$ is a weight of a j$^{th}$ P2P link in the first forwarding path, and M is a quantity of P2P links comprised in the first forwarding path; and

the target forwarding path is a first forwarding path whose path quality indicated by a weight value is greater than a threshold in the plurality of first forwarding paths.

7. The communication method according to claim 3, wherein each first forwarding path has a corresponding weight value, the weight value of the first forwarding path indicates quality of the first forwarding path, and the weight value $W$ of the first forwarding path meets the following relationship: $W = \sum_{j=1}^{M} \sum_{i=1}^{N} p_i * w_i + w_{relay} * n_{relay}$ , wherein

$p_i$ is a quantized value of an i$^{th}$ link level parameter, $w_i$ is a weight corresponding to $p_i$, N is a quantity of link level parameters, $\sum_{i=1}^{N} p_i * w_i$ is a weight of a j$^{th}$ P2P link in the first forwarding path, and M is a quantity of P2P links comprised in the first forwarding path; and

$n_{relay}$ is a quantized value of the path level parameter of the first forwarding path, and $w_{relay}$ is a weight corresponding to $n_{relay}$; and

the target forwarding path is a first forwarding path whose path quality indicated by a weight value is greater than a threshold in the plurality of first forwarding paths.

8. The communication method according to any one of claims 1 to 7, wherein the packet carries the target forwarding path or a target subpath; and

the target forwarding path comprises M P2P links, a source node of the target forwarding path is the first terminal, a destination node of the target forwarding path is the second terminal, the target subpath comprises (M-1) neighboring P2P links in the M P2P links, a source node of the target subpath is a next-hop terminal of the first terminal, a destination node of the target subpath is the second terminal, and M is an integer greater than or equal to 2.

9.  The communication method according to any one of claims 1 to 8, wherein the sending a path query request to a server comprises:
    when no P2P link between the first terminal and the second terminal is successfully established, sending the path query request to the server.

10. A communication method, wherein the method is applied to a third terminal, the third terminal is located on a target forwarding path, and the method comprises:

    receiving a packet sent by a first terminal to a second terminal through the target forwarding path, wherein the packet carries a second forwarding path; the second forwarding path is the target forwarding path or a target subpath; the target forwarding path is used to carry the packet between the first terminal and the second terminal, and the target forwarding path comprises M P2P links; a source node of the target forwarding path is the first terminal, and a destination node of the target forwarding path is the second terminal; the target subpath comprises N neighboring P2P links in the M P2P links, a source node of the target subpath is the third terminal, and a destination node of the target subpath is the second terminal; and M is an integer greater than or equal to 2, N is a positive integer, and N is less than M; and
    sending the packet based on the second forwarding path.

11. A communication method, wherein the method is applied to a server, and the method comprises:

    receiving a path query request from a first terminal, wherein the path query request is used to request at least one first forwarding path, and each of the at least one first forwarding path is used to carry a packet between the first terminal and a second terminal; and
    sending a path query response to the first terminal in response to the path query request, wherein the path query response indicates the at least one first forwarding path, and each first forwarding path comprises a plurality of established P2P links in multi-party communication.

12. The communication method according to claim 11, wherein there are a plurality of first forwarding paths.

13. The communication method according to claim 11, wherein there is one first forwarding path; and

    the method further comprises: selecting the first forwarding path from a plurality of available forwarding paths based on a preset parameter, wherein the available forwarding path is a forwarding path that is used to carry the packet between the first terminal and the second terminal, wherein
    the preset parameter comprises a link level parameter and/or a path level parameter; for each available forwarding path, the link level parameter comprises one or any combination of the following parameters: a delay of a P2P link comprised in the available forwarding path, quality of service QoS of the P2P link comprised in the available forwarding path, or a network type of the P2P link comprised in the available forwarding path; the network type comprises a wireless high-fidelity Wi-Fi network or a cellular network; and the path level parameter comprises a quantity of transit devices on the available forwarding path.

14. The communication method according to claim 13, wherein the selecting the first forwarding path from a plurality of available forwarding paths based on a preset parameter comprises:

    selecting the first forwarding path from the plurality of available forwarding paths based on the preset parameter and a preset strategy, wherein
    the preset strategy comprises one or any combination of the following strategies: a delay of the first forwarding path is the lowest, a delay of the first forwarding path is less than or equal to an upper delay threshold, QoS of the first forwarding path is optimal, a QoS value of the first forwarding path falls within a preset range, a quantity of transit devices on the first forwarding path is the smallest, a quantity of transit devices on the first forwarding path falls within a preset quantity range, or a network type of a first P2P link in the first forwarding path is a preset network type; the preset network type comprises a Wi-Fi network; and the first P2P link is a P2P link connected to the first terminal or a P2P link connected to the second terminal.

15. The communication method according to claim 13, wherein each available forwarding path has a corresponding weight value, the weight value indicates quality of the available forwarding path, and the weight value $W$ of the available forwarding path meets the following relationship: $W = \sum_{j=1}^{M} \sum_{i=1}^{N} p_i * w_i$ , wherein

$p_i$ is a quantized value of an $i^{th}$ link level parameter, $w_i$ is a weight corresponding to $p_i$, N is a quantity of link level parameters, $\sum_{i=1}^{N} p_i * w_i$ is a weight of a $j^{th}$ P2P link in the available forwarding path, and M is a quantity of P2P links comprised in the available forwarding path; and

the first forwarding path is an available forwarding path whose path quality indicated by a weight value is greater than a threshold in the plurality of available forwarding paths.

16. The communication method according to claim 13, wherein each available forwarding path has a corresponding weight value, the weight value indicates quality of the available forwarding path, and the weight value $W$ of the available forwarding path meets the following relationship: $W = \sum_{j=1}^{M} \sum_{i=1}^{N} p_i * w_i + w_{relay} * n_{relay}$ , wherein

$p_i$ is a quantized value of an $i^{th}$ link level parameter, $w_i$ is a weight corresponding to $p_i$, N is a quantity of link level parameters, $\sum_{i=1}^{N} p_i * w_i$ is a weight of a $j^{th}$ P2P link in the available forwarding path, M is a quantity of P2P links comprised in the available forwarding path, $n_{relay}$ is a quantized value of the path level parameter of the available forwarding path, and $w_{relay}$ is a weight corresponding to $n_{relay}$; and

the first forwarding path is an available forwarding path whose path quality indicated by a weight value is greater than a threshold in the plurality of available forwarding paths.

17. The communication method according to any one of claims 11 to 16, wherein the method further comprises: receiving the link level parameter corresponding to the connected P2P link from each terminal that establishes the P2P link in the multi-party communication.

18. The communication method according to any one of claims 11 to 17, wherein the method further comprises: receiving the preset strategy from the first terminal.

19. A first terminal, wherein the first terminal comprises:

a sending unit, configured to send a path query request to a server, wherein the path query request is used to request at least one first forwarding path, and each of the at least one first forwarding path is used to carry a packet between the first terminal and a second terminal; and
a receiving unit, configured to receive a path query response from the server, wherein the path query response indicates the at least one first forwarding path, and each of the at least one first forwarding path comprises a plurality of established point-to-point P2P links in multi-party communication, wherein
the sending unit is further configured to send the packet through a target forwarding path in the at least one first forwarding path.

20. A third terminal, wherein the third terminal is located on a target forwarding path, and the third terminal comprises:

a receiving unit, configured to receive a packet sent by a first terminal to a second terminal through the target forwarding path, wherein the packet carries a second forwarding path; the second forwarding path is the target forwarding path or a target subpath; the target forwarding path is used to carry the packet between the first terminal and the second terminal, and the target forwarding path comprises M P2P links; a source node of the target forwarding path is the first terminal, and a destination node of the target forwarding path is the second terminal; the target subpath comprises N neighboring P2P links in the M P2P links, a source node of the target subpath is the third terminal, and a destination node of the target subpath is the second terminal; and M is an integer greater than or equal to 2, N is a positive integer, and N is less than M; and
a sending unit, configured to send the packet based on the second forwarding path.

21. A server, comprising:

a receiving unit, configured to receive a path query request from a first terminal, wherein the path query request is used to request at least one first forwarding path, and each of the at least one first forwarding path is used to carry a packet between the first terminal and a second terminal; and

a sending unit, configured to send a path query response to the first terminal in response to the path query request, wherein the path query response indicates the at least one first forwarding path, and each first forwarding path comprises a plurality of established P2P links in multi-party communication.

22. An electronic device, comprising a processor and a memory, wherein the memory is coupled to the processor, the memory is configured to store computer program code, the computer program code comprises computer instructions, and when the processor reads the computer instructions from the memory, the electronic device is enabled to perform the communication method according to any one of claims 1 to 9, perform the communication method according to claim 10, or perform the communication method according to any one of claims 11 to 18.

23. A computer-readable storage medium, comprising computer instructions, wherein when the computer instructions are run on a terminal, the terminal is enabled to perform the communication method according to any one of claims 1 to 9, perform the communication method according to claim 10, or perform the communication method according to any one of claims 11 to 18.

24. A computer program product, wherein when the computer program product runs on a computer, the computer is enabled to perform the communication method according to any one of claims 1 to 9, perform the communication method according to claim 10, or perform the communication method according to any one of claims 11 to 18.

Relay server

Terminal C

Terminal A

Terminal D

Terminal B

Terminal E

— — Signaling flow

—— P2P channel

—— Relay channel

FIG. 1

100a

200a

300a

400

FIG. 2

FIG. 3

Terminal

FIG. 4

Application layer

| Camera | Calendar | Maps | WLAN | Music | Messaging |

| Gallery | Phone | Navigation | Bluetooth | Voice/Video call application | ... |

Application framework layer

| Window manager | Content provider | Phone manager | Resource manager |

| View system | Notification manager | First module | ... |

System library

| Surface manager | Three-dimensional graphics processing library | Android runtime |

| 2D graphics engine | Media library | ... |

Kernel layer

| Display driver | Camera driver |

| Network interface card driver | Audio driver | Sensor driver | ... |

FIG. 5

FIG. 6-1

FIG. 6-2

China Mobile     08:08

Photos    Camera    Video call

Weather    Books    Stocks

501a

**FIG. 7(1)**

China Mobile     08:08

Bob

Andy

Mike

502a

**FIG. 7(2)**

China Mobile     08:08

Group chat

503a

**FIG. 7(3)**

TO
FIG. 7(4)

EP 4 277 225 A1

China Mobile          08:08

Select members          OK

🔍

Bob          ✓

Andy          ✓

Mike          ○

me          ✓

505a

FIG. 7(5)

China Mobile

Group chat

⊕                      ☺ ▷

Album     Voice     Video
          input     call

504a

FIG. 7(4)

China Mobile 🔋

01:12

508a

Andy Bob

Me

507a

🔊 🎤 📷

Speaker Microphone Camera

📞

Cancel

10: In response
to the second call
response, a call
is connected and
a call interface is
displayed

China Mobile 08:08 🔋

Select members [ OK ]

🔍

🖼 Bob ✓

🖼 Andy ✓

🖼 Mike ◯

🖼 Me ✓

Mobile phone A

8: Second call
response
(carrying the
audio and/or
video data)

2: In response to the
call instruction of the
user, send a first call
request and call the
mobile phone B and
the mobile phone C

TO
FIG. 8B

~
TO
FIG. 8F

FIG. 8A

7: Send a first call response (optionally, carrying audio and/or video data collected by the mobile phone B) in response to the "Answer" instruction input by Bob on the calling interface

TO FIG. 8C

9: Trigger establishment of a P2P connection between the mobile phone A and the mobile phone B in response to the first call response

CONT. FROM FIG. 8A

3: Second call request, where the mobile phone B is called

China Mobile

5: Display a calling interface of a called party in response to the second call request

TO FIG. 8C

Server

Bob's mobile phone B

TO FIG. 8D

FIG. 8B

CONT.
FROM
FIG. 8B

CONT.
FROM
FIG. 8B

6: Receive an "Answer" instruction input by Bob on the calling interface, for example, Bob presses the "Answer" button on the calling interface

China Mobile

Me
Invite you
to make a
voice call

Me

Also join the chat

End

Answer

Bob's mobile phone B

FIG. 8C

CONT. FROM FIG. 8B

3: Third call request, where the mobile phone C is called

China Mobile

7: Send a first call response in response to the "Answer" instruction input by Andy on the calling interface

5: Display a calling interface of a called party in response to the second call request

TO FIG. 8E

TO FIG. 8F

Andy's mobile phone C

TO FIG. 8E

FIG. 8D

CONT.
FROM
FIG. 8D

CONT.
FROM
FIG. 8D

China Mobile

Me

Also join the chat

End

Answer

Andy's mobile phone C

6: Receive an "Answer"
instruction input by Andy on
the calling interface

FIG. 8E

CONT.
FROM
FIG. 8A

1: The mobile phone A receives an instruction input by a user A on a UI for selecting members to join a multi-party video call, and receives a call instruction input by the user A by, for example, tapping an "OK" button

4: Display a calling interface of a calling party in response to the call instruction of the user

China Mobile

Waiting for other parties to accept the invitation...

Andy

Bob

506a

Me

Speaker  Microphone  Camera

Cancel

CONT.
FROM
FIG. 8D

FIG. 8F

China Mobile

01:12

Andy

Bob

Me

Speaker  Microphone  Camera

Cancel

Mobile phone A

Data (audio and/or video data) collected by the mobile phone B and data (audio and/or video data) collected by the mobile phone C

Audio and/or video data collected by the mobile phone A

Relay server

Data (audio and/or video data) collected by the mobile phone A and data (audio and/or video data) collected by the mobile phone C

Audio and/or video data collected by the mobile phone B

China Mobile

01:12

Andy

Bob

Me

Speaker  Microphone  Camera

Cancel

Bob's mobile phone B

TO
FIG. 9B

FIG. 9A

EP 4 277 225 A1

CONT.
FROM
FIG. 9A

Audio and/or video
data collected by the
mobile phone C

Data (audio and/or video data)
collected by the mobile phone A and
data (audio and/or video data)
collected by the mobile phone B

China Mobile

01:12

Andy

Bob

Me

Speaker Microphone Camera

Cancel

After a call is connected
and before a P2P
connection is established,
communication between
the mobile phones needs
to be implemented through
the relay server

Andy's mobile phone C

FIG. 9B

EP 4 277 225 A1

| Mobile phone A | First server | Second server | Mobile phone B |
|---|---|---|---|

1a: Request information about the second server

1a: Request the information about the second server

2a: Information about the second server

2a: Information (IP address) about the second server

3a: NAT gateway address request information

3a: NAT gateway address request information

4a: NAT gateway address

4a: NAT gateway address

5a: Handshake request message

6a: Handshake response message

7a: BIND request message (information about the mobile phone A, IP address, and NAT type)

8a: BIND response message (information about the mobile phone B)

9a: Direct request message

10a: Direct response message

11a: Direct acknowledgment message

12a: Heartbeat message

13a: Heartbeat message

14a: P2P connection establishment result

15a: P2P connection establishment result (optionally, including a path strategy)

FIG. 10

FIG. 11A

CONT.
FROM
FIG. 11A

CONT.
FROM
FIG. 11A

Andy's mobile phone C

Establishment of a
P2P connection
between terminals

———— P2P channel

━━━━ Relay channel

FIG. 11B

EP 4 277 225 A1

3b: The mobile phone A determines a target forwarding path (A–B–C) based on the available forwarding path between the mobile phone A and the mobile phone C and the path strategy, and sends data to the mobile phone B through the target forwarding path

China Mobile

01:12

Andy

Bob

Me

Speaker   Microphone   Camera

Cancel

Mobile phone A

For example, the path strategy is a lowest delay

1b: Query an available forwarding path to the mobile phone C

2b: Return the available forwarding path (A–B–C) between the mobile phone A and the mobile phone C

China Mobile

01:12

Andy

Bob

Me

Speaker   Microphone   Camera

Cancel

Bob's mobile phone B

TO
FIG. 12-1B

FIG. 12-1A

EP 4 277 225 A1

CONT.
FROM
FIG. 12-1A

China Mobile

01:12

Andy

Bob

Me

Speaker  Microphone  Camera

Cancel

Andy's mobile phone C

After a P2P connection is established, data between the mobile phone A and the mobile phone C may be forwarded by the mobile phone B

FIG. 12-1B

4c: The mobile phone A sends data to the mobile phone B through the target forwarding path (A–B–C)

2c: Determine a target forwarding path (A–B–C) between the mobile phone A and the mobile phone C, where a delay of the path is the lowest

1c: Query an available forwarding path to the mobile phone C

3c: Return the target forwarding path (A–B–C) between the mobile phone A and the mobile phone C

China Mobile

01:12

Andy    Bob

Me

Speaker  Microphone  Camera

Cancel

Mobile phone A

TO
FIG. 12-2B

China Mobile

01:12

Andy    Bob

Me

Speaker  Microphone  Camera

Cancel

Bob's mobile phone B

TO
FIG. 12-2B

FIG. 12-2A

China Mobile

01:12

Andy

Bob

Me

Speaker Microphone Camera

Cancel

5c: The mobile phone B
forwards the data from the
mobile phone A to the mobile
phone C through the target
forwarding path

Mobile phone D

Andy's mobile phone C

FIG. 12-2B

EP 4 277 225 A1

FIG. 12-3

| First terminal (source terminal) | Server | Third terminal (transit terminal) | Transit terminal | ... | Second terminal (destination terminal) | Relay server |
|---|---|---|---|---|---|---|

1: Path query request

2: Path query response (one or more available forwarding paths)

Query one or more available forwarding paths

An available forwarding path exists (that is, a packet may be forwarded through an established P2P link)

3: Send the packet through a target forwarding path in the one or more available forwarding paths

Parse the packet to obtain an identifier of a next-hop terminal

4: Send the packet through the P2P link

5: Send the packet through the P2P link

Determine that a destination is the second terminal, and process the packet

6: Send the packet

7: Forward the packet through the relay server

No available forwarding path exists

FIG. 13

FIG. 14A

EP 4 277 225 A1

CONT.
FROM
FIG. 14A

CONT.
FROM
FIG. 14A

China Mobile

01:12

Andy    Bob

Me

Speaker  Microphone  Camera

Cancel

Andy's mobile phone C

FIG. 14B

First terminal

Receiving unit 1501

Processing unit 1503

Sending unit 1502

FIG. 15

Third terminal

Receiving unit 1601

Processing unit 1603

Sending unit 1602

FIG. 16

Server

Receiving unit 1701

Processing unit 1703

Sending unit 1702

FIG. 17

Processor 1101

Interface circuit 1102

FIG. 18

100b

300b

200b

FIG. 19

| | | | | | |
|---|---|---|---|---|---|
| Camera | Calendar | Maps | WLAN | Music | Messaging |

Application layer

| | | | | | |
|---|---|---|---|---|---|
| Gallery | Phone | Navigation | Bluetooth | Voice/Video call application | ... |

Application framework layer

| | | | |
|---|---|---|---|
| Window manager | Content provider | Phone manager | Resource manager |
| View system | Notification manager | Status awareness module | ... |

System library

| | | |
|---|---|---|
| Surface manager | Three-dimensional graphics processing library | Android runtime |
| 2D graphics engine | Media library | ... |

Kernel layer

| | | | |
|---|---|---|---|
| Display driver | Camera driver | | |
| Network interface card driver | Audio driver | Sensor driver | ... |

FIG. 20

FIG. 21

Status information

Status information of a terminal
— Low battery level
Poor signal

Status information of a user

Location
— Just got off the plane, at the airport
On the train
On the subway

Physical condition
— Poor health
Good health

Time

Surrounding environment
— Traffic light
Sidewalk

Activity
— Riding
Reading a novel
Listening to music
Sleeping
Swimming
Climbing a mountain
Driving
Watching a TV show
Surfing the Internet
Running
Watching news
Exercising

Mood
— In a very good mood
In a good mood
Slightly sad

FIG. 22

China Mobile     08:08

Photos    Camera   Video call

Weather    Books    Stocks

501b

FIG. 23-1(1)

China Mobile     08:08

Contacts            Settings

Bob

Andy

Mike

Call    Contacts   Record a current status

502b

FIG. 23-1(2)

China Mobile     08:08

Status information

503b

504b

FIG. 23-1(3)

TO
FIG. 23-1(4)

EP 4 277 225 A1

CONT.
FROM
FIG. 23-1(3)

China Mobile

Edit status information          OK

508b

I am in a super good mood
today

Files          Voice input

FIG. 23-1(5)

China Mobile

Edit status information

505b

507b

506b

Files          Voice input

FIG. 23-1(4)

(1)

(2)

FIG. 23-2

China Mobile

All notes

Conference tomorrow 10:00–11:00

11/13

Go to buy a kitchen utensil

9/11

Remember to apply for a residence permit

10/10

701

FIG. 24

| Status information | |
| --- | --- |
| Mood | Record time |
| In a super good mood | 2020-11-13 |

Application framework layer

Status awareness module

Actively report the status information of the user

Application layer

MeeTime

Obtain status information of a user

(1)

Status awareness module

Query status information of a user

Application layer

MeeTime

Obtain the status information of the user

Report the status information of the user in response to the query

(2)

FIG. 25

| State | Time |
| --- | --- |
| Driving | 2020-11-13 |

Application framework layer

Status awareness module

Hardware

| Sensor | External device | ... |

FIG. 26

FIG. 27

China Mobile 08:08

Contacts Settings

Bob

Andy

Mike

Phone Contacts Record a current status

702

703

701

Mobile phone A

TO
FIG. 28-1B

2: Input a call instruction

3: Send a request to a server for obtaining the Bob's status information

4: Bob's status information

1: Bob's status information (in a conference)

China Mobile

Bob's mobile phone B

FIG. 28-1A

CONT.
FROM
FIG. 28-1A

5: Display an interface 1, where the interface
1 includes the Bob's status information

China Mobile

Waiting for the other
party to answer...

Bob

In the conference

Plan for the
current year

704

FIG. 28-1B

EP 4 277 225 A1

China Mobile

Bob's mobile phone B

1: Bob's status information (in a conference)

2: Input a call instruction

702

703

701

3: Send a request to a server for obtaining the Bob's status information

4: Bob's status information

China Mobile        08:08

Contacts        Settings

Bob

Andy

Mike

Phone   Contacts   Record a current status

Mobile phone A

FIG. 28-2A

TO

FIG. 28-2B

CONT.
FROM
FIG. 28-2A

5: Display an interface 1,
where the interface 1 includes
the Bob's status information

China Mobile

Waiting for the other
party to answer...

Bob

708

China Mobile

Waiting for the other
party to answer...

Bob

In the conference

Plan for the
current year

709

FIG. 28-2B

EP 4 277 225 A1

FIG. 28-3A

China Mobile 08:08

Contacts Settings

Bob

Andy

Mike

Phone Contacts Record a current status

702

703

701

2: Input a call instruction

1: Bob's status information (in a conference)

5: Send, in response to operation 1, a request for obtaining the Bob's status information

6: Bob's status information

Mobile phone A

3: Display a calling interface in response to the call instruction

TO FIG. 28-3B

TO FIG. 28-3B

Bob's mobile phone B

China Mobile

Waiting for the other
party to answer...

Bob

Status information
of the other party
can be obtained

708

7: Present the Bob's
status information

China Mobile

Waiting for the other
party to answer...

Bob

In the conference

Plan for the
current year

709

4: Detect the operation 1 that is input by the
user and that indicates to obtain status
information corresponding to the mobile phone
B, for example, tapping a prompt text area

FIG. 28-3B

EP 4 277 225 A1

China Mobile

Bob's mobile phone B

1: Bob's status information (in a conference)

6: Bob's status information

5: Send, in response to an operation 1, a request for obtaining the Bob's status information

TO
FIG. 28-4B

FIG. 28-4A

2: Input a call instruction

702

703

701

08:08

China Mobile

Contacts

Settings

Bob

Andy

Mike

Phone   Contacts   Record a current status

3: Display a calling interface in response to the call instruction

Mobile phone A

TO
FIG. 28-4B

CONT.
FROM
FIG. 28-4A

CONT.
FROM
FIG. 28-4A

China Mobile

Waiting for the other
party to answer...

Bob

7: Present the Bob's status
information

708

China Mobile

Waiting for the other
party to answer...

Bob

In the conference

Plan for the
current year

709

4: Detect the operation 1 that is input
by the user and that indicates to
obtain status information
corresponding to mobile phone B, for
example, tapping a profile picture

FIG. 28-4B

EP 4 277 225 A1

China Mobile 08:08

Contacts      Settings

702

Bob 703

Andy

Mike

701

Phone   Contacts   Record a current status

Mobile phone A

3: Display a calling interface in response to the call instruction

TO
FIG. 28-5B

2: Input a call instruction

Status server

1: Bob's status information (in a conference)

5: Send, in response to an operation 1, a request for obtaining the Bob's status information

6: Bob's status information

TO
FIG. 28-5B

China Mobile

Bob's mobile phone B

FIG. 28-5A

China Mobile

Waiting for the other
party to answer...

Bob

7: Present the Bob's status
information

708

4: Detect the operation 1 that
is input by the user and that
indicates to obtain status
information corresponding to
the mobile phone B, for
example, tapping a profile
picture

Mobile phone A

China Mobile

Waiting for the other
party to answer...

Bob
In the conference

Plan for the
current year

709

710

Tap to input a comment

Mobile phone A

FIG. 28-5B

China Mobile

China Mobile

Waiting for the other
party to answer...

Bob

In the conference

You have a new comment
message
Tap to query details

Comment
message

Comment
message

Plan for the
current year

711

You are in a conference again.
Make sure to take a break
Editing completed

712

Message server

Bob's mobile phone B

Mobile phone A

FIG. 28-5C

EP 4 277 225 A1

China Mobile 08:08

Contacts Settings

702

Bob

703

Andy

Mike

701

Phone Contacts Record a current status

2: Input a call instruction

Status server

1: Bob's status information (in a conference)

China Mobile

Mobile phone A

3: Display a calling interface in response to the call instruction

TO FIG. 28-6B

5: Send, in response to an operation 1, a request for obtaining the Bob's status information

6: Bob's status information

TO FIG. 28-6B

Bob's mobile phone B

FIG. 28-6A

95

China Mobile

Waiting for the other
party to answer...

Bob

7: Present Bob's status
information

708

4: Detect the operation 1 that is
input by the user and that
indicates to obtain status
information corresponding to the
mobile phone B, for example,
tapping a profile picture

Mobile phone A

China Mobile

Waiting for the other
party to answer...

Bob
In the conference

Plan for the
current year

709

710

Tap to input a comment

Mobile phone A

FIG. 28-6B

China Mobile

New comment on the status information of being in the conference: You are in a conference again. Make sure to take a break

Comment message

Comment message

Message server

China Mobile

Waiting for the other party to answer...

Bob

In the conference

Plan for the current year

711

712

You are in a conference again. Make sure to take a break
Editing completed

Bob's mobile phone B

Mobile phone A

FIG. 28-6C

EP 4 277 225 A1

China Mobile                08:08  🔋

Contacts                    Settings

👤 Bob

👩 Andy

👤 Mike

— 801

📞        👤         🛍️
Phone   Contacts   Record a
                   current status

FIG. 29(1)  Bob's mobile phone

— 802

China Mobile                08:08  🔋

Settings

Visible scope of        Visible to
status information      contacts    >   — 804

— 803

FIG. 29(2) Bob's mobile phone

TO
FIG. 29(3)

China Mobile 08:08 🔋

Settings
_____

Visible scope of      Visible to
status information     contacts   >
_____

Visible scope of status information ⟍ 805

Visible to all      ◯
_____

Visible to contacts     ◯
_____

Visible only to me     ◯
_____

Visible to specified contacts   ◉
   ◯   Andy
   ◯   Sam
   ⊕   Add

FIG. 29(3)   Bob's mobile phone

EP 4 277 225 A1

EP 4 277 225 A1

China Mobile 🔋

---

Waiting for the other
party to answer...

In a conference

Plan for the
current year

704

Camera
switch

Cancel

More

---

China Mobile 08:08 🔋

Contacts Settings

Bob 🎥 📞

Andy

Mike 🎥 📞

📞 👤 🛍️
Phone Contacts Record a
current status

Andy's mobile phone

1a: Input a
call
instruction
to call Bob

2a: Send a
request to a
server for
obtaining Bob's
status
information

5a: Display a calling
interface, where the
calling interface includes
Bob's status information

3a: Query a visible
scope of Bob's
status information,
where Andy is a
contact who can
see the status
information

4a: Bob's status information

FIG. 30(1)

**China Mobile**

Waiting for the other party to answer...

Camera switch    Cancel    More

705

**China Mobile**          08:08

Contacts              Settings

Bob

Andy

Mike

Phone    Contacts    Record a current status

Mobile phone C

1b: Input a call instruction to call Bob

2b: Send a request to a server for obtaining Bob's status information

3b: Query a visible scope of Bob's status information, where a user of the mobile phone C is not a contact who can see the status information

4b: Preset information

5b: Display a calling interface

FIG. 30(2)

EP 4 277 225 A1

**China Mobile** 08:08

Photos Camera Video call

Weather Books Stocks

---

**China Mobile** 08:08

Contacts Settings

Bob

Andy

Mike

Phone Contacts Record a current status

Send a request to a server for obtaining Bob's status information

Request for Bob's status information

Display a calling interface, where the calling interface includes Bob's status information

TO
FIG. 31B

FIG. 31A

China Mobile

01:12

Bob

Connect to a call
and display a call
interface

706

Camera   Cancel   More

China Mobile

Waiting for the other
party to answer...

Happy

FIG. 31B

EP 4 277 225 A1

1: Collect Bob's status information

Vehicle-mounted camera

2: Send the Bob's status information

China Mobile          08:08 ▭

Contacts                    Settings

Bob          🎥    📞

Andy

Mike         🎥    📞

China Mobile          08:08 ▭

Photos    Camera    Video call

Weather    Books    Stocks

4: Send a request to a server for obtaining the Bob's status information

📞          👤          🛍
Phone    Contacts    Record a current status

3: Bob's status information

5: Bob's status information

~
TO
FIG. 32B

~
TO
FIG. 32B

FIG. 32A

104

EP 4 277 225 A1

CONT.
FROM
FIG. 32A

CONT.
FROM
FIG. 32A

6: Display a calling interface, where the calling interface includes the Bob's status information

China Mobile

Waiting for the other party to answer...

Driving

707

FIG. 32B

3: Present the status
information
corresponding to the
second terminal

Server

Report status
information
corresponding to the
second terminal

2: When a user operation
indication indicating to obtain
status information corresponding
to the second terminal is detected
on the calling interface, obtain the
status information corresponding
to the second terminal

First terminal

Second terminal

1: When a call occurs between the first
terminal and the second terminal,
present prompt information on a calling
interface of the call

FIG. 33

```
┌─────────────────────────────────┐
│     Presentation unit 1801      │
└─────────────────────────────────┘
                 │
┌─────────────────────────────────┐
│      Obtaining unit 1802        │
└─────────────────────────────────┘
                 │
┌─────────────────────────────────┐
│    Communication unit 1803      │
└─────────────────────────────────┘
```

FIG. 34

## INTERNATIONAL SEARCH REPORT

| International application No. |
|---|
| **PCT/CN2022/074686** |

**A.    CLASSIFICATION OF SUBJECT MATTER**

H04L 45/00(2022.01)i;  H04W 40/02(2009.01)i

According to International Patent Classification (IPC) or to both national classification and IPC

**B.    FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNTXT; WPABS; ENTXT; VEN; CNKI: 链路, 路径, 权重, 加权, 路由, 中继, 转发, 多方, 服务器, 对等网络, 时延, link, path, route, weight, relay, forward, multi-part, server, P2P, QoS, NAT, delay, H04W40/00, H04L45/12, H04W40/02, H04L45/00, H04L45/24, H04L45/16

**C.    DOCUMENTS CONSIDERED TO BE RELEVANT**

| Category* | Citation of document, with indication, where appropriate, of the relevant passages | Relevant to claim No. |
|---|---|---|
| X | CN 109995653 A (SHENZHEN THUNDER NETWORK TECHNOLOGY CO., LTD.) 09 July 2019 (2019-07-09)<br>    description paragraphs 58-205 | 1-24 |
| A | CN 110612708 A (CISCO TECHNOLOGY, INC.) 24 December 2019 (2019-12-24)<br>    entire document | 1-24 |
| A | CN 109640028 A (VISIONVERA INFORMATION TECHNOLOGY CO., LTD.) 16 April 2019 (2019-04-16)<br>    entire document | 1-24 |
| A | CN 105024844 A (CHINA TELECOM GLOBAL LIMITED) 04 November 2015 (2015-11-04)<br>    entire document | 1-24 |
| A | US 2007014241 A1 (BANERJEE DWIP N et al.) 18 January 2007 (2007-01-18)<br>    entire document | 1-24 |
| A | WO 2011124121 A1 (ZTE CORP. et al.) 13 October 2011 (2011-10-13)<br>    entire document | 1-24 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 March 2022** | **20 April 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/074686**

| Patent document cited in search report | | | Publication date (day/month/year) | Patent family member(s) | | | Publication date (day/month/year) |
|---|---|---|---|---|---|---|---|
| CN | 109995653 | A | 09 July 2019 | None | | | |
| CN | 110612708 | A | 24 December 2019 | US | 2018331946 | A1 | 15 November 2018 |
| | | | | CA | 3063088 | A1 | 15 November 2018 |
| | | | | WO | 2018208552 | A1 | 15 November 2018 |
| | | | | EP | 3622679 | A1 | 18 March 2020 |
| CN | 109640028 | A | 16 April 2019 | None | | | |
| CN | 105024844 | A | 04 November 2015 | None | | | |
| US | 2007014241 | A1 | 18 January 2007 | None | | | |
| WO | 2011124121 | A1 | 13 October 2011 | CN | 102215161 | A | 12 October 2011 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110185620
- CN 202110185618X
- CN 202110448981